(19) Europäisches Patentamt
European Patent Office
Office européen des brevets

(11) EP 1 329 486 B1

(12) **EUROPEAN PATENT SPECIFICATION**

(45) Date of publication and mention of the grant of the patent:
**15.11.2006 Bulletin 2006/46**

(51) Int Cl.:
***C09D 11/00*** *(2006.01)* ***B41M 5/00*** *(2006.01)*
*B41J 2/01* *(2006.01)*

(21) Application number: **02028155.6**

(22) Date of filing: **19.12.2002**

(54) **Ink composition and ink-jet recording method**

Tintenzusammensetzung und Tintenstrahl-Aufzeichnungsverfahren

Composition d'encre et procédé d'enregistrement par jet d'encre

(84) Designated Contracting States:
**DE FR GB**

(30) Priority: **18.01.2002 JP 2002010361**

(43) Date of publication of application:
**23.07.2003 Bulletin 2003/30**

(73) Proprietor: **FUJI PHOTO FILM CO., LTD.**
**Minami-Ashigara-shi, Kanagawa 250-0123 (JP)**

(72) Inventors:
- **Takahashi, Osamu**
  **Minami-Ashigara-shi,**
  **Kanagawa (JP)**
- **Deguchi, Yasuaki**
  **Minami-Ashigara-shi,**
  **Kanagawa (JP)**
- **Ishii, Yoshio**
  **Minami-Ashigara-shi,**
  **Kanagawa (JP)**
- **Yabuki, Yoshiharu**
  **Minami-Ashigara-shi,**
  **Kanagawa (JP)**

(74) Representative: **HOFFMANN EITLE**
**Patent- und Rechtsanwälte**
**Arabellastrasse 4**
**81925 München (DE)**

(56) References cited:
**US-A1- 2001 023 267** **US-A1- 2001 045 176**
**US-A1- 2002 067 402** **US-A1- 2002 143 079**

- **DATABASE WPI Section Ch, Week 198317 Derwent Publications Ltd., London, GB; Class A97, AN 1983-40323K XP002269736 & JP 58 045958 A (KONISHIROKU PHOTO IND CO LTD), 17 March 1983 (1983-03-17)**
- **DATABASE WPI Section Ch, Week 198809 Derwent Publications Ltd., London, GB; Class A14, AN 1988-058941 XP002269737 & JP 63 012675 A (TORAY IND INC), 20 January 1988 (1988-01-20)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 329 486 B1

## Description

BACKGROUND OF THE INVENTION

Field of the Invention

The present invention relates to an ink composition containing a hydrophobic dye and an ink-jet recording method using the ink composition. More specifically, the invention relates to an ink-jet recording ink composition capable of forming an image with superior abrasion resistance and solidily, and an ink-jet recording method using the ink composition and an image-receiving material.

Description of the Related Art

Rapid progress has been made in the spread of image-forming methods, particularly with full-color images using recording methods such as an ink-jet method, an electrostatic transfer method and a sublimation type thermal transfer method. These recording methods aim to achieve the quality of silver halide photography, and much effort has been put into improving certain features, particularly color reproducibility, image density, gloss, water resistance, weather resistance and the like so as to achieve quality as close as that of silver halide color photography.

The ink-jet recording methods have a function to record images and characters by jetting liquid ink particle droplets according to various operation principles and causing the liquid droplets to adhere to a recording medium such as paper.

The ink-jet recording method characteristically offers high speed, low noise, diverse coloration, and diversified recording patterns, with no need of development or fixation. Hence, the ink-jet recording method has spread rapidly as a recording method for various image recording apparatuses for various uses, starting with information technology devices.

Furthermore, images formed by multi-color ink-jet recording methods can produce record as good as multi-color printed matter produced by engraving methods and by color photographic methods. When a small number of copies are to be made, they can be produced thereby at a lower cost than that of general multi-color printing. Thus, the multi-color ink-jet recording method is now widely applied even to the full-color image recording field.

For the ink-jet recording method, improvements have been made in recording apparatuses and recording methods so as to satisfy the demand to improve recording characteristics so that recording at higher speed, with higher precision, and with full color is realized. Additionally, high-grade characteristics are now demanded for the ink and recording media. In order to attain a performance exceeding that of silver halide color photography, various diverse improvements have been made.

Water-soluble dyes have mainly been used as the color materials for the ink for the ink-jet recording method, because of the aqueous liquid media thereof. Some of the performance requirements can be satisfied when water-soluble dyes are used. However, these water-soluble dyes when used are essentially poor in terms of light and ozone resistance. Hence, the resulting printed recording materials are problematic in terms of color fading and discoloration when these are stored for a long time.

Because the dyes are water soluble, obtaining good water resistance of recorded images is frequently problematic. In other words, when recorded images come in contact with water, they bleed. Furthermore, such images often have insufficient gloss. These problems make the ink-jet recording method seriously inferior to silver halide color photography.

In order to overcome these problems, JP-A No. 58-136482 and USP No. 5,374,475 propose recording media having a porous layer containing a thermoplastic polymer material on a substrate, and after printing thereon, subsequently solubilizing and densifying the porous layer with heat and pressure.

Furthermore, JP-B No. 2-31673, and JP-A Nos. 7-237348 and 8-2090 disclose the arrangement of an additional layer containing a thermoplastic latex on an inorganic pigment layer, which has a higher ink-absorption level for imaging, and subsequently making the thermoplastic latex layer as an outermost surface layer into a film.

However, when the latex layer is made into a film under heating by the related-art method, the surface of the resulting film obtained by the thermal treatment of the latex layer cannot obtain sufficient smoothness while any ink component remains in the latex layer. Consequently, the surface cannot obtain sufficient gloss. Additionally, cracks emerge in the film because of residual solvent, causing decreased water resistance and weather resistance in the cracked portions.

In recent years, alternatively, pigment inks have come into use so as to overcome problems inhibiting light resistance, ozone resistance and water resistance. These pigment inks are now applied to ink-jet recording methods.

Although pigment inks offer slightly improved light resistance, water resistance and ozone resistance, the improvements are not sufficient. Pigment particles have low transparency and therefore cause poor color reproducibility.

Additionally, pigment particles are hard and exposed to the surface of the medium, so they possess poor abrasion resistance. In light of these disadvantages, pigment inks have not yet reached the levels of quality achievable with silver halide color photography.

Also, because it is difficult to adjust the specific gravity of the particles of pigment inks, the particles may precipitate during ink storage. Thus, such pigment inks are essentially problematic in terms of the storability of such inks per se.

Thus, there is a demand to develop an ink with the advantages of both the water-soluble ink and the pigment ink while improving upon their disadvantages, and developing an improved imaging method as well.

## SUMMARY OF THE INVENTION

It is an object of the present invention to provide an ink composition with superior color reproducibility, transparency and gloss on printing, superior water resistance and image storability, and with superior image solidily including image gloss, water resistance, light resistance, heat resistance, ozone resistance, and storability when the ink composition is combined with specific image-receiving materials and with greatly improved abrasion resistance, as well as an ink-jet recording method, using the ink composition.

The first aspect of the present invention provides an ink composition containing a colored particle produced by mixing together a solution containing at least one hydrophobic dye, at least one hydrophobic polymer, at least one organic solvent with a high boiling point and a water solubility of 4 g or below, and at least one auxiliary solvent with a boiling point of 200˚C or below and a water solubility of 25 g or below, and an aqueous medium for emulsification and dispersion, and subsequently removing the auxiliary solvent, characterized in that the mean particle size of the colored particle is 0.01 to 0.5 $\mu$m with a coefficient of variation of the particle size within 45 %, and the specific gravity thereof is 0.9 to 1.2.

The second aspect of the present invention provides an ink-jet recording method comprising: jetting an ink composition containing colored particles which contain at least one hydrophobic dye and at least one hydrophobic polymer on as image-receiving material to record images; and subjecting the colored particles to a heating process and/or pressurizing process to melt and fix the colored particles.

## DETAILED DESCRIPTION OF THE PREFERRED EMBODIMENTS

The ink composition and the ink-jet recording method of the present invention are now described below.

### *Ink composition*

The ink composition of the present invention contains colored particles, which are produced by mixing together a solution containing at least one hydrophobic dye, at least one hydrophobic polymer, at least one organic solvent with a high boiling point and a water solubility of 4 g or below, and at least one auxiliary solvent with a boiling point of 200 ˚C or below and a water solubility of 25 g or below, and an aqueous medium for emulsification and dispersion, and subsequently removing the auxiliary solvent, where the mean particle size of the colored particles is 0.01 to 0.5 $\mu$m with a coefficient of variation of the particle size within 45 %, and the specific gravity thereof is 0.9 to 1.2.

The hydrophobic dye preferably contains at least one compound selected from the group consisting of compounds represented by the general formula I, compounds represented by the general formula II, compounds represented by the general formula Y-1, compounds represented by the general formula M-I, and compounds represented by the general formula C-I.

The colored particles are transparent particles at least containing at least one hydrophobic dye and at least one hydrophobic polymer. The hydrophobic dye and the hydrophobic polymer may be blended together by any method, as long as these are compatible with each other by the method.

In the so-called loadable latex method using an organic solvent miscible with water such as acetone to immerse the hydrophobic dye in an aqueous polymer latex solution, it is difficult to uniformly immerse the dye therein.

By the preparative method in accordance with the invention including mixing together a solution containing a hydrophobic dye, a hydrophobic polymer, a water-insoluble organic solvent with a high boiling point and an auxiliary solvent, and an aqueous medium for emulsification and dispersion, and subsequently removing the auxiliary solvent, the colored particles in the invention can be obtained, which are stable.

By preparing in advance solutions in which the types and amounts of the constitutive components in the solution vary and producing the resulting colored particles by evaporation of the auxiliary solvent and the like to examine samples of the resulting colored particles, the compatibility, specific gravity and hardness of the objective colored particles can be estimated.

The term "aqueous solvent" in the invention means water or a mixture of water with a small amount of a water-miscible organic solvent, to which additives such as a surfactant, a stabilizer and a preservative are added, if necessary.

*<Hydrophobic dye>*

Herein, the hydrophobic dye contained in the colored particles is now described.

The hydrophobic dye as one of the constitutive components of the colored particles in the invention means a dye substantially insoluble in water. More specifically, the hydrophobic dye is a dye with a water solubility (mass of the dye soluble in 100 g of water) of 1 g or less, preferably 0.5 g or less and more preferably 0.1 g or less at 25˚C.

Thus, the hydrophobic dye means a water-insoluble pigment, or oil-soluble dye. Among them, oil-soluble dyes are preferable.

The hydrophobic dye has a melting point of preferably 200˚C or less, more preferably 150˚C or less and most preferably 100˚C or less. A hydrophobic dye with a low melting point when used can suppress the crystallization and deposition of the dye in the ink composition, to enhance the storage stability of the ink composition.

In the ink composition of the invention, hydrophobic dye may be used alone or in combination. The ink composition may contain, if necessary, a coloring material such as a water-soluble dye, a disperse dye and other pigment to such an extent that it does not adversely affect the effect of the invention.

Examples of the hydrophobic dye which can be used in the ink composition of the invention include anthraquinone dyes, naphthoquinone dyes, styryl dyes, indoaniline dyes, azo dyes, nitro dyes, coumarin dyes, methine dyes, porphyrin dyes, azaporphyrin dyes and phthalocyanine dyes. In order to achieve ink-jet inks for full-color printing, dyes of at least four colors including the three primary colors of yellow (Y), magenta (M) and cyan (C), and black are generally needed.

As for yellow dyes, any yellow dye can be used as the hydrophobic dye. Examples of the yellow dye include aryl or heterylazo dyes with a phenol, a naphthol, an aniline, a pyrazolone, a pyridone and an open-chain type active methylene compound or a derivative thereof as a coupling component; azomethine dyes with an open-chain type active methylene compound or a derivative thereof as a coupling component; methine dyes such as benzylidene dyes and monomethineoxonol dyes; quinone dyes such as naphthoquinone dyes and anthraquinone dyes; quinophthalone dyes; nitro dyes; nitroso dyes; acridine dyes; and acridinone dyes.

As for magenta dyes, any magenta dye can be used as the hydrophobic dye. Examples of the magenta dye include aryl or heterylazo dyes with a phenol, a naphthol, an aniline or a derivative thereof as a coupling component; azomethine dyes with a pyrazolone, a pyrazolotriazole or a derivative thereof as a coupling component; methine dyes such as arylidene dyes, styryl dyes, merocyanine dyes, and oxonol dyes; carbonium dyes such as diphenylmethane dyes, triphenylmethane dyes, and xanthene dyes; quinone dyes such as naphthoquinone, anthraquinone and anthrapyridone; and condensed polycyclic dyes such as dioxazine dyes.

Regarding cyan dyes, any cyan dye can be used as the hydrophobic dye. Examples of the cyan dye include indoaniline dyes, indophenol dyes and azomethine dyes with a pyrrolotriazole or a derivative thereof as a coupling component; polymethine dyes such as cyanine dyes, oxonol dyes, and merocyanine dyes; carbonium dyes such as diphenylmethane dyes, triphenylmethane dyes, and xanthene dyes; phthalocyanine dyes; anthraquinone dyes; aryl or heterylazo dyes with a phenol, a naphthol, an aniline or a derivative thereof as a coupling component, indigo dyes and thioindigo dyes.

The above-described dyes may be dyes which form yellow, magenta or cyan color, when the chromophores are partially dissociated. In this case, the counter cation may be inorganic cations such as alkali metals and ammonium, or organic cations such as pyridinium and quaternary ammonium salts. Further, the counter cation may be a polymer cation containing such a cation in its partial structure.

Among the hydrophobic dyes, preferable examples include, but are not limited to, C.I. Solvent Black 3, 7, 27, 29 and 34; C.I. Solvent Yellow 14, 16, 19, 29, 30, 56, 82, 93 and 162; C.I. Solvent Red 1, 3, 8, 18, 24, 27, 43, 49, 51, 72, 73, 109, 122, 132 and 218; C.I. Solvent Violet 3; C.I. Solvent Blue 2, 11, 25, 35, 38, 67 and 70; C.I. Solvent Green 3 and 7; and C.I. Solvent Orange 2.

Among them, more preferable examples are Nubian Black PC-0850, Oil Black HBB, Oil Yellow 129, Oil Yellow 105, Oil Pink 312, Oil Red 5B, Oil Scarlet 308, Vali Fast Blue 2606, Oil Blue BOS (manufactured by Orient Chemicals Co., Ltd.), Aizen Spilon Blue GNH (manufactured by Hodogaya Chemicals Co., Ltd.), Neopen Yellow 075, Neopen Mazenta SE1378, Neopen Blue 808, Neopen Blue FF4012, and Neopen Cyan FF4238 (manufactured by BASF Co., Ltd.).

In the invention, a disperse dye can be used to such an extent that the disperse dye can be dissolved in a water-immiscible organic solvent. Preferable examples thereof include, but are not limited to, C.I. Disperse Yellow 5, 42, 54, 64, 79, 82, 83, 93, 99, 100, 119, 122, 124, 126, 160, 184: 1, 186, 198, 199, 201, 204, 224 and 237; C.I. Disperse Orange 13, 29, 31: 1, 33, 49, 54, 55, 66, 73, 118, 119 and 163; C.I. Disperse Red 54, 60, 72, 73, 86, 88, 91, 92, 93, 111, 126, 127, 134, 135, 143, 145, 152, 153, 154, 159, 164, 167: 1, 177, 181, 204, 206, 207, 221, 239, 240, 258, 277, 278, 283, 311, 323, 343, 348, 356 and 362; C.I. Disperse Violet 33; C.I. Disperse Blue 56, 60, 73, 87, 113, 128, 143, 148, 154, 158, 165, 165: 1, 165: 2, 176, 183, 185, 197, 198, 201, 214, 224, 225, 257, 266, 267, 287, 354, 358, 365 and

368; and C.I. Disperse Green 6: 1 and 9.

Among the hydrophobic dyes, preferable examples are compounds represented by the following general formula I (azo dyes), and compounds represented by the following general formula II (azomethine dyes). The azomethine dye represented by the following general formula II is known as a dye generated through oxidation from couplers and a developing agent of photographic materials.

The compounds represented by the following general formulas I and II are now described below. A compound in which at least one group in the general formula I and the general formula II is any of the preferable examples described below is preferable. A compound in which as many groups as possible are any of the preferable examples is more preferable. A compound in which all the groups are any of the preferable examples is the most preferable.

General formula I

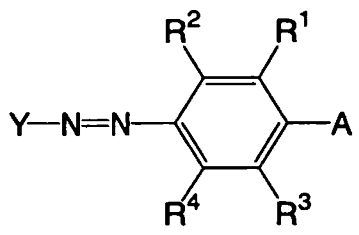

General formula II

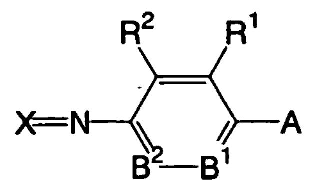

In the general formula I and the general formula II, $R^1$, $R^2$, $R^3$ and $R^4$ independently represent a hydrogen atom, a halogen atom, an aliphatic group, an aromatic group, a heterocyclic group, a cyano group, a hydroxyl group, a nitro group, an amino group, an alkylamino group, an alkoxyl group, an aryloxy group, an amide group, an arylamino group, an ureido group, a sulfamoylamino group, an alkylthio group, an arylthio group, an alkoxycarbonylamino group, a sulfoneamide group, a carbamoyl group, a sulfamoyl group, a sulfonyl group, an alkoxycarbonyl group, a heterocyclic oxy group, an azo group, an acyloxy group, a carbamoyloxy group, a silyloxy group, an aryloxycarbonyl group, an aryloxycarbonylamino group, an imide group, a heterocyclic thio group, a sulfinyl group, a phosphoryl group, an acyl group, a carboxyl group or a sulfo group.

Among them, $R^2$ is preferably a hydrogen atom, a halogen atom, an aliphatic group, an alkoxyl group, an aryloxy group, an amide group, an ureido group, a sulfamoylamino group, an alkoxycarbonylamino group or a sulfoneamide group.

In the general formula I and the general formula II, A represents $-NR^5R^6$ or a hydroxyl group. A is preferably $-NR^5R^6$.

The $R^5$ and $R^6$ independently represent a hydrogen atom, an aliphatic group, an aromatic group and a heterocyclic group. Among them, $R^5$ and $R^6$ independently represent more preferably a hydrogen atom, an alkyl group and a substituted alkyl group, an aryl group and a substituted aryl group, and most preferably a hydrogen atom, an alkyl group with one to 18 carbon atoms, and a substituted alkyl group with one to 18 carbon atoms. $R^5$ and $R^6$ may bond to each other to form a ring.

In the general formula II, $B^1$ represents $=C(R^3)-$ or $=N-$. $B^2$ represents $-C(R^4)=$ or $-N=$. Preferably, $B^1$ and $B^2$ are not simultaneously $-N=$. More preferably, $B^1$ is $=C(R^3)-$, while $B^2$ is $-C(R^4)=$.

In the general formula I and the general formula II, $R^1$ and $R^5$, $R^3$ and $R^6$ and/or $R^1$ and $R^2$ may bond to each other to form an aromatic ring or a heterocyclic ring.

In the present specification, the aliphatic group means an alkyl group, a substituted alkyl group, an alkenyl group, a substituted alkenyl group, an alkynyl group, a substituted alkynyl group, an aralkyl group and a substituted aralkyl group.

The aliphatic group may be branched or cyclic. The aliphatic group has preferably one to 20 carbon atoms, and more preferably one to 18 carbon atoms.

The aryl moieties in the aralkyl group and substituted aralkyl group are preferably phenyl group or naphthyl group, and more preferably phenyl group.

Examples of the substituents in the alkyl moieties in the substituted alkyl group, the substituted alkenyl group, the substituted alkynyl group and the substituted aralkyl group include those examples listed for the substituents of $R^1$, $R^2$, $R^3$ and $R^4$.

Examples of the substituent in the aryl moiety in the substituted aralkyl group include those examples listed for the substituent of the substituted aryl group.

In the present specification, the aromatic group means an aryl group and substituted aryl group. The aryl group is preferably phenyl group or naphthyl group, and more preferably phenyl group.

The aryl moiety in the substituted aryl group is the same as in the case of the aryl group.

Examples of the substituent in the substituted aryl group include those examples listed for the substituents of $R^1$, $R^2$, $R^3$ and $R^4$.

In the general formula I, Y represents an unsaturated heterocyclic group. Y is preferably a 5-membered or 6-membered unsaturated heterocyclic group. An aliphatic ring, aromatic ring or other heterocyclic ring may be condensed to the heterocyclic ring. Examples of the hetero atom in the heterocyclic ring include N, O and S.

Examples of the unsaturated heterocyclic ring preferably include a pyrazole ring, an imidazole ring, a thiazole ring, an isothiazole ring, a thiadiazole ring, a thiophene ring, a benzothiazole ring, a benzooxazole ring, a benzisothiazole ring, a pyrimidine ring, a pyridine ring and a quinoline ring. Further, the unsaturated heterocyclic group may contain the same substituent as those listed for $R^1$ to $R^4$.

In the general formula II, X represents the residue of a coupler for color photography. Examples of the coupler preferably includes the following couplers.

Examples of the yellow color-forming coupler include the couplers disclosed in USP Nos. 3,933,501, 4,022,620, 4,326,024, 4, 401, 752, and 4, 248, 961, JP-B No. 58-10739, GBP Nos. 1, 425, 020 and 1, 476, 760, USPNos. 3, 973, 968, 4, 314, 023, and 4,511,649, EP Nos. 249,473A and 502,424A (compounds represented by the formulas I and II); the couplers represented by the formulas 1 and 2 in EP No. 513, 496A (Y-28 on page 18 in particular), the coupler represented by the formula 1 in EP No. 568, 037A, claim 1, the coupler represented by the general formula I in USP No. 5,066, 567, column 1, lines 45 to 55, the coupler represented by the general formula I in JP-A No. 4-274425, paragraph 0008 of, the coupler described in EP No. 498, 381A1, claim 1, page 40 (D-35 on page 18, in particular), the coupler represented by the formula Y in EP No. 447, 969A1, page 4 (Y-1 on page 17 and Y-54 on page 41, in particular) and the coupler represented by the formulas II to IV in USP No. 4, 476, 219, column 7, lines 36 to 58 (11-17 and 19 in column 17 and II-24 in column 19, in particular).

Examples of the magenta color-forming coupler include those disclosed in USP Nos. 4, 310, 619, and 4, 351, 897, EP No. 73, 636, USP Nos. 3,061,432, and 3,725,067, Research Disclosure Nos. 24220 (June 1984) and 24230 (June 1984), JP-A Nos. 60-33552, 60-43659, 61-72238, 60-35730, 55-118034, and 60-185951, USP Nos. 4,500, 630, 4,540,654 and 4,556,630, WO 88-04795, JP-A No.3-39737 (L-57 on page 11, right bottom; L-68 on page 12, right bottom, L-77 on page 13, right bottom), EP No. 456,257 [[A-4]-63 (on page 134), [A-4]-73, -75 (on page 139)], EP No. 486, 965 [M-4, M-6 (on page 26), M-7 (on page 27)], EP No. 571, 959A [M-45 (on page 19)], JP-A No. 5-204106 [(M-1) (on page 6)], JP-A No. 4-362631 [M-22 in paragraph 0237].

Examples of the cyan color-forming coupler include those disclosed in USP Nos. 4,052,212, 4,146,396, 4,228,233 and 4,296,200, EP No. 73,636, and JP-A No. 4-204843(CX-1, 3, 4, 5, 11, 12, 14, and 15 on pages 14 to 16); JP-A No. 4-43345 (C-7 and -10 on page 35, 34 & 35 on page 37, (I-1) & (I-17) on pages 42 to 43); and JP-A No. 6-67385, claim 1 (the couplers represented by the general formula Ia or Ib).

Additionally, the couplers described in JP-A Nos. 62-215272 (page 91) and JP-A No. 2-33144 (pages 3 and 30), and EP No. 355,660 A (pages 4, 5, 45 and 47) are useful.

Among the dyes represented by the general formula I, the dye represented by the following general formula III is particularly preferable as the magenta dye.

General formula III

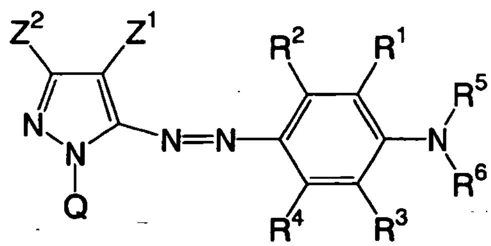

In the general formula III, $Z^1$ represents an electron attractive group having the Hammett's substituent constant $\sigma p$ of 0.20 or more. $Z^1$ is preferably an electron attractive group with $\sigma p$ of 0.30 to 1.0. Preferable examples thereof include the electron withdrawing substituents described later. Among them, an acyl group with 2 to 12 carbon atoms, an alkyloxycarbonyl group with 2 to 12 carbon atoms, a nitro group, a cyano group, an alkylsulfonyl group with one to 12 carbon atoms, an arylsulfonyl group with 6 to 18 carbon atoms, a carbamoyl group with one to 12 carbon atoms, and a halogenated alkyl group with one to 12 carbon atoms are preferable. More preferably, $Z_1$ is a cyano group, an alkylsulfonyl group with one to 12 carbon atoms, or an arylsulfonyl group with 6 to 18 carbon atoms. A cyano group is

particularly preferable.

$R^1$ through $R^6$ have the same meanings as in the general formula I.

$Z^2$ represents a hydrogen atom, an aliphatic group or an aromatic group.

Q represents a hydrogen atom, an aliphatic group, an aromatic group or a heterocyclic group. Among them, Q is preferably a group composed of non-metal atoms required for the formation of 5-membered to 8-membered ring. Q is more preferably an aromatic group or,a heterocyclic group. The 5-membered to 8-membered rings may be substituted or may be a saturated ring or may contain an unsaturated bond. The non-metal atom is preferably a nitrogen atom, an oxygen atom, a sulfur atom or a carbon atom.

Examples of the 5-membered to 8-membered rings preferably include a benzene ring, a cyclopentane ring, a cyclohexane ring, a cycloheptane ring, a cyclooctane ring, a cyclohexene ring, a pyridine ring, a pyrimidine ring, a pyrazine ring, a pyridazine ring, a triazine ring, an imidazole ring, a benzimidazole ring, an oxazole ring, a benzooxazole ring, an oxane ring, a sulfolane ring and a thian ring. In case where these rings contain a substituent, examles of the substituent are preferably those exemplified for $R^1$ through $R^4$.

Preferable structures of the dyes represented by the general formula III are described in Japanese Patent Application No. 2000-220649.

Among the dyes represented by the general formula II, dyes represented by the following general formula IV are particularly preferable as the magenta dye.

General formula IV

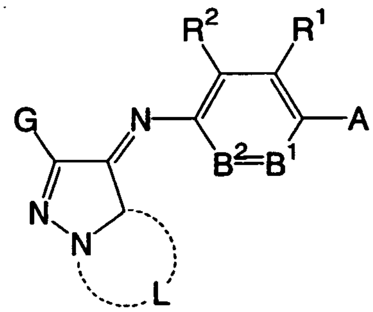

In the general formula IV, G represents a hydrogen atom, an aliphatic group, an aromatic group, a heterocyclic group, a cyano group, an alkoxyl group, an aryloxy group, an alkylthio group, an arylthio group, an ester group, an amino group, a carbamoyl group, a sulfonyl group, a sulfamoyl group, an ureido group, an urethane group, an acyl group, an amide group or a sulfoneamide group.

$R^1$, $R^2$, A, $B^1$ and $B^2$ have the same meanings as in the general formula II. Preferable examples thereof are the same as in the general formula II.

L represents atoms up forming a 5-membered or 6-membered nitrogen-containing heterocyclic ring. At least one of the atoms forming the nitrogen-containing heterocyclic group may be substituted with at least one of an aliphatic group, an aromatic group, a heterocyclic group, a cyano group, an alkoxyl group, an aryl group, an oxy group, an alkylthio group, an arylthio group, an ester group, an amino group, a carbamoyl group, a sulfonyl group, a sulfamoyl group, an ureido group, an urethane group, an acyl group, an amide group or a sulfoneamide group or may form a condensed ring together with other ring.

In the dyes represented by the general formula IV, A is preferably $-NR^5R^6$; and L preferably forms a 5-membered nitrogen-containing heterocyclic group. The 5-membered nitrogen-containing heterocyclic group is preferably an imidazole ring, a triazole ring, or a tetrazole ring.

Among the dyes represented by the general formulas I and II, compounds exemplified as the magenta dye are shown below (M-1 to -70). However, the invention is not at all limited to them.

M－1

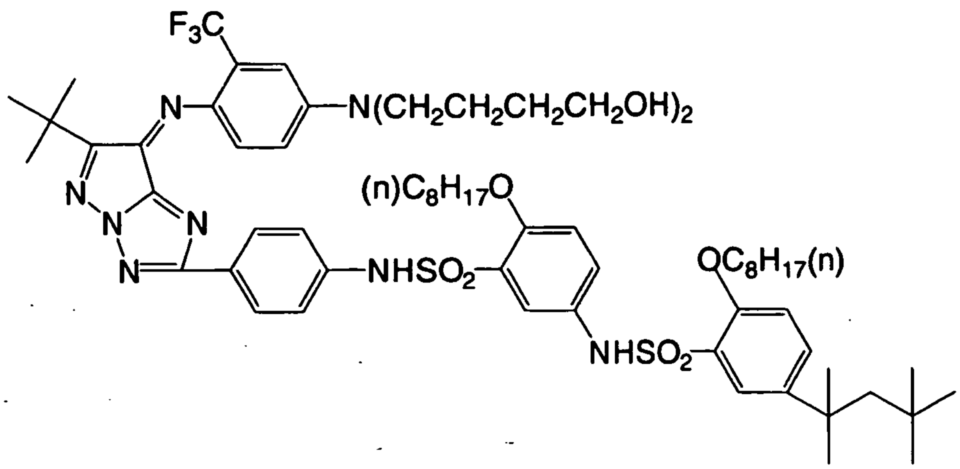

M－2

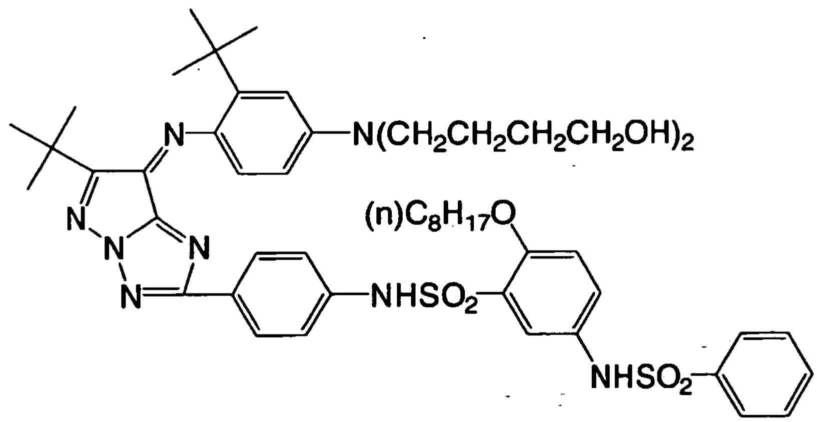

M－3

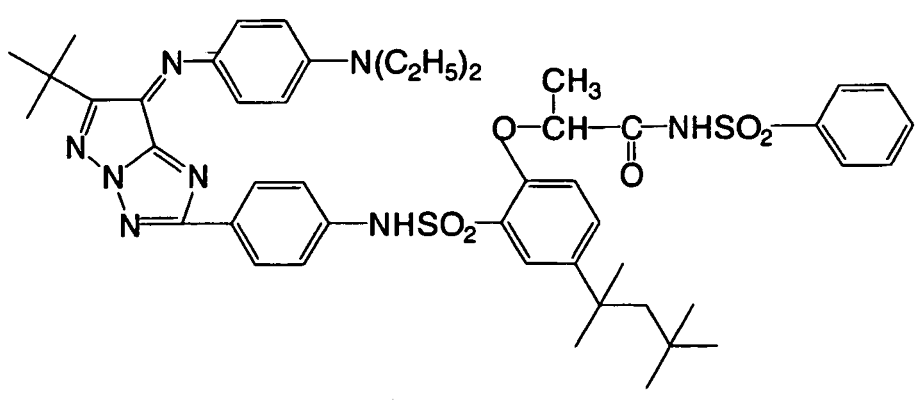

M－4

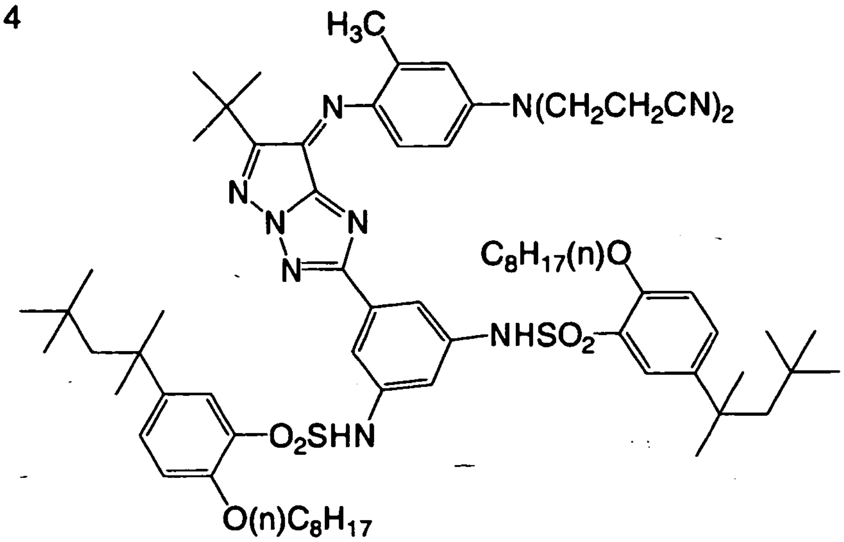

M－5

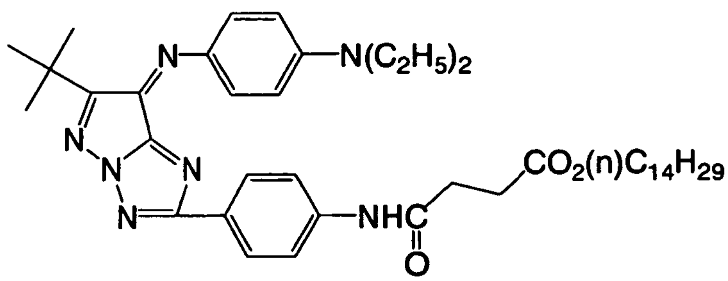

M－6

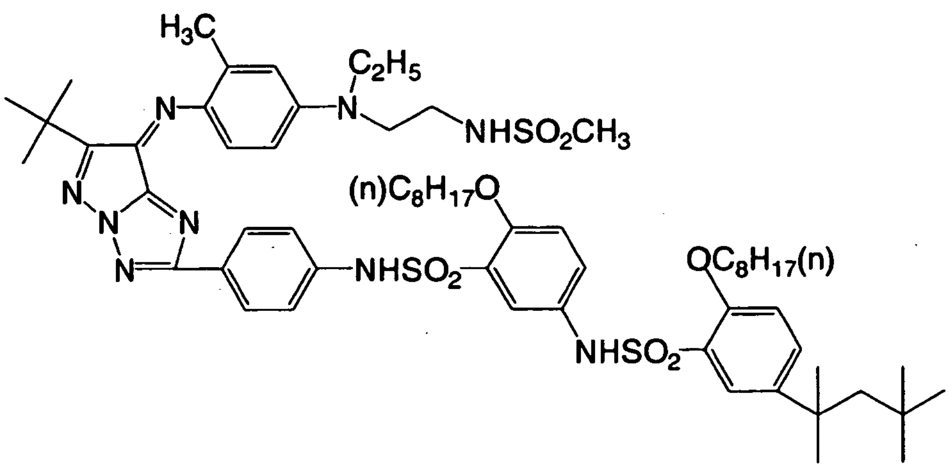

M − 7

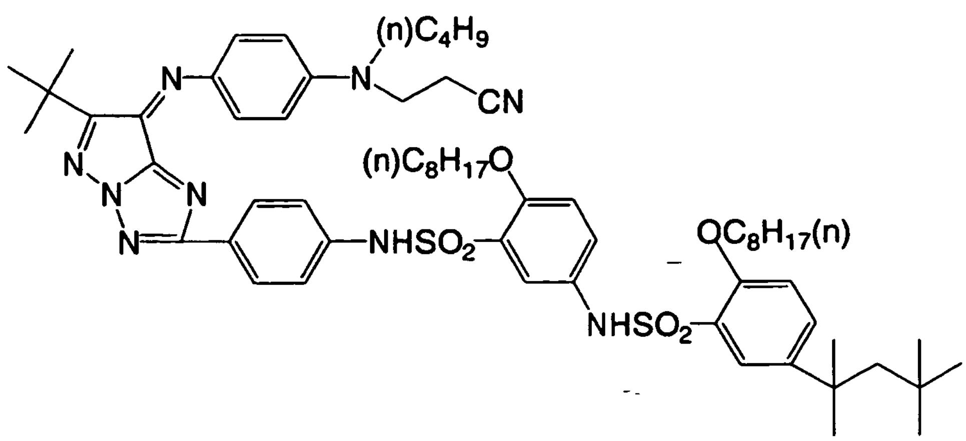

M − 8

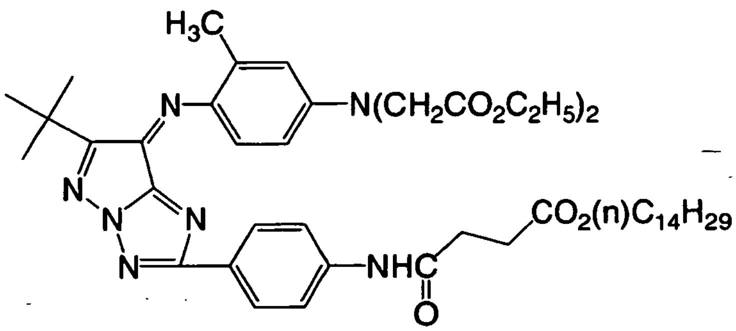

M − 9

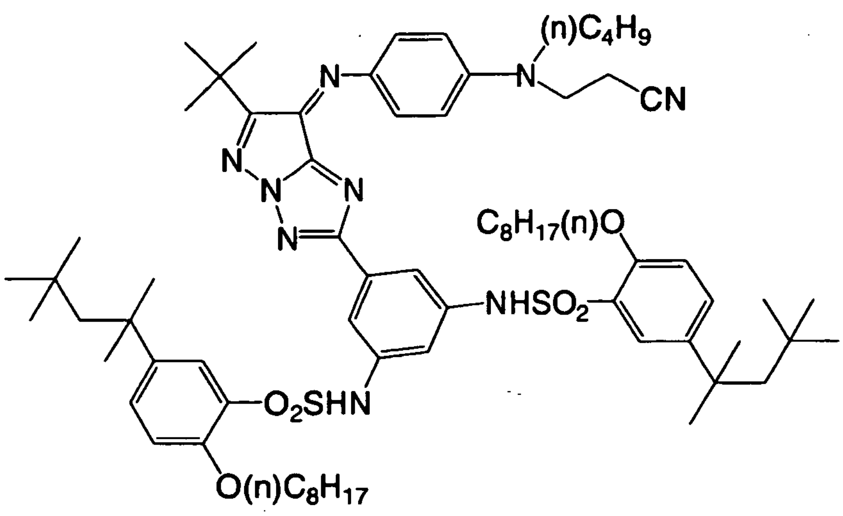

M－１０

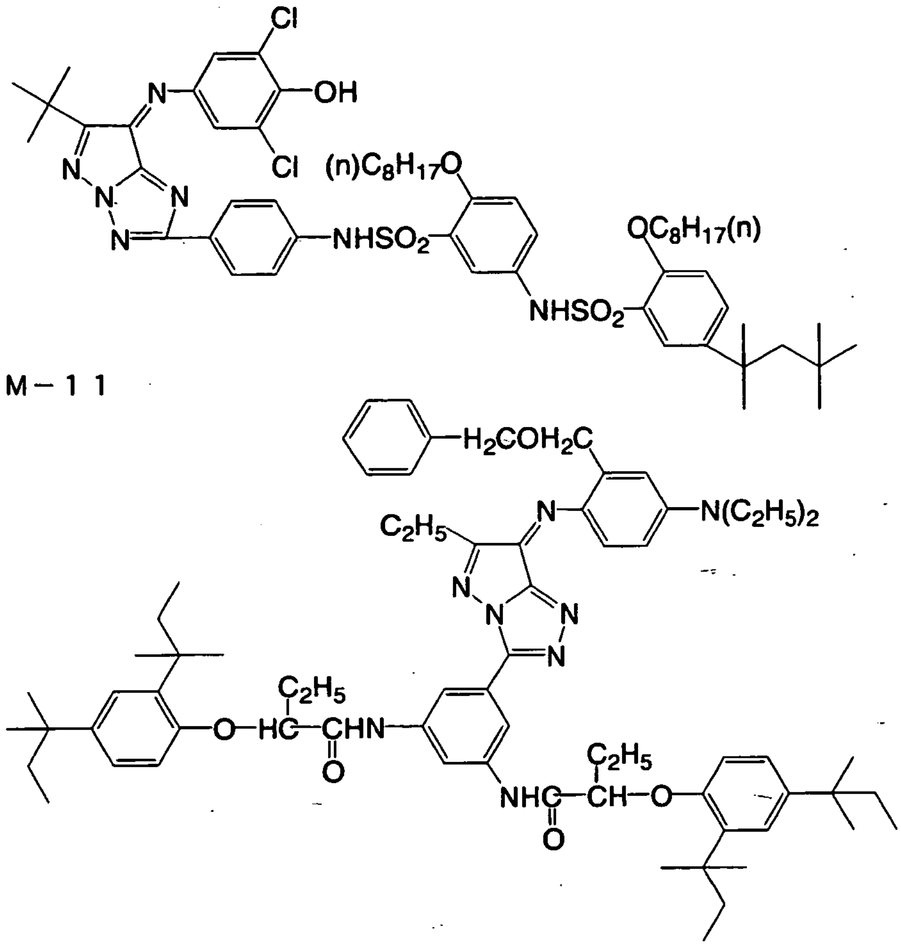

M－１１

M－１２

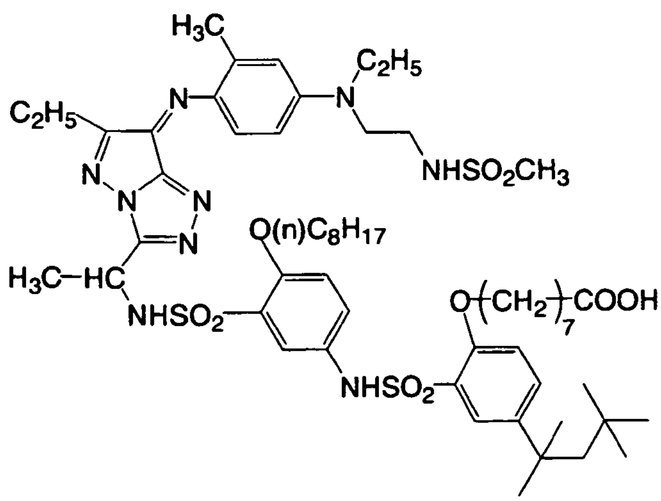

M－１３

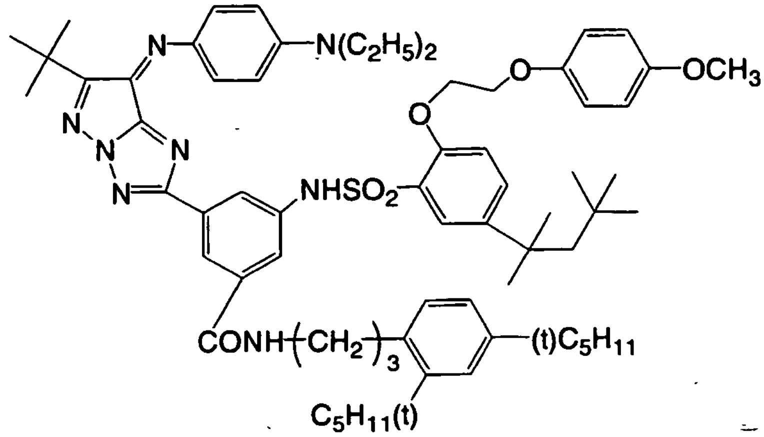

M－１４

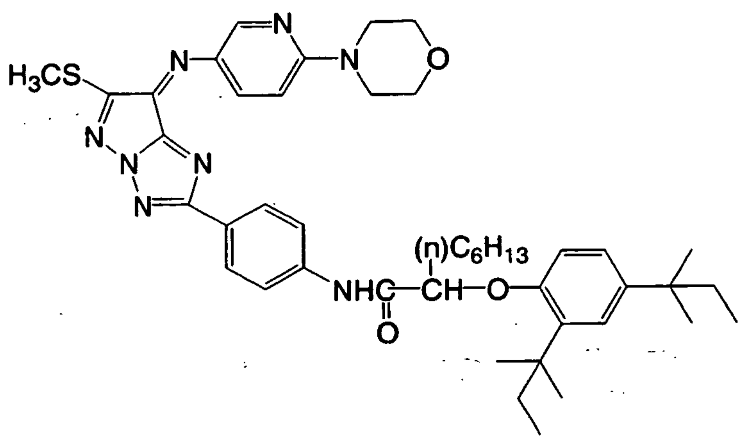

M－１５

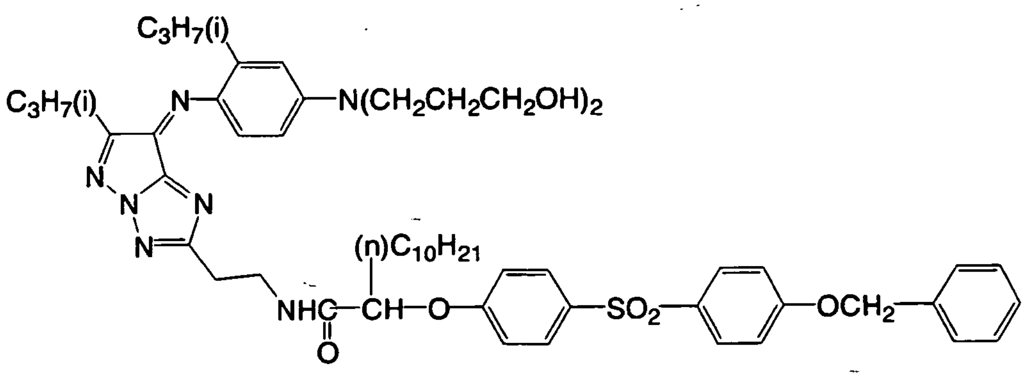

M－１６

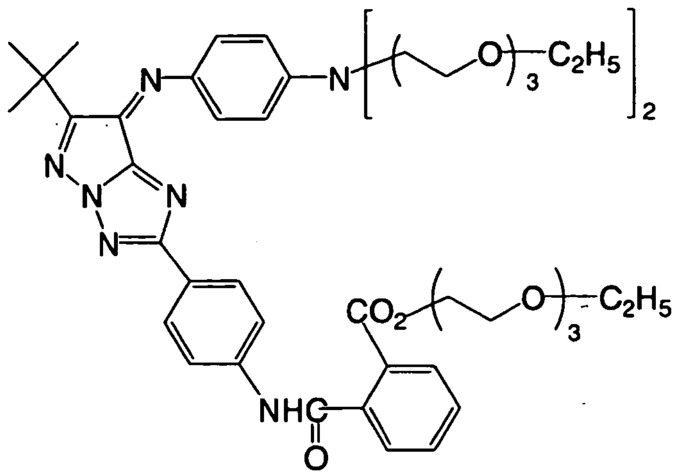

M－１７

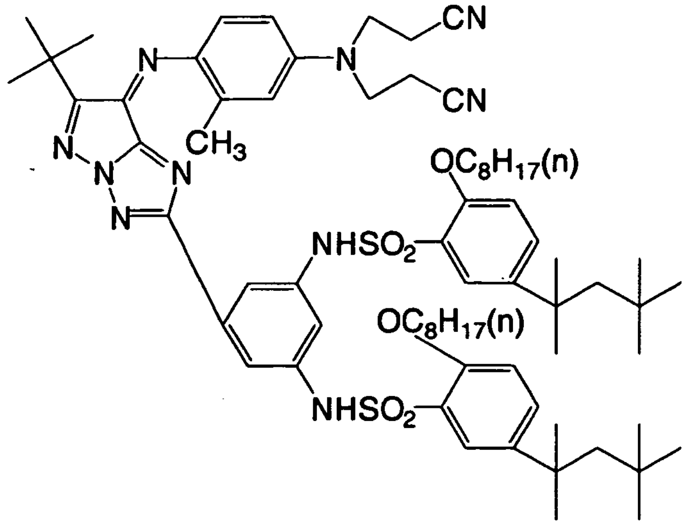

M－１８

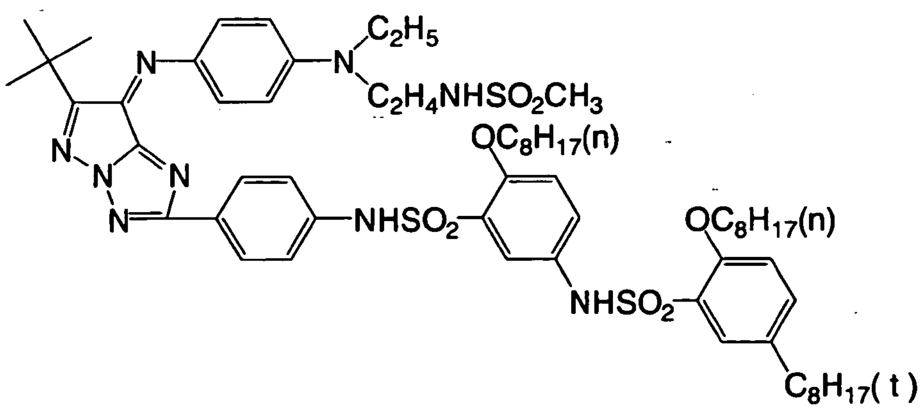

M－１９

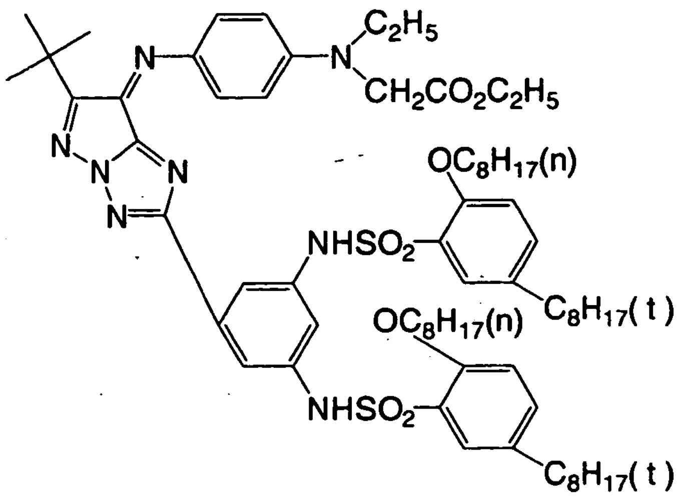

M－２０

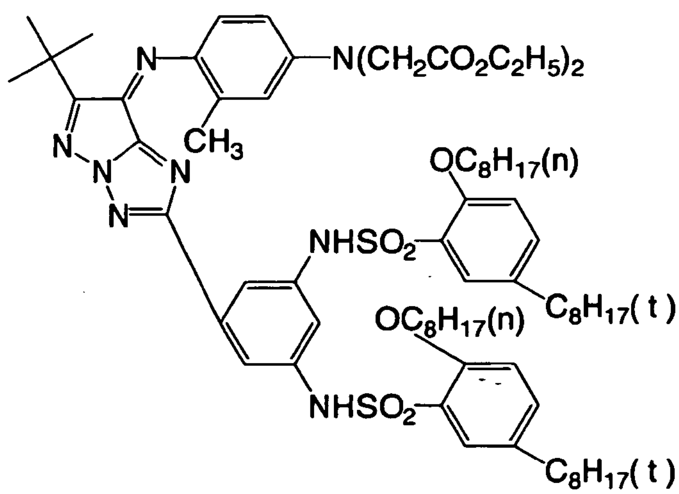

M-21

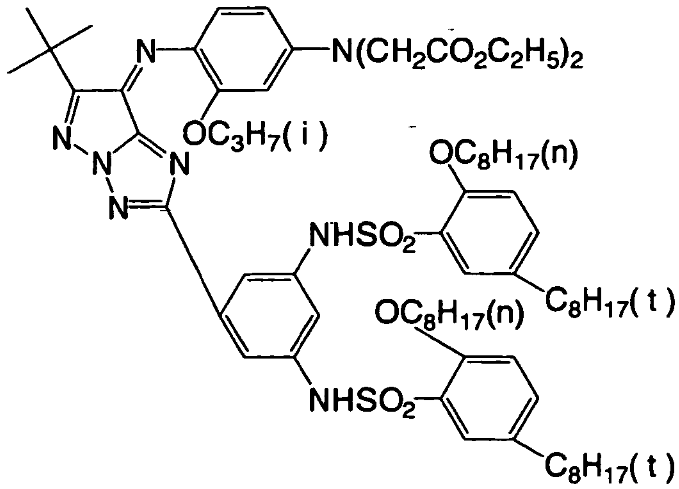

M-22

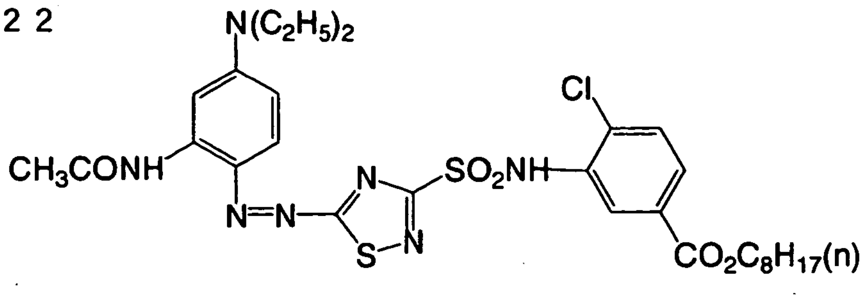

M-23

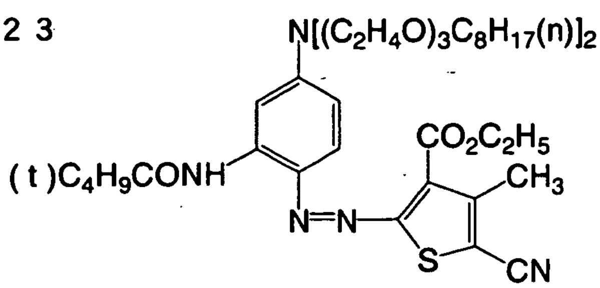

M－２４

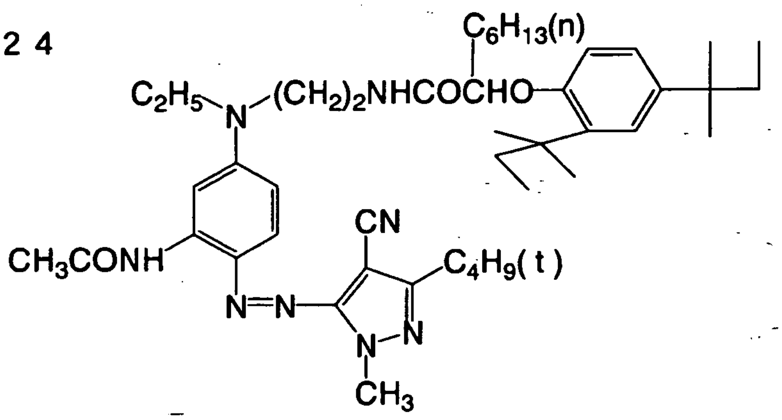

M－２５

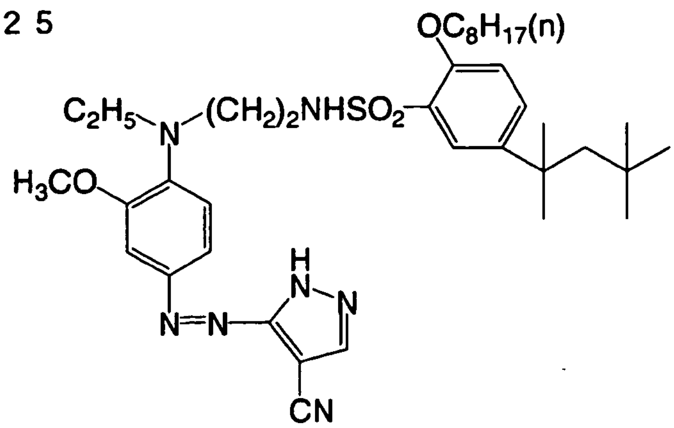

M－２６

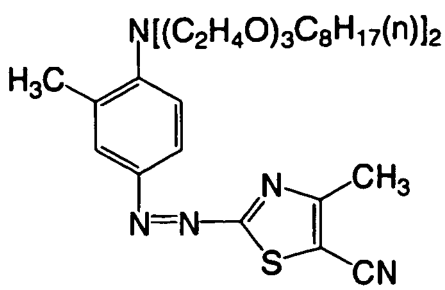

M－２７

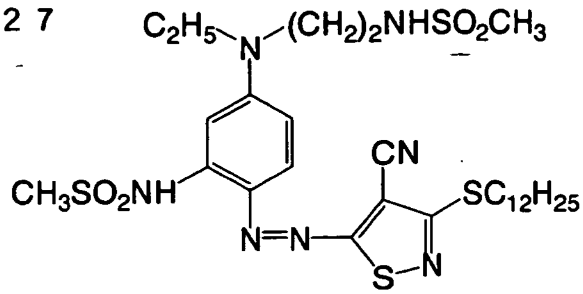

M－２８

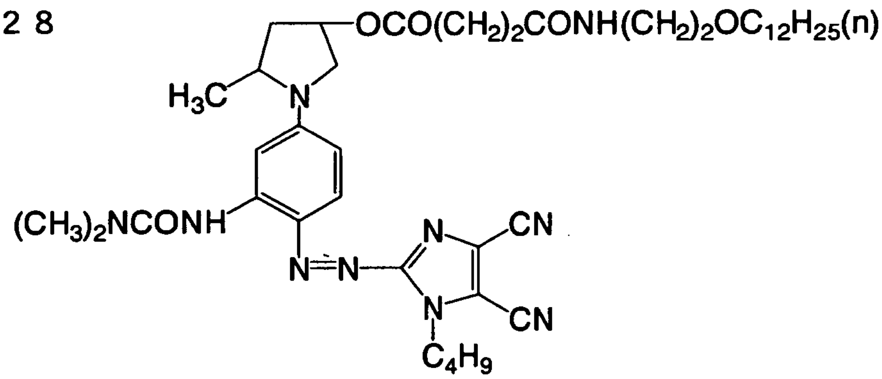

M－２９

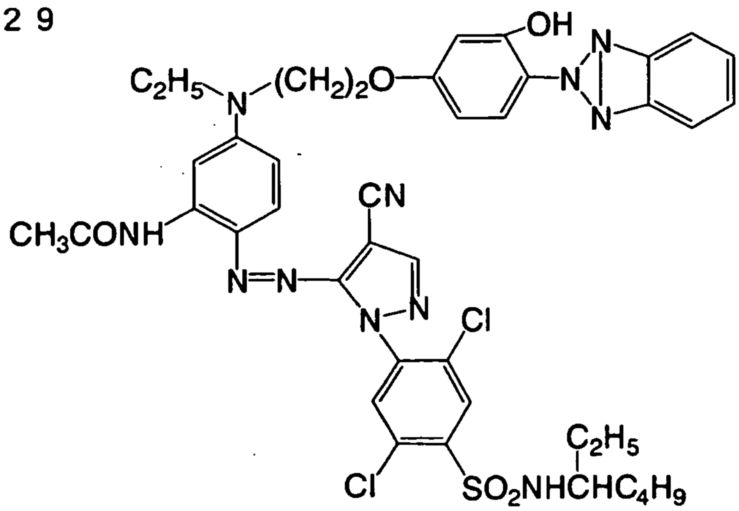

M－３０

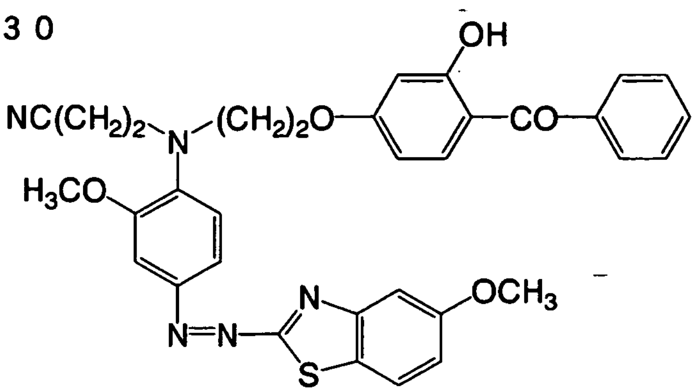

M－３１

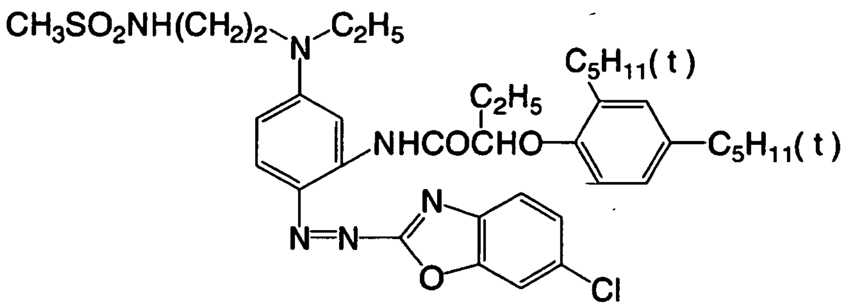

M－３２

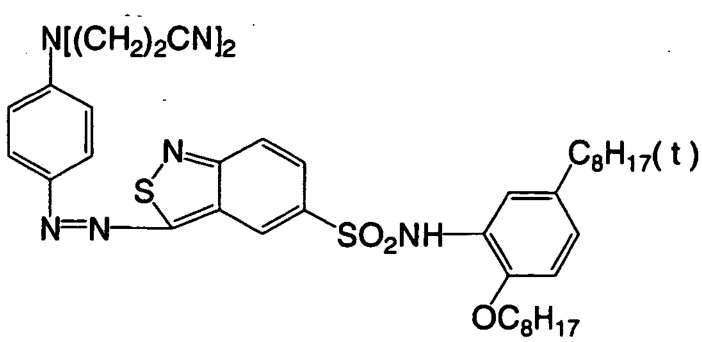

M－３３

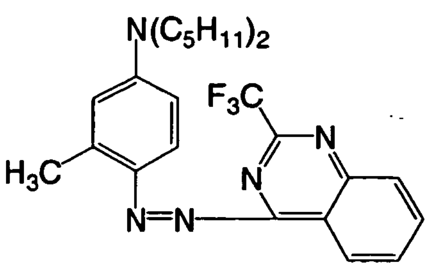

M－3 4

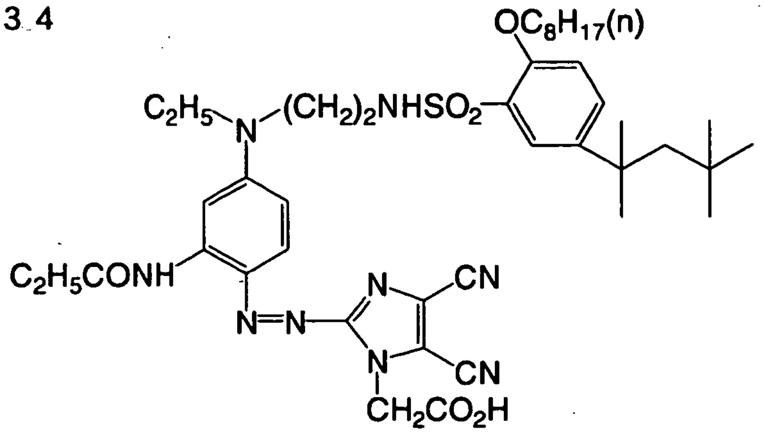

M－3 5

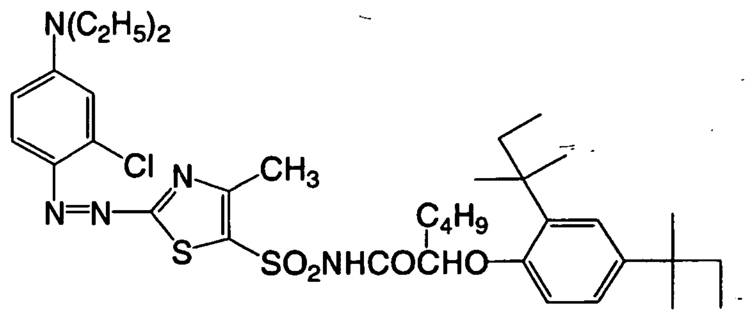

M－3 6

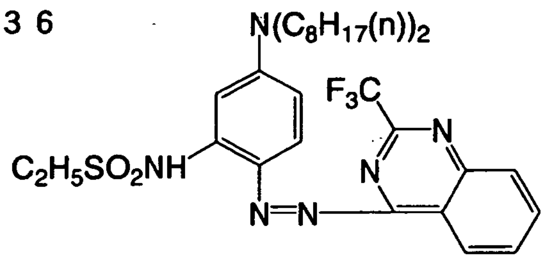

M－３７

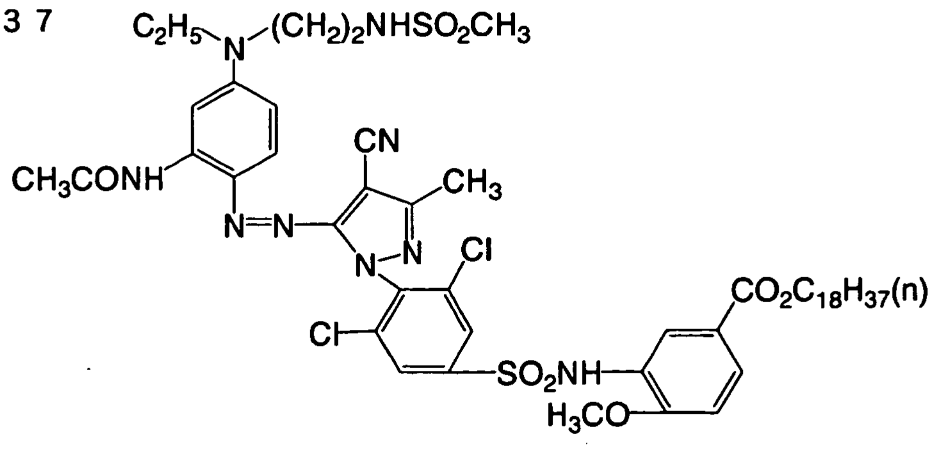

M－３８

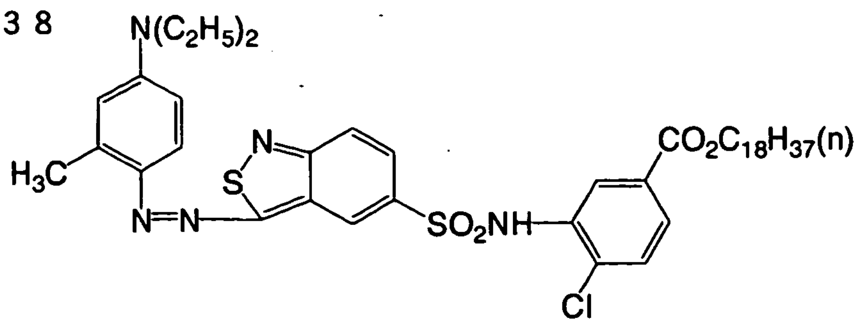

M－３９

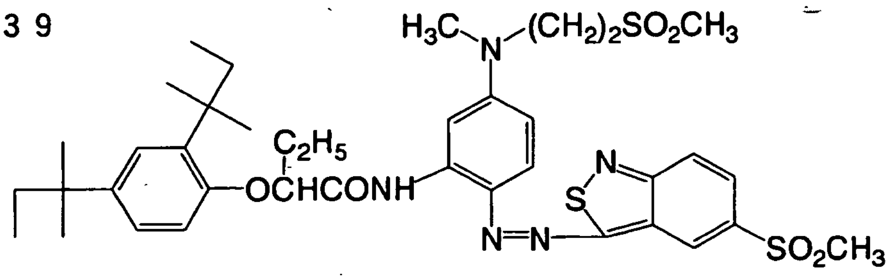

M－４０

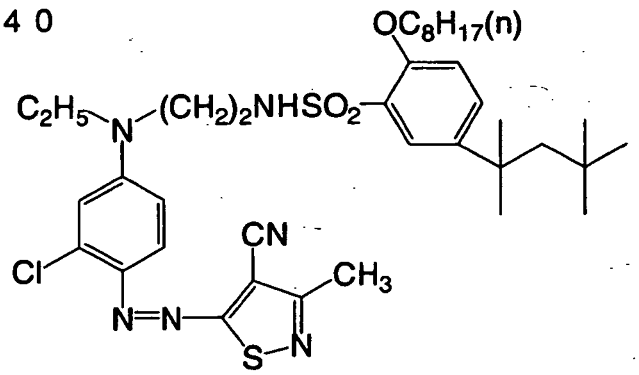

M－４１

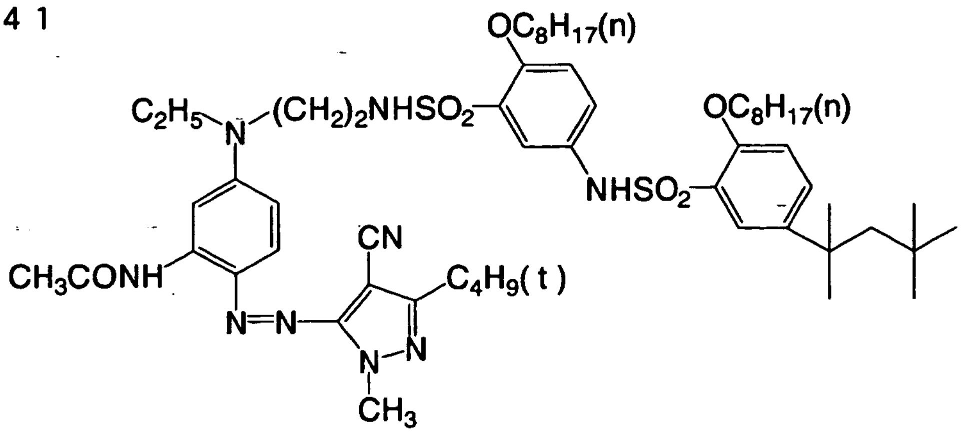

M－４２

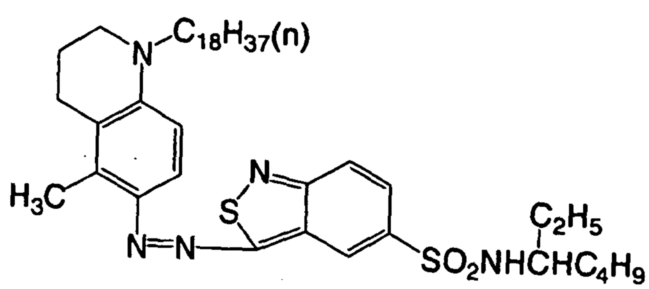

M－4 3

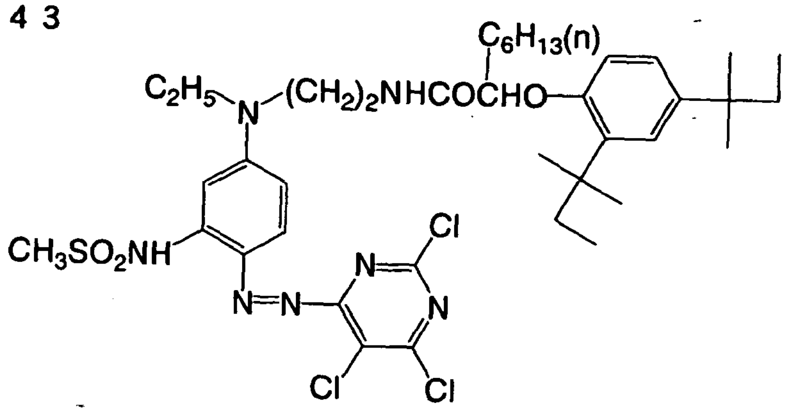

M－4 4

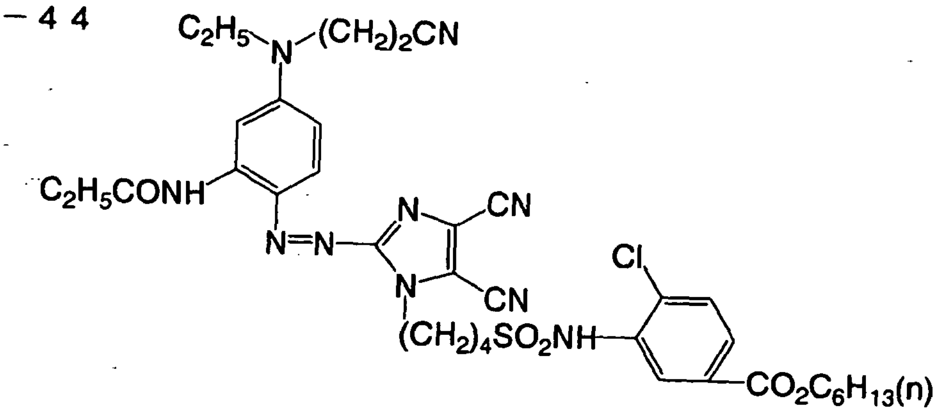

M－4 5

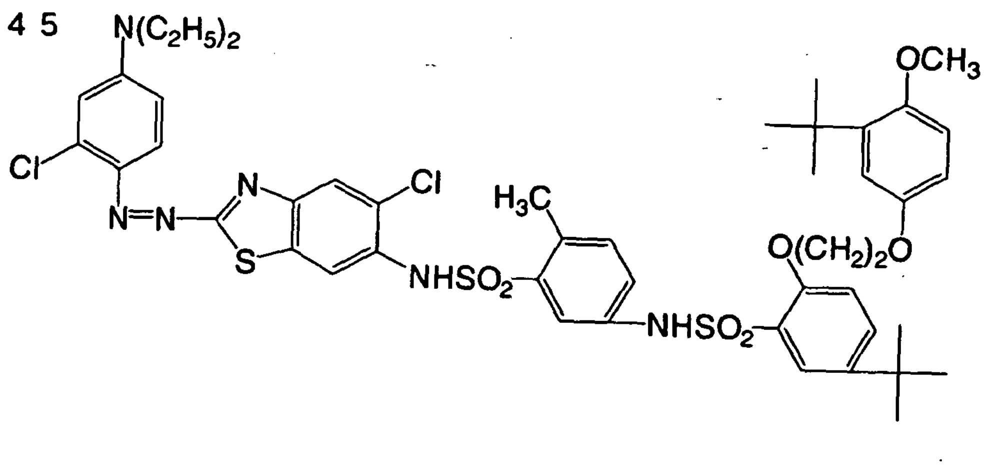

M－4 6

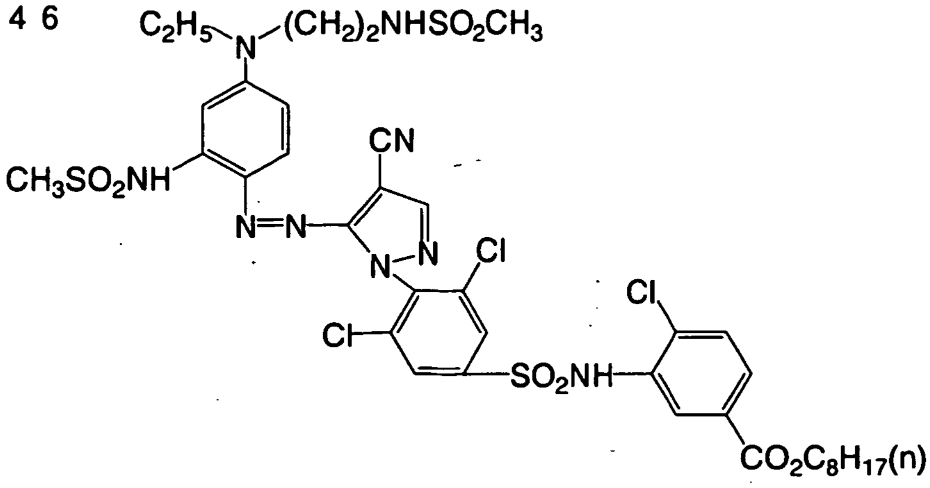

M－4 7

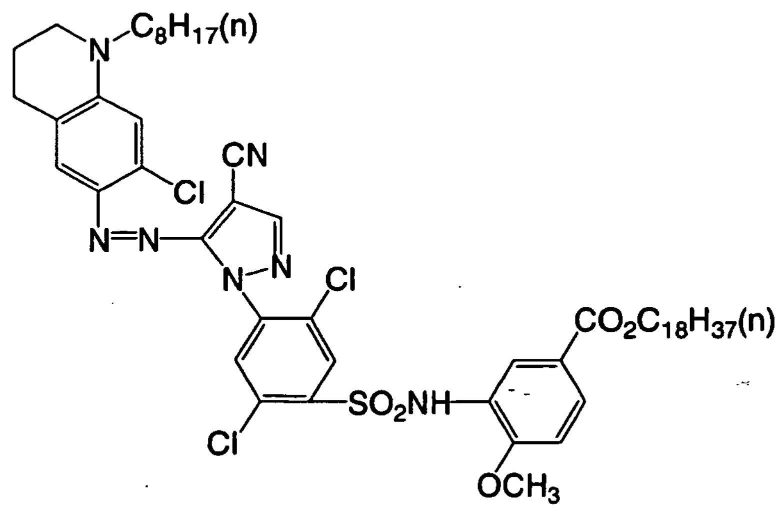

M－4 8

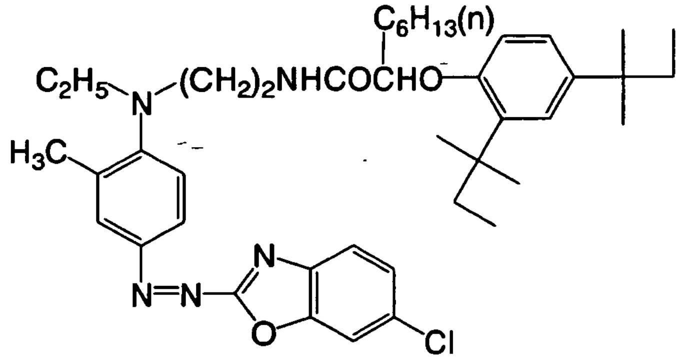

M-49

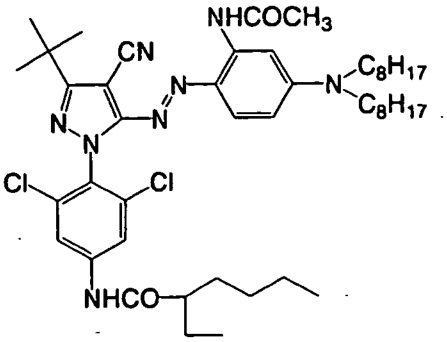

M-50

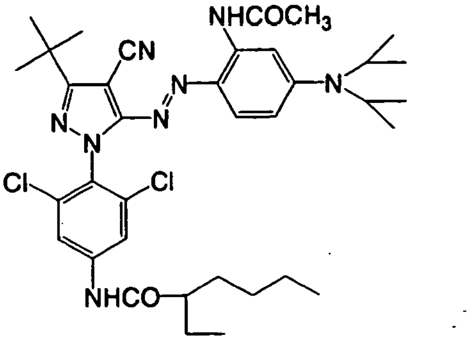

M-51

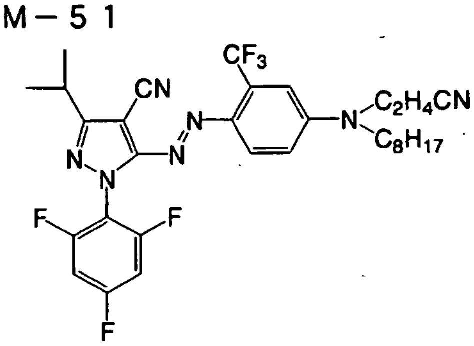

M-52

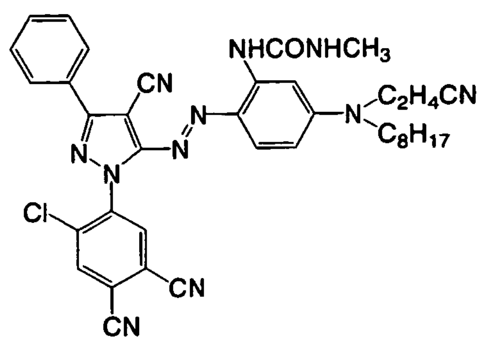

M-53

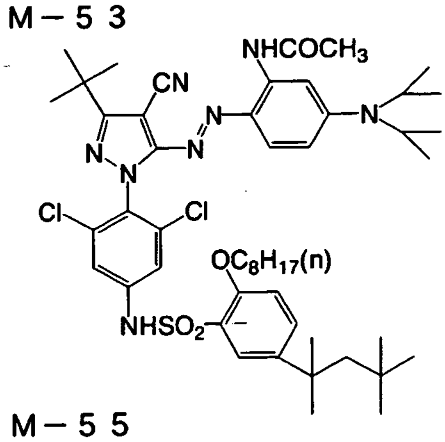

M-54

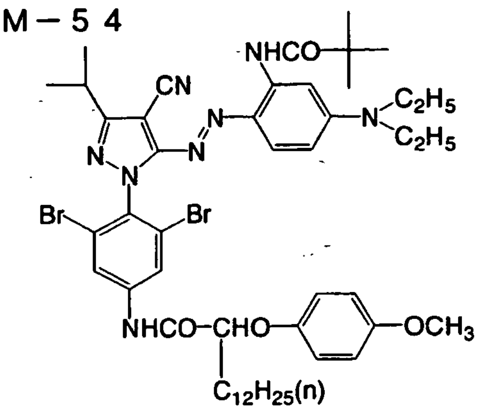

M-55

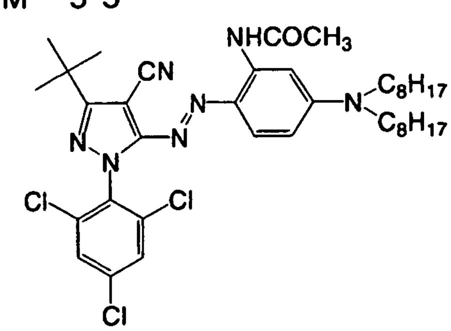

M-56

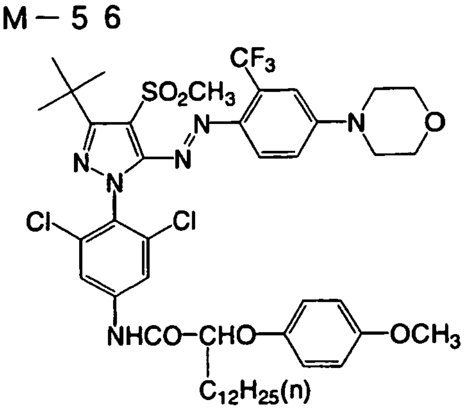

M－５７

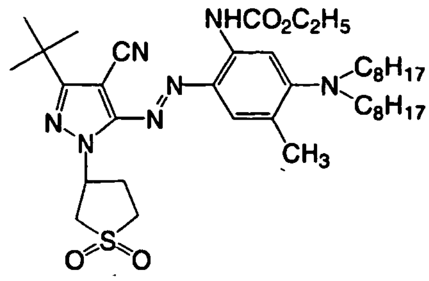

M－５８

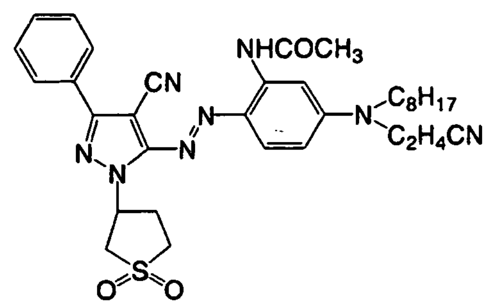

M－５９

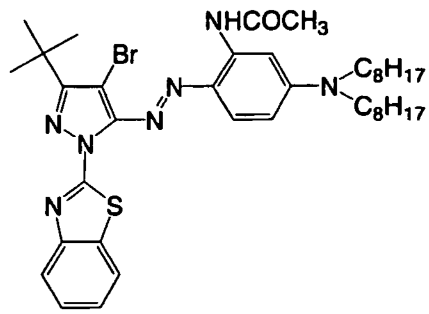

M－６０

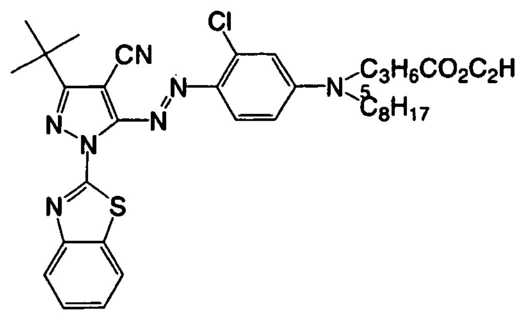

M－６１

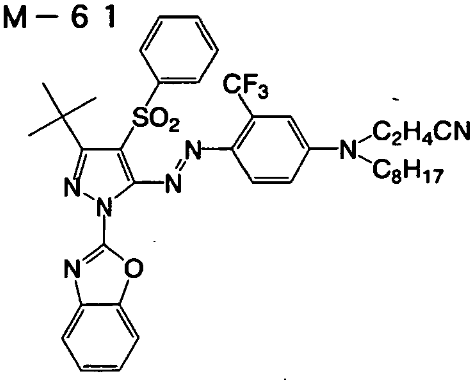

M－６２

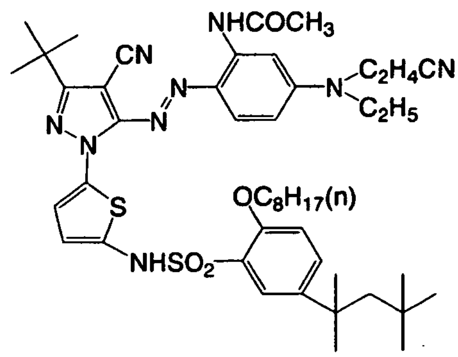

M-63

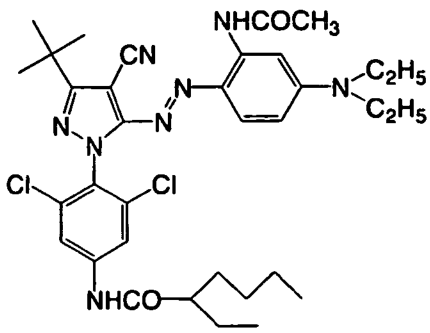

M-64

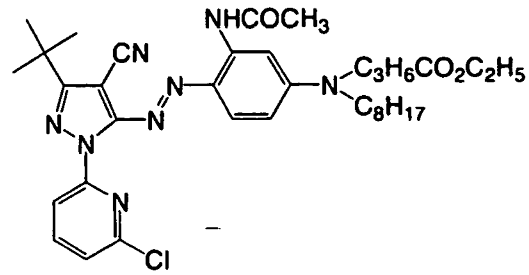

M-65

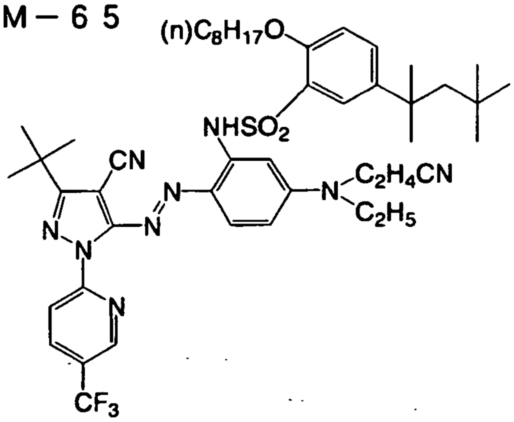

M-66

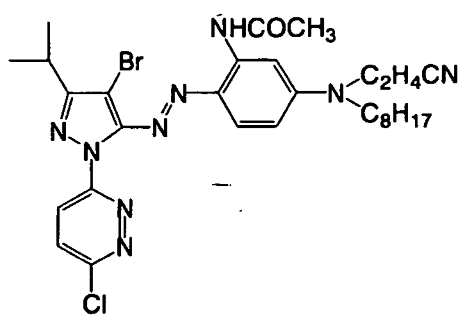

M-67

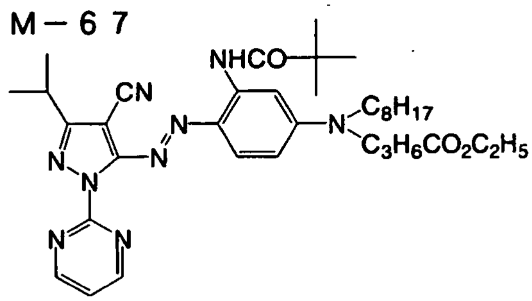

M-68

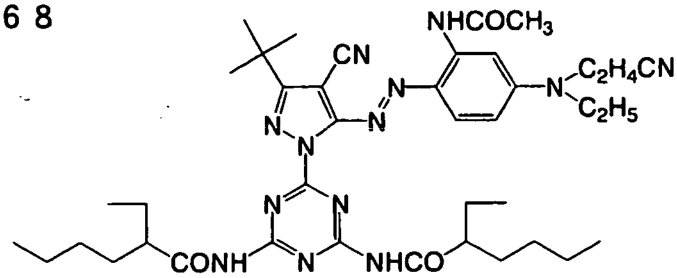

M－69

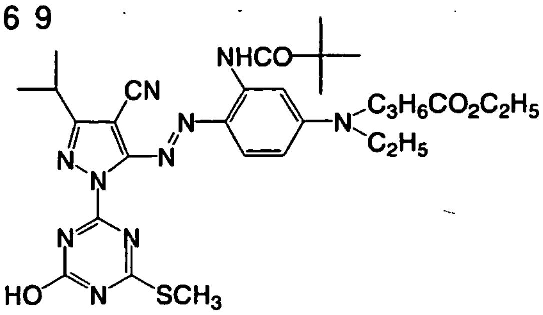

M－70

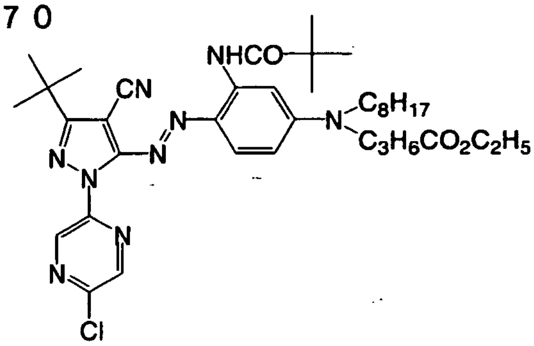

Compounds described in Japanese Patent Application Nos. 11-365187, 11-365190 and 2000-220649 can also be used in the invention.

The dye represented by the formula III can be synthesized on the basis of the methods described in for example Japanese Patent Application No. 2000-220649, and JP-A No. 55-161856.

The dye represented by the formula IV can be synthesized on the basis of the methods described in for example JP-A No. 4-126772, JP-B No. 7-94180 and Japanese Patent Application No. 2000-78491.

Among the dyes represented by the general formula II, the pyrrolotriazole azomethine dye represented by the following general formula V is particularly preferable as the cyan dye.

General formula V

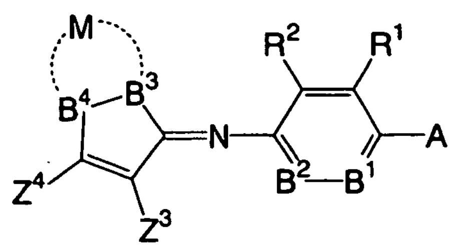

In the general formula V, A, $R^1$, $R^2$, $B^1$ and $B^2$ have the same meanings as in the general formula II. Preferable examples thereof are the same as in the general formula II.

$Z^3$ and $Z^4$ independently have the same meanings as those of G in the general formula IV. $Z^3$ and $Z^4$ may bond to each other to form a ring structure.

M is atoms capable of forming a 1,2,4-triazole ring condensed to the 5-membered ring of the general formula V, where either one of the two atoms $B^3$ and $B^4$ in the condensed portion is a nitrogen atom, while the remaining one is a carbon atom.

Among the pyrrolotriazole azomethine dyes represented by the general formula V, a pyrrolotriazole azomethine dye in which $Z^3$ is an electron attractive group having a Hammett substituent constant $\sigma_p$ of 0.30 or more is more preferable because its sharp absorption. A pyrrolotriazole azomethine dye in which $Z^3$ is an electron attractive group having a Hammett substituent constant $\sigma_p$ of 0.45 or more is even more preferable. A pyrrolotriazole azomethine dye in which $Z^3$ is an electron attractive group having a Hammett substituent constant $\sigma_p$ of 0.60 or more is particularly preferable.

A pyrrolotriazole azomethine dye in which the total of the Hammett substituent constant $\sigma_p$ of $Z^3$ and that of $Z^4$ is 0.70 or more exerts an excellent color tone as cyan color, so such a pyrrolotriazole azomethine dye is the most preferable.

The pyrrolotriazole azomethine dyes represented by the general formula V are preferably used as cyan dyes, although the pyrrolotriazole azomethine dyes may be used as magenta dyes when the substituent of the dyes is changed.

Herein, the Hammett's substituent constant $\sigma_p$ used in the present specification is now described.

The Hammett's rule is an empirical rule proposed by L. P. Hammett in 1935 so as to discuss the influence of a substituent on the reaction or equilibrium of benzene derivatives. The Hammett's rule is widely regarded as reasonable today.

The substituent constants determined by the Hammett's rule include σp and σm. The values thereof can be found in numerous general textbooks. For example, "Lange's Handbook of Chemistry", the 12th edition, 1979, edited by J.A. Dean, (McGraw-Hill) and "Chemical Field (Kagakunoryoiki)", supplementary edition, Vol. 122, pages 96 to 103, 1979 (Nankodo) describe the values in detail.

In the invention, substituents are limited or described with reference to the Hammett's substituent constant σp. This does not mean that substituents in the invention are limited to those with known values described in the general text books. This means that substituents whose substituent constants are not disclosed in references but are within the above-described range when measured on the basis of the Hammett's rule are also included.

Further, substituents which are not benzene derivatives are included in the general formula I to the general formula V. σp is used as the measure of the electron effect of a substituent despite the substituted position. Thus, in the invention, σp value is used as such meaning.

Examples of electron attractive groups having a Hammett's substituent constant σp of 0.60 or more include a cyano group, a nitro group, an alkylsulfonyl group (for example, methanesulfonyl group), and an arylsulfonyl group (for example, benzenesulfonyl group).

Examples of electron attractive groups having a Hammett's substituent constant σp of 0.45 or more include those described above, an acyl group (for example, acetyl group), an alkoxycarbonyl group (for example, dodecyloxycarbonyl group), an aryloxycarbonyl group (for example, m-chlorophenoxycarbonyl), an alkylsulfinyl group (for example, n-propylsulfinyl), an arylsulfinyl group (for example, phenylsulfinyl), a sulfamoyl group (for example, N-ethylsulfamoyl, N, N-dimethylsulfamoyl), and a halogenated alkyl group (for example, trifluoromethyl).

Examples of electron attractive groups having a Hammett's substituent constant σp of 0.30 or more include those described above, an acyloxy group (for example, acetoxy group), a carbamoyl group (for example, N-ethylcarbamoyl, N, N-dibutylcarbamoyl), a halogenated alkoxyl group (for example, trifluoromethyloxy), a halogenated aryloxy group (for example, pentafluorophenyloxy), a sulfonyloxy group (for example, methylsulfonyloxy group), a halogenated alkylthio group (for example, difluoromethylthio), an aryl group substituted with two or more electron attractive groups having σp of 0.15 or more (for example, 2,4-dinitrophenyl, pentachlorophenyl), and aheteroring (for example, 2-benzooxazolyl, 2-benzothiazolyl, 1-phenyl-2-benzimidazolyl).

Examples of electron attractive groups having σp of 0.20 or more include those described above and halogen atoms.

Among the pyrrolotriazole azomethine dyes in the invention, exemplified compounds (C-1 to -9) as cyan dye are now described below. However, the invention is not at all limited to them.

C – 1

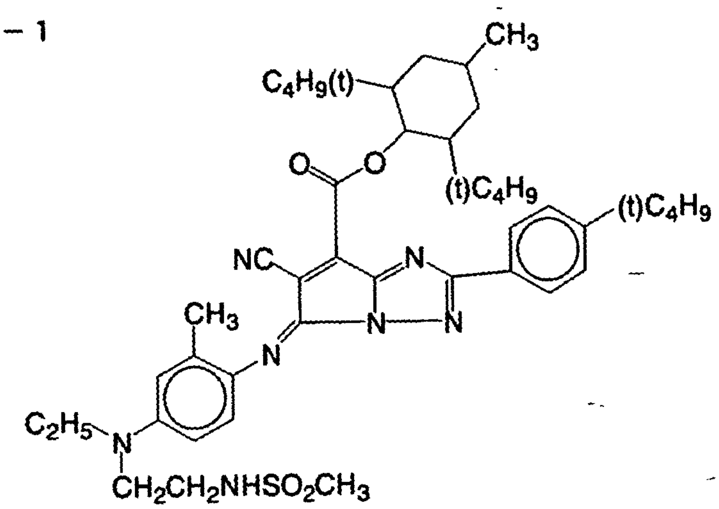

C – 2

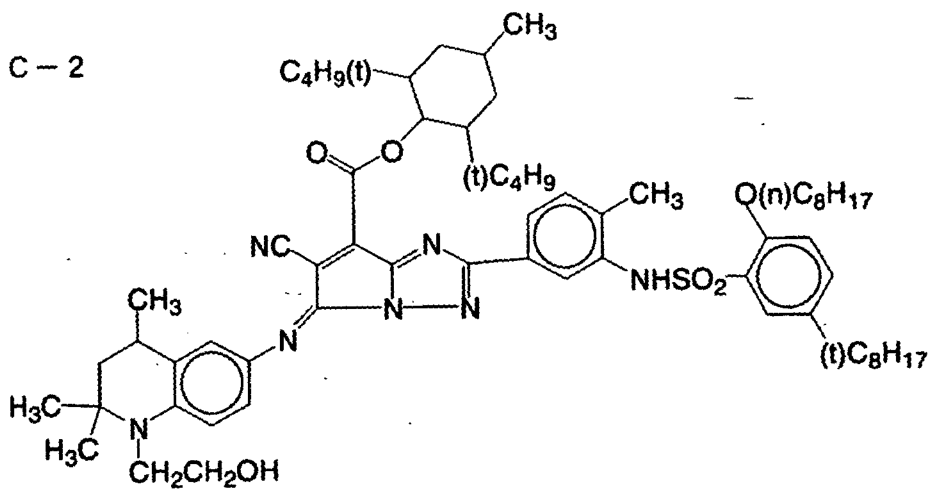

C – 3

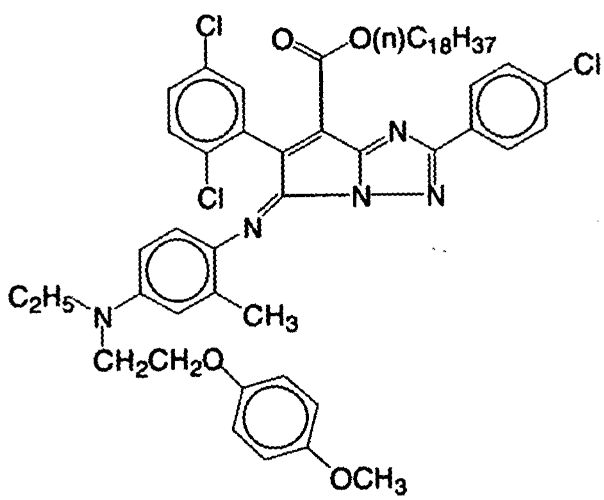

C – 4

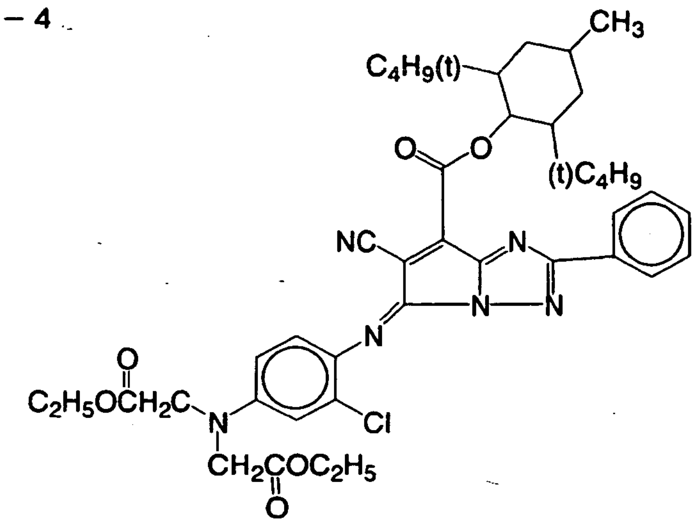

C – 5

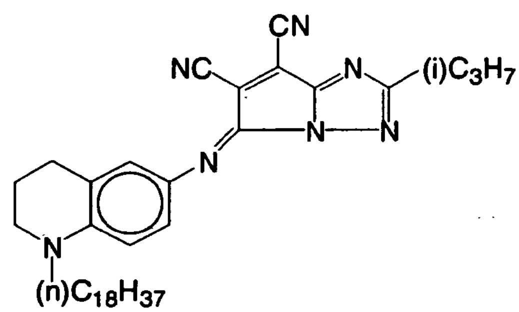

C – 6

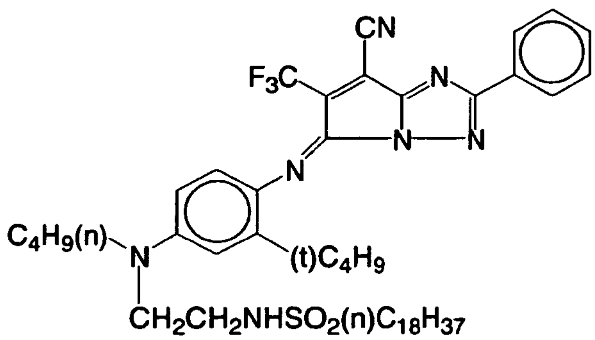

C－7

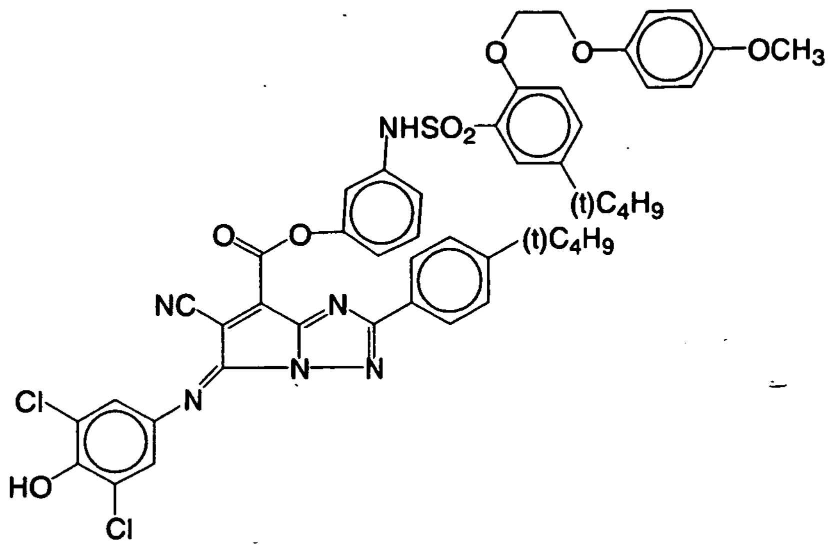

C－8

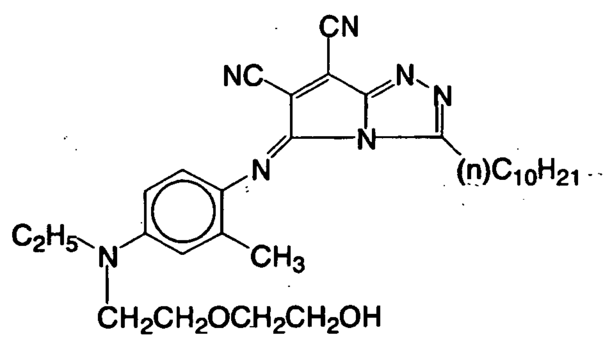

C－9

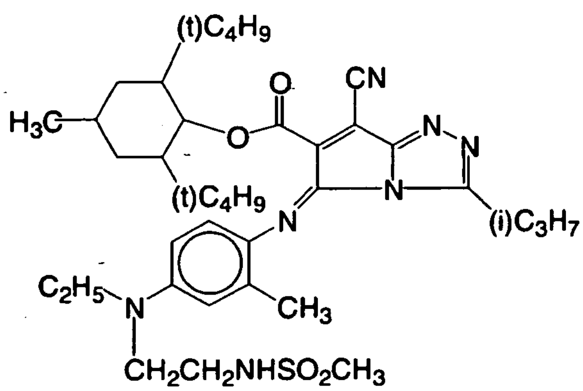

Examples of dyes which can be used in the invention also include exemplified compounds listed in the specification of Japanese Patent Application No. 11-365188. But the invention is not limited to them.

The yellow dye for use as the hydrophobic dye in the invention is preferably a compound (dye) represented by the general formula Y-I.

General formula Y-I A—N=N—B

In the general formula Y-I, A and B independently represent unsubstituted or substituted heterocyclic groups. The heterocyclic groups are preferably heterocyclic groups of a 5-membered ring or 6-membered ring. The heterocyclic groups may have monocyclic structures or polycyclic structures formed by condensation of two or more rings, and may be aromatic heterocyclic rings or non-aromatic heterocyclic rings. The hetero atoms included in the heterocyclic rings are preferably a nitrogen atom, an oxygen atom and a sulfur atom.

In the general formula Y-I, preferable examples of the hetero ring represented by A include 5-pyrazolone, pyrazole, oxazolone, isooxazolone, barbituric acid, pyridone, rhodanine, pyrazolidinedione, pyrazolopyridone, meldrum's acid and condensed heterocyclic rings produced by condensing these heterocyclic rings with a hydrocarbon aromatic ring or heterocyclic ring. Among them, preferable are 5-pyrazolone, 5-aminopyrazole, pyridone, andpyrazoloazoles. Particularly preferable are 5-aminopyrazole, 2-hydroxy-6-pyridone and pyrazolotriazole.

In the general formula Y-I, preferable examples of the hetero ring represented by B include pyridine, pyrazine, pyrimidine, pyridazine, triazine, quinoline, isoquinoline, quinazoline, cinnoline, phthalazine, quinoxaline, pyrrole, indole, furan, benzofuran, thiophene, benzothiophene, pyrazole, imidazole, benzimidazole, triazole, oxazole, isoxazole, benzooxazole, thiazole, benzothiazole, isothiazole, benzisothiazole, thiadiazole, benzoisooxazole, pyrrolidine, piperidine, piperazine, imidazolidine, and thiazoline. Among them, preferable is pyridine, quinoline, thiophene, benzothiophene, pyrazole, imidazole, benzimidazole, triazole, oxazole, isoxazole, benzooxazole, thiazole, benzothiazole, isothiazole, benzisothiazole, thiadiazole, and benzoisooxazole. Quinoline, thiophene, pyrazole, thiazole, benzooxazole, benzoisooxazole, isothiazole, imidazole, benzothiazole and thiadiazole are more preferable. Pyrazole, benzothiazole, benzooxazole, imidazole, 1,2,4-thiadiazole and 1,3,4-thiadiazole are particularly preferable.

Examples of the substituent which can bond to A and B include a halogen atom, an alkyl group, a cycloalkyl group, an aralkyl group, an alkenyl group, an alkynyl group, an aryl group, a heterocyclic group, a cyano group, a hydroxyl group, a nitro group, an alkoxyl group, an aryloxy group, a silyloxy group, a heterocyclic oxy group, an acyloxy group, a carbamoyloxy group, an alkoxycarbonyloxy group, an aryloxycarbonyloxy, an amino group, an acylamino group, an aminocarbonylamino group, an alkoxycarbonylamino group, an aryloxycarbonylamino group, a sulfamoylamino group, an alkylsulfonylamino group, an arylsulfonylamino group, a mercapto group, an alkylthio group, an arylthio group, a heterocyclic thio group, a sulfamoyl group, an alkyl sulfinyl group, an arylsulfinyl group, an alkyl sulfonyl group, an arylsulfonyl group, an acyl group, an aryloxycarbonyl group, an alkoxycarbonyl group, a carbamoyl group, an imide group, a phosphino group, a phosphinyl group, a phosphinyloxy group, a phosphinylamino group and a silyl group.

Among dyes represented by the general formula Y-I, dyes represented by the general formulas Y-II, Y-III and Y-IV are more preferable.

General formula Y-II

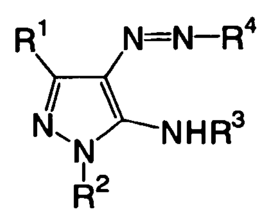

In the general formula Y-II, $R^1$ and $R^3$ represent a hydrogen atom, a cyano group, an alkyl group, a cycloalkyl group, an aralkyl group, an alkoxyl group, an alkylthio group, an arylthio group, an aryl group or an ionic hydrophilic group. $R^2$ represents a hydrogen atom, an alkyl group, a cycloalkyl group, an aralkyl group, a carbamoyl group, an acyl group, an aryl group or a heterocyclic group. $R^4$ represents a heterocyclic group.

General formula Y-III

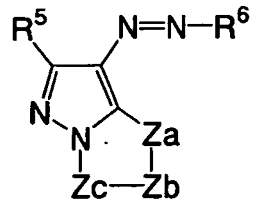

In the general formula Y-III, $R^5$ represents a hydrogen atom, a cyano group, an alkyl group, a cycloalkyl group, an aralkyl group, an alkoxyl group, an alkylthio group, an arylthio group, an aryl group or an ionic hydrophilic group. Za represents -N=, -NH-, or $C(R^{11})$=. Zb and Zc independently represent -N=, or $C(R^{11})$=. $R^{11}$ represents a hydrogen atom or a non-metal substituent. $R^6$ represents a heterocyclic group.

General formula Y-IV

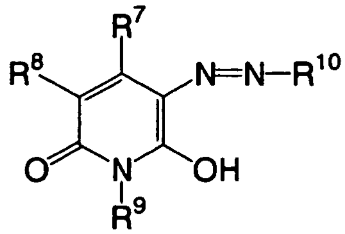

In the general formula Y-IV, $R^7$ and $R^9$ independently represent a hydrogen atom, a cyano group, an alkyl group, a cycloalkyl group, an aralkyl group, an aryl group, an alkylthio group, an arylthio group, an alkoxycarbonyl group, a carbamoyl group or an ionic hydrophilic group. $R^8$ represents a hydrogen atom, a halogen atom, an alkyl group, an alkoxyl group, an aryl group, an aryloxy group, a cyano group, an acylamino group, a sulfonylamino group, an alkoxycarbonylamino group, an ureido group, an alkylthio group, an arylthio group, an alkoxycarbonyl group, a carbamoyl group, a sulfamoyl group, a sulfonyl group, an acyl group, an alkylamino group, an arylamino group, a hydroxyl group or an ionic hydrophilic group. $R^{10}$ represents a heterocyclic group.

The substituents represented by $R^1$, $R^2$, $R^3$, $R^5$, $R^7$, $R^8$ and $R^9$ in the general formulas Y-II, Y-III and Y-IV are now described below in detail.

The alkyl group represented by $R^1$, $R^2$, $R^3$, $R^5$, $R^7$, $R^8$ and $R^9$ includes substituted and unsubstituted alkyl groups.

The alkyl group is preferably an alkyl group with one to 20 carbon atoms. The substituent is for example a hydroxyl group, an alkoxyl group, a cyano group, a halogen atom, or an ionic hydrophilic group.

Examples of the alkyl group include methyl, ethyl, butyl, isopropyl, t-butyl, hydroxyethyl, methoxyethyl, cyanoethyl, trifluoromethyl, 3-sulfopropyl, and 4-sulfobutyl.

The cycloalkyl group represented by $R^1$, $R^2$, $R^3$, $R^5$, $R^7$, $R^8$ and $R^9$ includes substituted and unsubstituted cycloalkyl groups.

The cycloalkyl group is preferably a cycloalkyl group with 5 to 12 carbon atoms. Examples of the substituent include an ionic hydrophilic group.

The cycloalkyl group is preferably cyclohexyl.

The aralkyl group represented by $R^1$, $R^2$, $R^3$, $R^5$, $R^7$, $R^8$ and $R^9$ includes substituted and unsubstituted aralkyl groups.

The aralkyl group is preferably an aralkyl group with 7 to 20 carbon atoms. Preferably, examples of the substituent include ionic hydrophilic groups.

The aralkyl group is preferably benzyl or 2-phenetyl.

The aryl group represented by $R^1$, $R^2$, $R^3$, $R^5$, $R^7$ and $R^9$ includes substituted and unsubstituted aryl groups.

The aryl group is preferably an aryl group with 6 to 20 carbon atoms. Preferably, examples of the substituent include alkyl groups, alkoxyl groups, halogen atoms, alkylamino groups and ionic hydrophilic groups.

Examples of the aryl group include phenyl, p-tolyl, p-methoxyphenyl, o-chlorophenyl and m-(3-sulfopropylamino)phenyl.

The alkylthio group represented by $R^1$, $R^2$, $R^3$, $R^5$, $R^7$, $R^8$ and $R^9$ includes substituted and unsubstituted

alkylthio groups.

The alkylthio group is preferably an alkylthio group with one to 20 carbon atoms. Examples of the substituent include ionic hydrophilic groups.

Examples of the alkylthio group include methylthio and ethylthio.

The arylthio group represented by $R^1$, $R^2$, $R^3$, $R^5$, $R^7$, $R^8$ and $R^9$ includes substituted and unsubstituted arylthio groups.

The arylthio group is preferably an arylthio group with 6 to 20 carbon atoms. Examples of the substituent include alkyl groups and ionic hydrophilic groups.

Examples of the arylthio group include phenylthio and p-tolylthio.

The heterocyclic group represented by $R^2$ is preferably a 5-membered or 6-membered hetero ring. They may be a condensed ring. The hetero atom included in such a hetero ring is preferably a nitrogen atom, a sulfur atom and an oxygen atom. Further, the hetero ring may be an aromatic hetero ring or a non-aromatic hetero ring. The hetero ring may be substituted. Examples of the substituent include the same substituents as those for the substituted aryl group as described below. Preferably, the hetero ring is a 6-membered nitrogen-containing aromatic hetero ring. Specifically, the preferable hetero ring is triazine, pyrimidine and phthalazine.

Examples of the halogen atom represented by $R^8$ include a fluorine atom, a chlorine atom and a bromine atom.

The alkoxyl group represented by $R^1$, $R^3$, $R^5$, and $R^6$ includes substituted and unsubstituted alkoxyl groups.

The alkoxyl group is preferably an alkoxyl group with one to 20 carbon atoms. Examples of the substituent include a hydroxyl group and ionic hydrophilic groups.

Preferably, the alkoxyl group is for example methoxy, ethoxy, isopropoxy, methoxyethoxy, hydroxyethoxy or 3-carboxypropoxy.

The aryloxy group represented by $R^8$ includes substituted and unsubstituted aryloxy groups.

The aryloxy group is preferably an aryloxy group with 6 to 20 carbon atoms. Examples of the substituent include alkoxyl groups and ionic hydrophilic groups.

The aryloxy group is preferably for example phenoxy, p-methoxyphenoxy or o-methoxyphenoxy.

The acylamino group represented by $R^8$ includes substituted and unsubstituted acylamino groups.

The acylamino group is preferably an acylamino group with 2 to 20 carbon atoms. Examples of the substituent include ionic hydrophilic groups.

Examples of the acylamino group include acetamide, propionamide, benzamide, and 3,5-disulfobenzamide.

The sulfonylamino group represented by $R^8$ includes substituted and unsubstituted sulfonylamino groups.

The sulfonylamino group is preferably a sulfonylamino group with one to 20 carbon atoms.

Examples of the sulfonylamino group include methylsulfonylamino, and ethylsulfonylamino.

The alkoxycarbonylamino group represented by $R^8$ includes substituted and unsubstituted alkoxycarbonylamino groups.

The alkoxycarbonylamino group is preferably an alkoxycarbonylamino group with 2 to 20 carbon atoms. Examples of the substituent include ionic hydrophilic groups.

The alkoxycarbonylamino group is preferably ethoxycarbonylamino.

The ureido group represented by $R^8$ includes substituted and unsubstituted ureido groups.

The ureido group is preferably an ureido group with one to 20 carbon atoms.

Examples of the substituent include alkyl groups and aryl groups.

Examples of the ureido group include 3-methylureido, 3,3-dimethylureido and 3-phenylureido.

The alkoxycarbonyl group represented by $R^7$, $R^8$ and $R^9$ includes substituted and unsubstituted alkoxycarbonyl groups.

The alkoxycarbonyl group is preferably an alkoxycarbonyl group with 2 to 20 carbon atoms. Examples of the substituent include ionic hydrophilic groups.

The alkoxycarbonyl group is preferably methoxycarbonyl or ethoxycarbonyl.

The carbamoyl group represented by $R^2$, $R^7$, $R^8$ and $R^9$ includes substituted and unsubstituted carbamoyl groups. Examples of the substituent include alkyl groups.

The carbamoyl group is preferably methylcarbamoyl group or dimethylcarbamoyl group.

The sulfamoyl group represented by $R^8$ includes substituted and unsubstituted sulfamoyl groups. Examples of the substituent include alkyl groups.

The sulfamoyl group is preferably dimethylsulfamoyl group or di-(2-hydroxyethyl)sulfamoyl group.

Examples of the sulfonyl group represented by $R^8$ preferably include methanesulfonyl and phenylsulfonyl.

The acyl group represented by $R^2$ and $R^8$ includes substituted and unsubstituted acyl groups. The acyl group is preferably an acyl group with one to 20 carbon atoms. Examples of the substituent include ionic hydrophilic groups.

The acyl group is preferably acetyl or benzoyl.

The amino group represented by $R^8$ preferably includes substituted and unsubstituted amino groups. Examples of the substituent include alkyl groups, aryl groups and heterocyclic groups.

Examples of the amino group include methylamino, diethylamino, anilino and 2-chloroanilino.

The heterocyclic group represented by $R^4$, $R^6$ and $R^{10}$ is the same substituted or unsubstituted heterocyclic group as that represented by B in the general formula Y-I. Preferable examples, more preferable examples and particularly preferable examples are the same as described above.

Examples of the substituent include ionic hydrophilic groups, alkyl groups with one to 12 carbon atoms, aryl groups, alkylthio groups, arylthio groups, halogen atoms, cyano groups, sulfamoyl groups, sulfoneamino groups, carbamoyl groups, and acylamino groups. The alkyl groups and the aryl groups and the like may further contain a substituent.

In the general formula Y-III, Za represents -N=, -NH-, or $C(R^{11})$ =. Zb and Zc independently represent -N= or $C(R^{11})$ =. $R^{11}$ represents a hydrogen atom or a non-metal substituent. Examples of the non-metal substituent represented by $R^{11}$ include a cyano group, a cycloalkyl group, an aralkyl group, an aryl group, an alkylthio group, an arylthio group or an ionic hydrophilic group. The substituents are the same as those represented by $R^1$, so preferable examples thereof are the same as described above. Examples of the skeleton of the hetero ring composed of two 5-membered rings in the general formula Y-III are shown below.

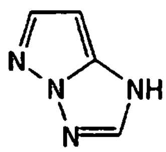
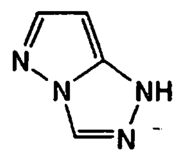
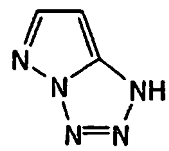

In case where the substituent described above have an additional substituent, examples of the additional substituent include substituents which can bond to the hetero rings A and B in the general formula Y-I.

Specific examples (Y-101 to Y-155) of the dye represented by the general formula Y-I are shown below. The dye to be used in the invention is not limited to the following specific examples. These compounds can be synthesized on the basis of JP-A Nos. 2-24191 and 2001-279145.

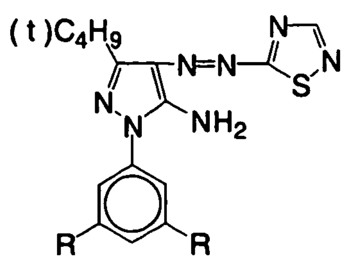

| Dye | R |
|---|---|
| Y-101 | $CON(C_2H_5)_2$ |
| Y-102 | $CON(C_4H_9)_2$ |
| Y-103 | $CON(C_6H_{13})_2$ |
| Y-104 | $COOC_4H_9$ |
| Y-105 | $COOC_6H_{13}$ |
| Y-106 | $COC_4H_9$ |
| Y-107 | $CONHC_4H_9$ |
| Y-108 | $CONHC_6H_{13}$ |

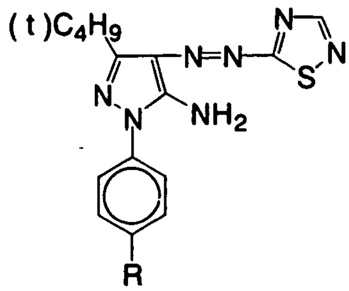

| Dye | R |
|---|---|
| Y-109 | $COOC_4H_9$ |
| Y-110 | $CONHC_4H_9$ |
| Y-111 | $CON(C_4H_9)_2$ |
| Y-112 | $SO_2NHC_6H_{13}$ |
| Y-113 | $SO_2N(C_4H_9)_2$ |
| Y-114 | $NHCOC_6H_{13}$ |
| Y-115 | $NHSO_2C_8H_{17}$ |
| Y-116 | $C_4H_9$ |
| Y-117 | $OC_6H_{13}$ |
| Y-118 | $COOC_{12}H_{25}$ |
| Y-119 | 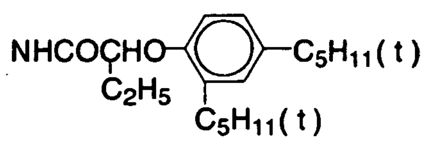 |
| Y-120 | 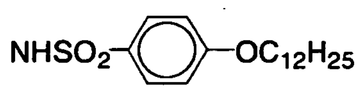 |

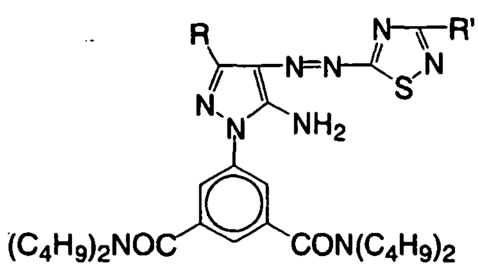

| Dye | R | R' |
|---|---|---|
| Y-121 | $CH_3$ | H |
| Y-122 | Ph | H |

(continued)

| Dye | R | R' |
|---|---|---|
| Y-123 | $OC_2H_5$ | H |
| Y-124 | $C_4H_9$(t) | $SCH_3$ |
| Y-125 | $C_4H_9$(t) | Ph |
| Y-126 | $C_4H_9$(t) | $CH_3$ |
| Y-127 | $C_4H_9$(t) | $SC_8H_{17}$ |

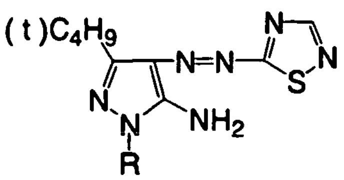

| Dye | R |
|---|---|
| Y-128 | $CH_2Ph$ |
| Y-129 | $C_4H_9$ |
| Y-130 | $C_8H_{17}$ |
| Y-131 | $CONH_2$ |

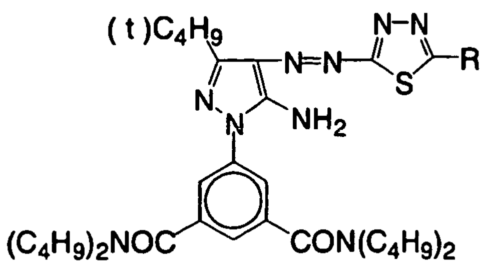

| Dye | R |
|---|---|
| Y-132 | H |
| Y-133 | $CH_3$ |
| Y-134 | Ph |
| Y-135 | $SCH_3$ |

Y-136

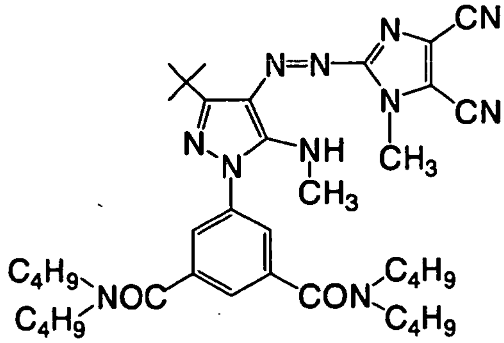

Y-137

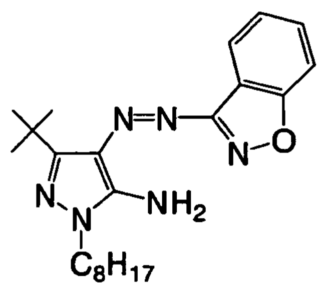

Y-138

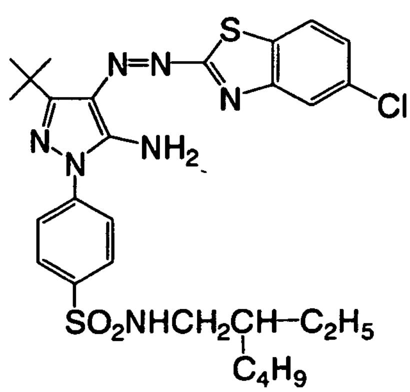

Y-139

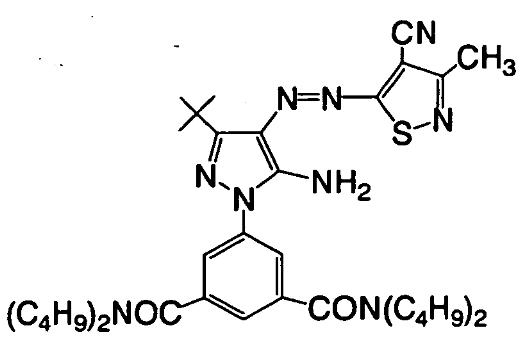

Y-140

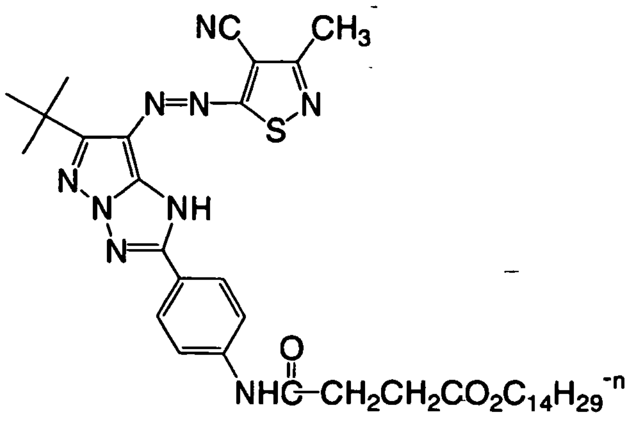

Y-141

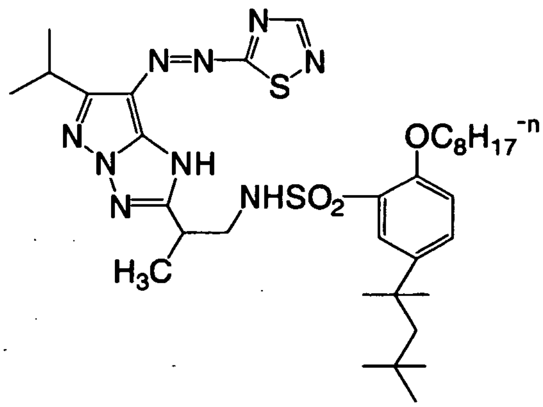

Y-142

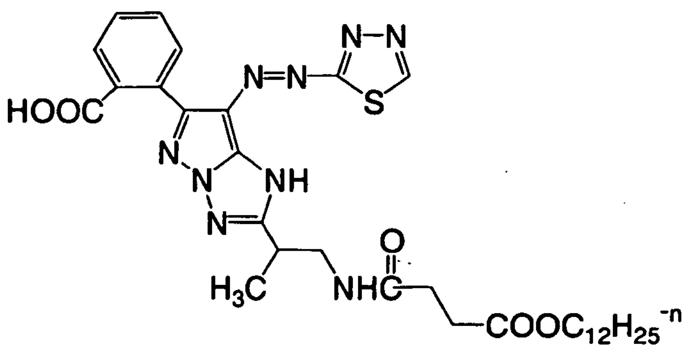

Y-143

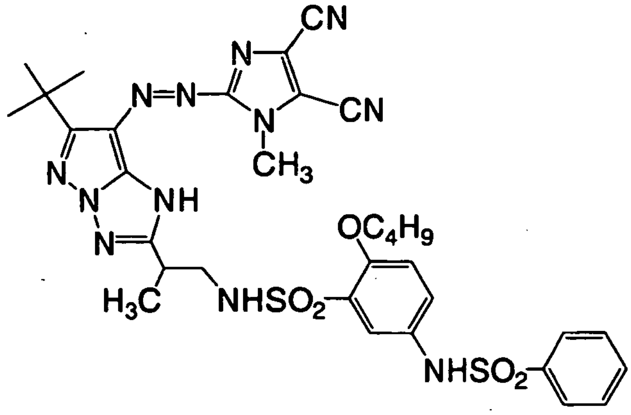

Y-144

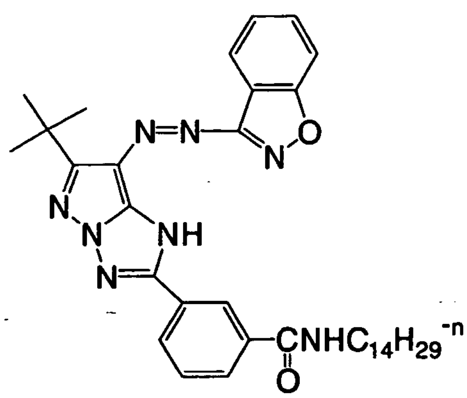

Y-145

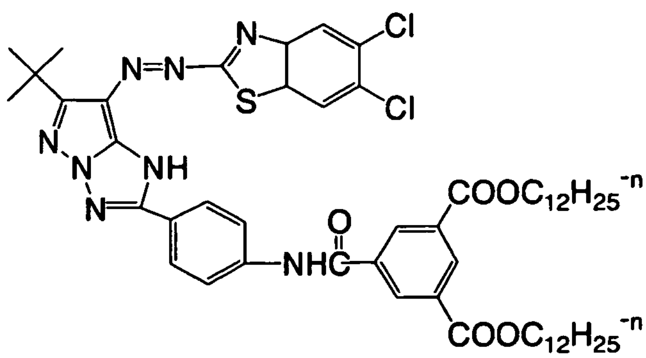

Y-146

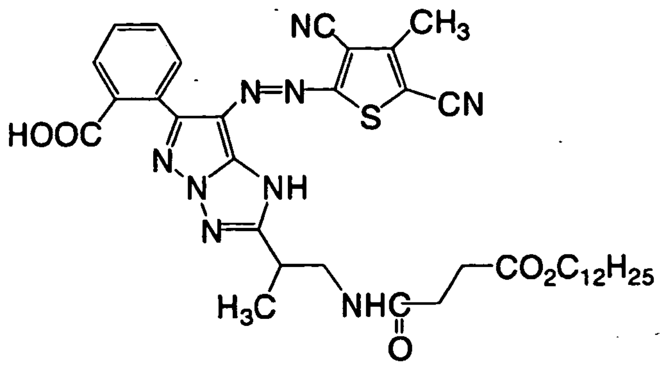

Y-147

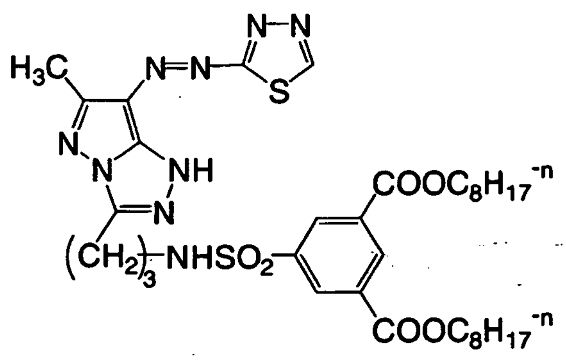

Y-148

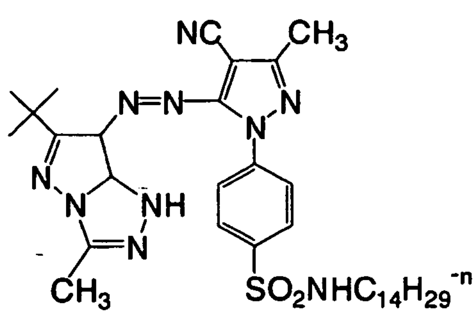

Y-149

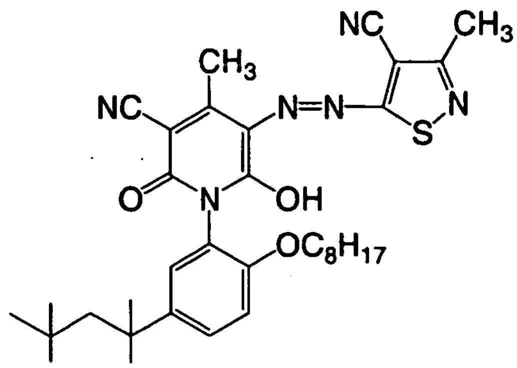

Y-150

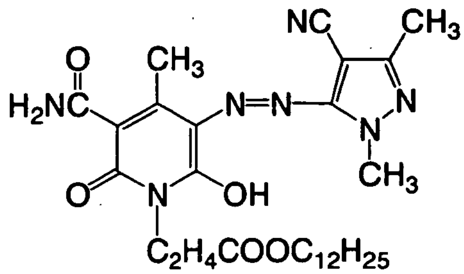

Y-151

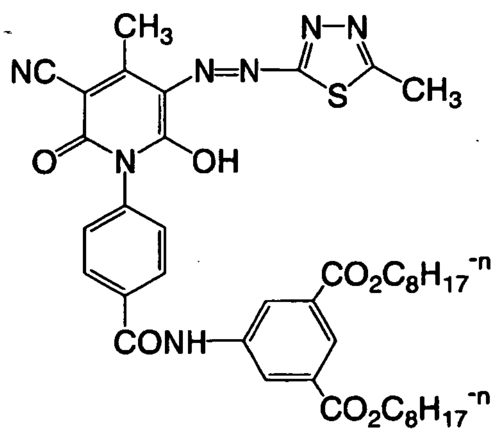

Y-152

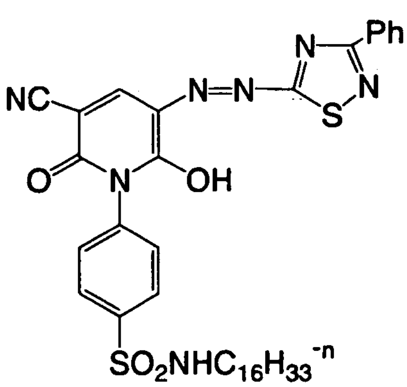

Y-153

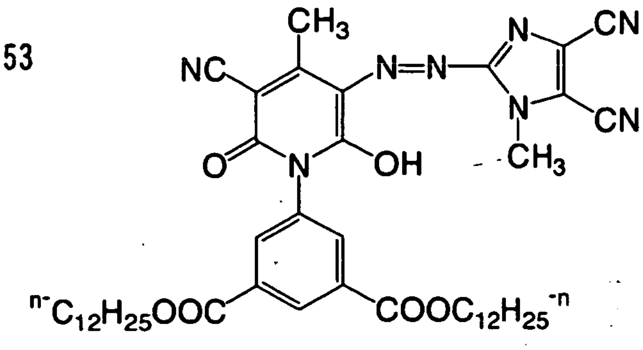

Y-154

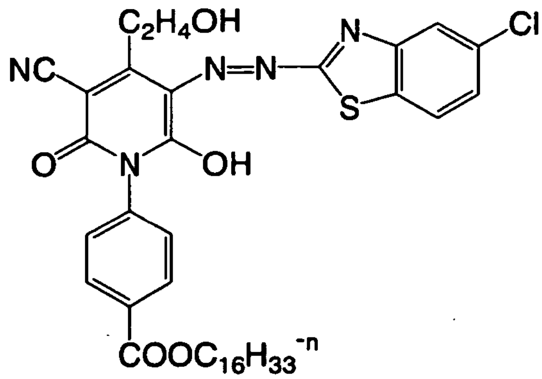

Y-155

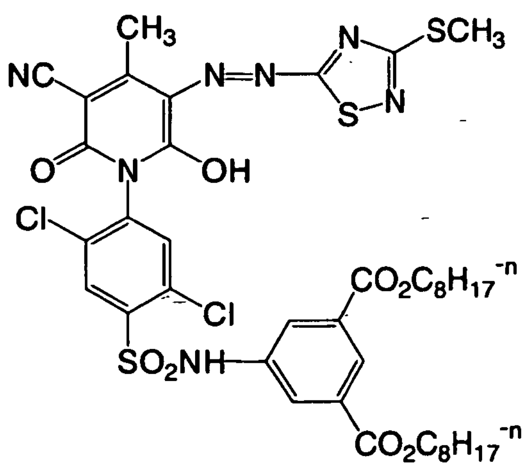

The oil-soluble dye to be used preferably as the hydrophobic dye is preferably a compound represented by the following general formula M-I (referred to as "azo dye" hereinbelow). The compound represented by the general formula M-I is described below.

General formula M-I

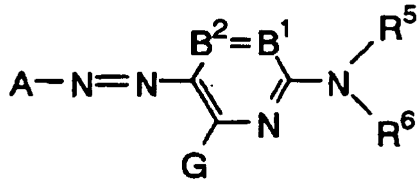

In the general formula M-I, A represents the residue of the 5-membered heterocyclic diazo component A-$NH_2$;

Concerning $B^1$ and $B^2$, $B^1$ represents =$CR^1$- and $B^2$ represents -$CR^2$=; otherwise, either one of $B^1$ and $B^2$ represents a nitrogen atom, while the remaining one represents =$CR^1$- or -$CR^2$=.

$R^5$ and $R^6$ independently represent a hydrogen atom, an aliphatic group, an aromatic group, a heterocyclic group, , an acyl group, an alkoxycarbonyl group, an aryloxycarbonyl group, a carbamoyl group, an alkylsulfonyl group, an arylsulfonyl group or a sulfamoyl group. The individual groups may contain a substituent.

G, $R^1$ and $R^2$ independently represent a hydrogen atom, a halogen atom, an aliphatic group, an aromatic group, a heterocyclic group, a cyano group, a carboxyl group, a carbamoyl group, an alkoxycarbonyl group, an aryloxycarbonyl group, an acyl group, a hydroxyl group, an alkoxyl group, an aryloxy group, a silyloxy group, an acyloxy group, a carbamoyloxy group, a heterocyclic oxy group, an alkoxycarbonyloxy group, an aryloxycarbonyloxy group, an amino group substituted with an alkyl group or an aryl group or a heterocyclic group, an acylamino group, an ureido group; a sulfamoylamino group, an alkoxycarbonylamino group, an aryloxycarbonylamino group, an alkylarylsulfonylamino group, an arylsulfonylamino group, an aryloxycarbonylamino group, a nitro group, an alkylthio group, an arylthio group, an alkylsulfonyl group, an arylsulfonyl group, an alkylsulfinyl group, an arylsulfinyl group, a sulfamoyl group, a sulfo group or a heterocyclic thio group. The groups may be substituted.

Additionally, $R^1$ and $R^5$, or $R^5$ and $R^6$ bond to each other to form a 5-membered or 6-membered ring.

The compound represented by the general formula M-I is now described in detail.

In the general formula M-I, A represents the residue of the 5-membered heterocyclic diazo component A-$NH_2$. Examples of the hetero atom in the 5-membered hetero ring include N, O and S. Preferably, the 5-membered hetero ring is a nitrogen-containing 5-membered hetero ring, and an aliphatic ring, an aromatic ring or other hetero ring may be condensed to the hetero ring.

Preferable examples of the hetero ring include a pyrazole ring, an imidazole ring, a thiazole ring, an isothiazole ring, a thiadiazole ring, a benzothiazole ring, a benzooxazole ring, and a benzisothiazole ring. The heterocyclic groups may contain a substituent. Among them, preferable is a pyrazole ring, an imidazole ring, an isothiazole ring, a thiadiazole ring, and a benzothiazole ring, as-represented by the following general formulas M-a to M-f.

(M—a)

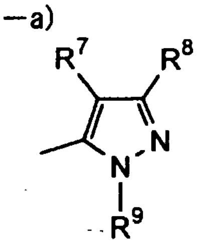

(M—b)

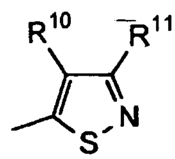

(M—c)

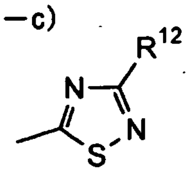

(M—d)

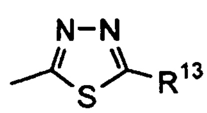

(M−e)

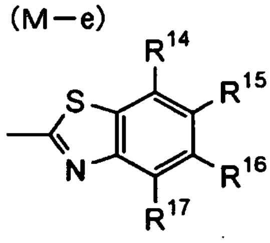

(M−f)

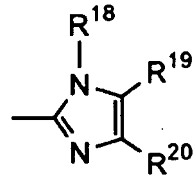

$R^7$ to $R^{20}$ in the general formulas M-a to M-f represent the same substituents as the substituents G, $R^1$ and $R^2$ described hereinafter.

Preferable is the pyrazole ring and isothiazole ring as represented by the general formulas M-a and M-b among the general formulas M-a to M-f. The pyrazole ring represented by the general formula M-a is the most preferable.

Concerning $B^1$ and $B^2$, $B^1$ represents $=CR^1$- and $B^2$ represents $-CR^2=$; otherwise, either one of $B^1$ and $B^2$ represents a nitrogen atom, while the remaining one represents $=CR^1$- or $-CR^2=$. More preferably, $B^1$ represents $=CR^1$- and $B^2$ represents $-CR^2=$.

$R^5$ and $R^6$ independently represent a hydrogen atom, an aliphatic group, an aromatic group, a heterocyclic group, an acyl group, an alkoxycarbonyl group, an aryloxycarbonyl group, a carbamoyl group, an alkylsulfonyl group, an arylsulfonyl group or a sulfamoyl group. These groups may contain a substituent. Preferable examples of substituents represented by $R^5$ and $R^6$ include a hydrogen atom, an aliphatic group, an aromatic group, a heterocyclic group, an acyl group, an alkylsulfonyl group and an arylsulfonyl group. Among them, a hydrogen atom, an aromatic group, a heterocyclic group, an acyl group, an alkylsulfonyl group, and an arylsulfonyl group are more prefable. A hydrogen atom, an aryl group and a heterocyclic group are the most preferable. These substituents may further contain a substituent. Herein, $R^5$ and $R^6$ are never simultaneously hydrogen atoms.

G, $R^1$ and $R^2$ independently represent a hydrogen atom, a halogen atom, an aliphatic group, an aromatic group, a heterocyclic group, a cyano group, a carboxyl group, a carbamoyl group, an alkoxycarbonyl group, an aryloxycarbonyl group, an acyl group, a hydroxyl group, an alkoxyl group, an aryloxy group, a silyloxy group, an acyloxy group, a carbamoyloxy group, a heterocyclic oxy group, an alkoxycarbonyloxy group, an aryloxycarbonyloxy group, an amino group substituted with an alkyl group or an aryl group or a heterocyclic group, an acylamino group, an ureido group, a sulfamoylamino group, an alkoxycarbonylamino group, an aryloxycarbonylamino group, an alkylsulfonylamino group, an arylsulfonylamino group, a nitro group, an alkylthio group, an arylthio group, a heterocyclic thio group, an alkylsulfonyl group, an arylsulfonyl group, an alkylsulfinyl group, an arylsulfinyl group, a sulfamoyl group, or a sulfo group. These groups may be substituted.

Preferably, the substituent represented by G is a hydrogen atom, a halogen atom, an aliphatic group, an aromatic group, a hydroxyl group, an alkoxyl group, an aryloxy group, an acyloxy group, a heterocyclic oxy group, an amino group substituted with an alkyl group or an aryl group or a heterocyclic group, an acylamino group, an ureido group, a sulfamoylamino group, an alkoxycarbonylamino group, an aryloxycarbonylamino group, an alkylthio group, an arylthio group, and a heterocyclic thio group. More preferably, the substituent G is a hydrogen atom, a halogen atom, an alkyl group, a hydroxyl group, an alkoxyl group, an aryloxy group, an acyloxy group, and an amino group substituted with an alkyl group or an aryl group or an acylamino group. Among them, a hydrogen atom, an arylamino group and an amide group are the most preferable. These groups may contain a substituent.

Preferably, examples of the substituent represented by $R^1$ and $R^2$ include a hydrogen atom, an alkyl group, an alkoxycarbonyl group, a carboxyl group, a carbamoyl group and a cyano group. These groups may contain a substituent.

Additionally, $R^1$ and $R^5$ or $R^5$ and $R^6$ bond to each other to form a 5-membered or 6-membered ring.

In case where the substituents represented by A, $R^1$, $R^2$, $R^5$, $R^6$ and G further contain a substituent, examples thereof include the substituents listed for G, $R^1$ and $R^2$.

The substituents represented by G, $R^1$ and $R^2$ are now described below in detail.

The halogen atom includes a fluorine atom, a chlorine atom and a bromine atom.

The aliphatic group means a substituted or unsubstituted alkyl group, a substituted or unsubstituted alkenyl group, a substituted or unsubstituted alkynyl group and a substituted or unsubstituted aralkyl group. The aliphatic group may be branched or may form a ring. The aliphatic group has preferably one to 20 carbon atoms, and more preferably one to 16 carbon atoms. The aryl moieties in the substituted and unsubstituted aralkyl groups are preferably phenyl or naphthyl, particularly preferably phenyl. Examples of the aliphatic group include methyl group, ethyl group, butyl group, isopropyl group, t-butyl group, hydroxyethyl group, methoxyethyl group, cyanoethyl group, trifluoromethyl group, 3-sulfopropyl group, 4-sulfobutyl group, cyclohexyl group, benzyl group, 2-phenetyl group, vinyl group and allyl group.

In the present specification, the aromatic group means substituted and unsubstituted aryl groups. The aryl group is preferably phenyl group or naphthyl group, and particularly preferably phenyl group. The aromatic group has 6 to 20 carbon atoms, and preferably 6 to 16 carbon atoms.

Examples of the aromatic group include phenyl group, p-tolyl group, p-methoxyphenyl group, o-chlorophenyl group and m-(3-sulfopropylamino)phenyl group.

The heterocyclic group includes heterocyclic groups with a substituent and unsubstituted heterocyclic groups. The heterocyclic group may be condensed with an aliphatic ring, aromatic ring or other heterocyclic ring. The heterocyclic group is preferably a 5-membered or 6-membered heterocyclic group. Examples of the substituent include aliphatic groups, halogen atoms, alkylsulfonyl groups, arylsulfonyl groups, acyl groups, acylamino groups, sulfamoyl groups, carbamoyl groups, and ionic hydrophilic groups. Examples of the heterocyclic group include 2-pyridyl group, 2-thienyl group, 2-thiazolyl group, 2-benzothiazolyl group, 2-benzooxazolyl group, and 2-furyl group.

Examples of the alkylsulfonyl group and the arylsulfonyl group include methanesulfonyl group and phenylsulfonyl group, respectively.

Examples of the alkylsulfinyl group and the arylsulfinyl group include methanesulfinyl group and phenylsulfinyl group, respectively.

The acyl group includes substituted and unsubstituted acyl groups. The acyl group is preferably an acyl group with one to 12 carbon atoms. Examples of the substituent include ionic hydrophilic groups. Examples of the acyl group include acetyl group and benzoyl group.

The amino group includes those substituted with an alkyl group, an aryl group or a heterocyclic group. - The alkyl group, the aryl group and the heterocyclic group may contain a substituent. Here the amino group never includes an unsubstituted amino group. Examples of the alkylamino group includ alkylamino groups with one to 6 carbon atoms. Examples of the substituent include ionic hydrophilic groups. Examples of the alkylamino group include methylamino group and diethylamino group.

The arylamino group includes substituted and unsubstituted arylamino groups. The arylamino group is preferably an arylamino group with 6 to 12 carbon atoms. Examples of the substituent include halogen atoms, and ionic hydrophilic groups. Examples of the arylamino group include anilino group and 2-chloroanilino group.

The alkoxyl group includes substituted and unsubstituted alkoxyl groups. The alkoxyl group is preferably an alkoxyl group with one to 12 carbon atoms. Examples of the substituent include alkoxyl groups, a hydroxyl group, and ionic hydrophilic groups. Examples of the alkoxyl group include methoxy group, ethoxy group, isopropoxy group, methoxyethoxy group, hydroxyethoxy group and 3-carboxypropoxy group.

The aryloxy group includes substituted and unsubstituted aryloxy groups. The aryloxy group is preferably an aryloxy group with 6 to 12 carbon atoms. Examples of the substituent include alkoxyl groups, and ionic hydrophilic groups. Examples of the aryloxy group include phenoxy group, p-methoxyphenoxy group and o-methoxyphenoxy group.

The acylamino group includes acylamino groups with a substituent. The acylamino group is preferably an acylamino group with 2 to 12 carbon atoms. Examples of the substituent include ionic hydrophilic groups. Examples of the acylamino group include acetylamino group, propionylamino group, benzoylamino group, N-phenylacetylamino and 3,5-disulfobenzoylamino group.

The ureido group includes substituted and unsubstituted ureido groups. The ureido group is preferably an ureido group with one to 12 carbon atoms. Examples of the substituent include alkyl groups and aryl groups. Examples of the ureido group include 3-methylureido group, 3,3-dimethylureido group and 3-phenylureido group.

The sulfamoylamino group includes substituted and unsubstituted sulfamoylamino groups. Examples of the substituent include alkyl groups. Examples of the sulfamoylamino group include N,N-dipropylsulfamoylamino group.

The alkoxycarbonylamino group includes substituted and unsubstituted alkoxycarbonylamino - groups. The alkoxycarbonylamino group is preferably an alkoxycarbonylamino group with 2 to 12 carbon atoms. Examples of the substituent include ionic hydrophilic groups. Examples of the alkoxycarbonylamino group include ethoxycarbonylamino group.

The alkylsulfonylamino group and the arylsulfonylamino group include substituted and unsubstituted alkylsulfonylamino groups and substituted and unsubstituted arylsulfonylamino groups. The alkyl- and arylsulfonylamino groups are preferably alkyl- and arylsulfonylamino groups with one to 12 carbon atoms. Examples of the substituent include ionic hydrophilic groups. Examples of the alkyl- and aryl-sulfonylamino groups include methanesulfonylamino group, N-phenylmethanesulfonylamino group, benzenesulfonylamino group, and 3-carboxybenzenesulfonylamino group.

The carbamoyl group includes substituted and unsubstituted carbamoyl groups. Examples of the substituent include alkyl groups. Examples of the carbamoyl group include methylcarbamoyl group and dimethylcarbamoyl group.

The sulfamoyl group includes substituted and unsubstituted sulfamoyl groups. Examples of the substituent include alkyl groups. Examples of the sulfamoyl group include dimethylsulfamoyl group and di-(2-hydroxyethyl)sulfamoyl group.

The alkoxycarbonyl group includes substituted and unsubstituted alkoxycarbonyl groups. The alkoxycarbonyl

group is preferably an alkoxycarbonyl group with 2 to 12 carbon atoms. Examples of the substituent include ionic hydrophilic groups. Examples of the alkoxycarbonyl group include methoxycarbonyl group and ethoxycarbonyl group.

The acyloxy group includes substituted and unsubstituted acyloxy groups. The acyloxy group is preferably an acyloxy group with one to 12 carbon atoms. Examples of the substituent include ionic hydrophilic groups. Examples of the acyloxy group include acetoxy group and benzoyloxy group.

The carbamoyloxy group includes substituted and unsubstituted carbamoyloxy groups. Examples of the substituent include alkyl groups. Examples of the carbamoyloxy group include N-methylcarbamoyloxy group.

The aryloxycarbonyl group includes substituted and unsubstituted aryloxycarbonyl groups. The aryloxycarbonyl group is preferably an aryloxycarbonyl group with 7 to 12 carbon atoms. Examples of the substituent include ionic hydrophilic groups. Examples of the aryloxycarbonyl group include phenoxycarbonyl group.

The aryloxycarbonylamino group includes substituted and unsubstituted aryloxycarbonylamino groups. The aryloxycarbonylamino group is preferably an aryloxycarbonylamino group with 7 to 12 carbon atoms. Examples of the substituent include ionic hydrophilic groups. Examples of the aryloxycarbonylamino group include phenoxycarbonylamino group.

The alkyl-, aryl- and heterocyclic thio groups include substituted and unsubstituted alkyl-, aryl- and heterocyclic thio groups. The alkyl-, aryl- and heterocyclic thio groups preferably contain one to 12 carbon atoms. Examples of the substituent include ionic hydrophilic groups. Examples of the alkyl-, aryl- and heterocyclic thio groups include methylthio group, phenylthio group, and 2-pyridylthio group.

In the invention, the azo dye particularly preferably is a compound represented by the following general formula M-II.

General formula M-II

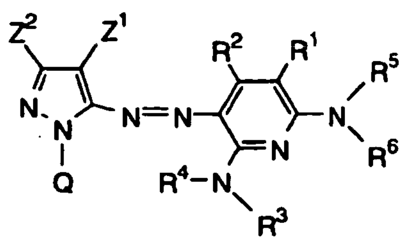

In the general formula M-II, $Z^1$ represents an electron attractive group having the Hammett's substituent constant $\sigma p$ of 0.20 or more. $Z^1$ is preferably an electron attractive group with $\sigma p$ of 0.30 to 1.0. Preferable specific substituents include the electron attractive substituents described later. Among them, preferable is an acyl group with 2 to 12 carbon atoms, an alkyloxycarbonyl group with 2 to 12 carbon atoms, a nitro group, a cyano group, an alkylsulfonyl group with one to 12 carbon atoms, an arylsulfonyl group with 6 to 18 carbon atoms, carbamoyl group with one to 12 carbon atoms, and a halogenated alkyl group with one to 12 carbon atoms. Particularly preferably, the substituents are a cyano group, an alkylsulfonyl group with one to 12 carbon atoms, and an arylsulfonyl group with 6 to 18 carbon atoms. A cyano group is the most preferable.

$R^1$, $R^2$, $R^5$ and $R^6$ have the same meanings as in the general formula M-I.

$R^3$ and $R^4$ independently represent a hydrogen atom, an aliphatic group, an aromatic group, a heterocyclic group, an acyl group, an alkoxycarbonyl group, an aryloxycarbonyl group, a carbamoyl group, an alkylsulfonyl group, an arylsulfonyl group, or a sulfamoyl group. Among them, preferable is a hydrogen atom, an aromatic group, a heterocyclic group, an acyl group, an alkylsulfonyl group, and an arylsulfonyl group. A hydrogen atom, an aromatic group and a heterocyclic group are particularly preferable.

$Z^2$ represents a hydrogen atom, an aliphatic group, an aromatic group or a heterocyclic group.

Q represents a hydrogen atom, an aliphatic group, an aromatic group or a heterocyclic group. Among them, Q is preferably a group composed of non-metal atoms required for the formation of 5-membered to 8-membered rings. The 5-membered to 8-membered rings may be substituted or unsubstituted or may be a saturated ring or may have an unsaturated bond. Among them, Q is preferably an aromatic group or a heterocyclic group. The non-metal atom is preferably a nitrogen atom, an oxygen atom, a sulfur atom or a carbon atom. Specific examples of the 5-membered to 8-membered rings include a benzene ring, a cyclopentane ring, a cyclohexane ring, a cycloheptane ring, a cyclooctane ring, a cyclohexene ring, a pyridine ring, a pyrimidine ring, a pyrazine ring, a pyridazine ring, a triazine ring, an imidazole ring, a benzimidazole ring, an oxazole ring, a benzooxazole ring, a thiazole ring, a benzothiazole ring, an oxane ring, a

sulfolane ring and a thian ring.

The groups of the general formula M-II may contain a substituent. In case where these groups further contain a substituent, the substituent is preferably any of the substituents exemplified in the descriptions of the general formula M-I, the groups exemplified for G, $R^1$ and $R^2$ and ionic hydrophilic groups.

Herein, the Hammett substituent constant $\sigma_p$ used in relation to the substituent $Z^1$ in the present specification is now described.

The Hammett's rule is an empirical rule proposed by L. P. Hammett in 1935 so as to discuss the influence of a substituent on the reaction or equilibrium of benzene derivatives. The Hammett's rule is widely regarded as reasonable today. The substituent constants determined by the Hammett's rule include σp and σm. The values thereof can be found in numerous general textbooks. For example, "Lange's Handbook of Chemistry", the 12th edition, 1979, edited by J.A Dean, (McGraw-Hill) and "Chemical Field (Kagakunoryoiki)", supplementary edition, Vol. 122, pages 96 to 103, 1979 (Nankodo) describe the values in detail. In the invention, substituents are limited or described with reference to the Hammett's substituent constant σp. This does not mean that substituents in the invention are limited to those with known values described in the general text books. This means that substituents whose substituent constants are not disclosed in references but are within the above-described range when measured on the basis of the Hammett's rule are also included.

Further, substituents which are not benzene derivatives are included in the general formulas M-I and M-II. σp is used as the measure of the electron effect of a substituent despite the substituted position. Thus, in the invention, σp value is used as such meaning.

Examples of electron attractive groups having a Hammett's substituent constant σp of above 0.60 or more include a cyano group, a nitro group, an alkylsulfonyl group (for example, methanesulfonyl group) , and an arylsulfonyl group (for example, benzenesulfonyl group).

Examples of electron attractive groups having a Hammett's substituent constant σp of 0.45 or more include those described above, an acyl group (for example, acetyl group), an alkoxycarbonyl group (for example, dodecyloxycarbonyl group), an aryloxycarbonyl group (for example, m-chlorophenoxycarbonyl), an alkylsulfinyl group (for example, n-propylsulfinyl), an arylsulfinyl group (for example, phenylsulfinyl), a sulfamoyl group (for example, N-ethylsulfamoyl, N, N-dimethylsulfamoyl), and a halogenated alkyl group (for example, trifluoromethyl).

Examples of electron attractive groups having a Hammett's substituent constant σp of 0.30 or more include those described above, an acyloxy group (for example, acetoxy group), a carbamoyl group (for example, N-ethylcarbamoyl, N, N-dibutylcarbamoyl), a halogenated alkoxyl group (for example, trifluoromethyloxy), a halogenated aryloxy group (for example, pentafluorophenyloxy), a sulfonyloxy group (for example, methylsulfonyloxy group), a halogenated alkylthio group (for example, difluoromethylthio), an aryl group substituted with two or more electron attractive groups_ having σp of 0.15 or more (for example, 2,4-dinitrophenyl, pentachlorophenyl), and aheteroring (for example, 2-benzooxazolyl, 2-benzothiazolyl, 1-phenyl-2-benzimidazolyl).

Examples of electron attractive groups having σp of 0.20 or more include those described above and halogen atoms.

Combinations of particularly preferable substituents for the compound represented by the general formula M-I are shown below.

A. Independently, $R^5$ and $R^6$ are preferably a hydrogen atom, an alkyl group, an aryl group, a heterocyclic group, a sulfonyl group and an acyl group, more preferably a hydrogen atom, an aryl group, a heterocyclic group, and a sulfonyl group, and most preferably a hydrogen atom, an aryl group and a heterocyclic group, provided that $R^5$ and $R^6$ are not simultaneously hydrogen atoms.

B. G is preferably a hydrogen atom, a halogen atom, an alkyl group, a hydroxyl group, an amino group and an amide group, more preferably a hydrogen atom, a halogen atom, an amino group and an amide group, and most preferably a hydrogen atom, an amino group and an amide group.

C. A is preferably a pyrazole ring, an imidazole ring, an isothiazole ring, a thiadiazole ring and a benzothiazole ring, more preferably a pyrazole ring and an isothiazole ring, and most preferably a pyrazole ring.

D. $B^1$ and $B^2$ represent $=CR^1$- and $-CR^2=$ respectively. Additionally, these $R^1$ and $R^2$ independently and preferably represent a hydrogen atom, a halogen atom, a cyano group, a carbamoyl group, a carboxyl group, an alkyl group, a hydroxyl group, and an alkoxyl group, and more preferably a hydrogen atom, a cyano group, a carbamoyl group and an alkoxyl group.

Concerning combinations of preferable substituents for the compound represented by the general formula M-I, preferably, at least one of various substituents in the compound is selected from the preferable groups. More preferably, more substituents in the compound are selected from the preferable groups. Most preferably, all the substituents in the compound are selected from the preferable groups.

Exemplified compounds (a-1 to a-27, b-1 to b-6, c-1 to c-3, d-1 to d-4, e-1 to e-4) of the compound represented

by the general formula M-I are shown below. But the invention is not limited to the following examples.

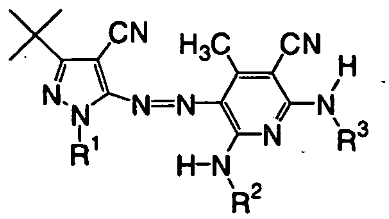

| Dye | $R^1$ | $R^2$ | $R^3$ |
|---|---|---|---|
| a-1 | 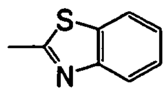 | 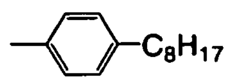 | 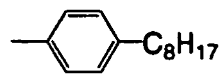 |
| a-2 | 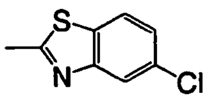 | 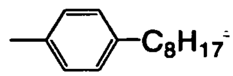 | 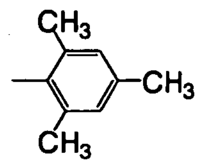 |
| a-3 | 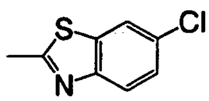 | 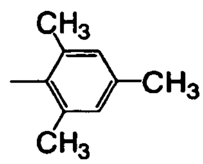 | 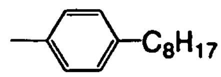 |
| a-4 | 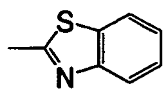 | 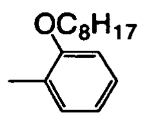 | 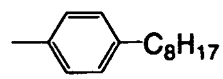 |
| a-5 | 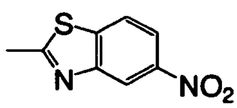 | 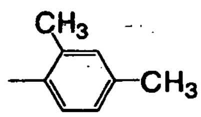 | 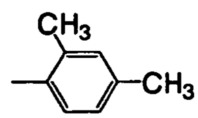 |
| a-6 | 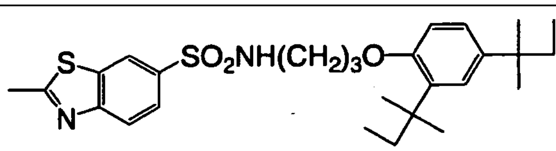 | 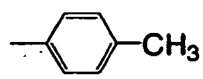 | 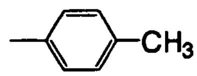 |
| a-7 | 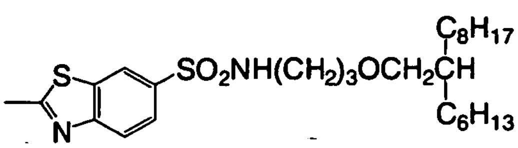 | 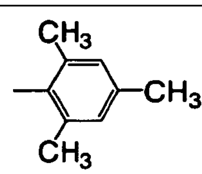 | 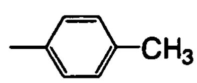 |
| a-8 | 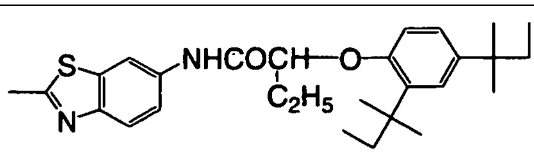 | 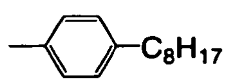 | 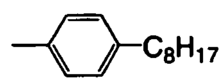 |

(continued)

| Dye | $R^1$ | $R^2$ | $R^3$ |
|---|---|---|---|
| a-9 | 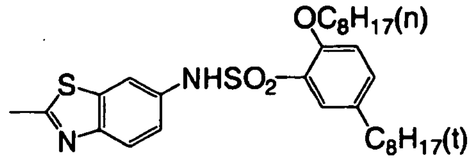 | 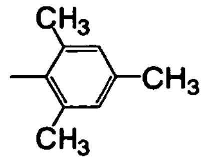 | $C_8H_{17}(t)$ |
| a-10 | 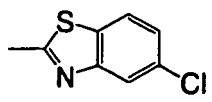 | 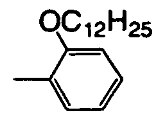 | 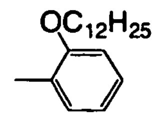 |

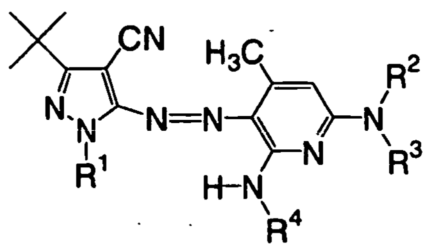

| Dye | $R^1$ | $R^2$ | $R^3$ | $R^4$ |
|---|---|---|---|---|
| a-11 | 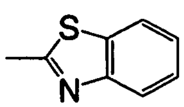 | 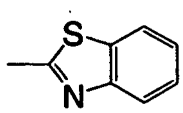 | 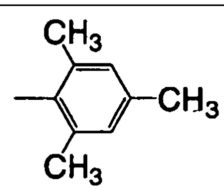 | 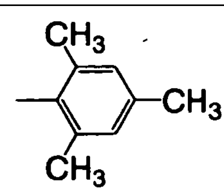 |
| a-12 | 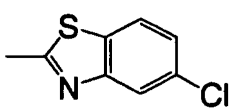 | $SO_2CH_3$ | 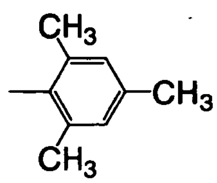 | 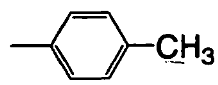 |
| a-13 | 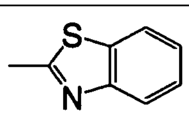 | $COCH_3$ | $C_8H_{17}(t)$ | $C_8H_{17}(t)$ |
| a-14 | 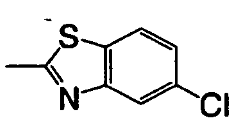 | 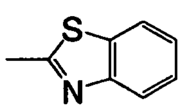 | 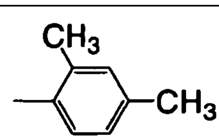 | 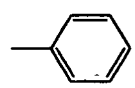 |
| a=15 | 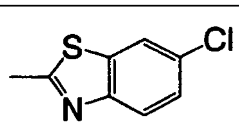 | $SO_2CH_3$ | 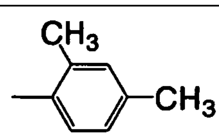 | $C_8H_{17}(t)$ |

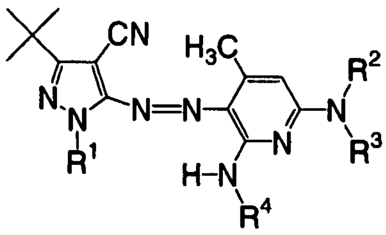

| Dye | $R^1$ | $R^2$ | $R^3$ | $R^4$ |
|---|---|---|---|---|
| a-16 | 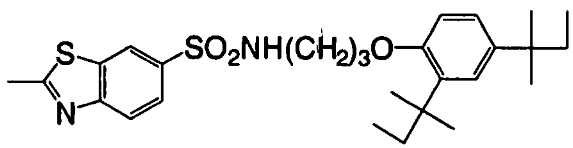 | 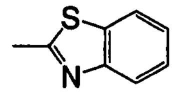 | 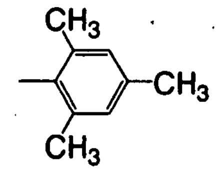 | 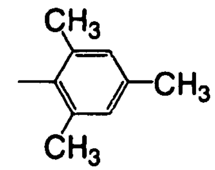 |
| a-17 | 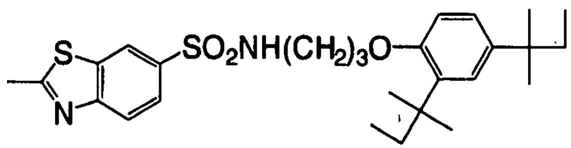 | 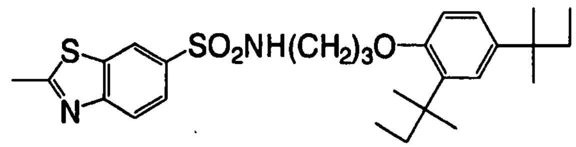 | 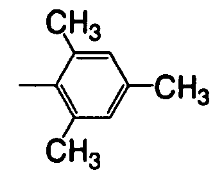 | 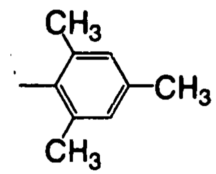 |
| a-18 | 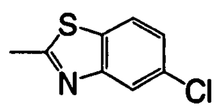 | 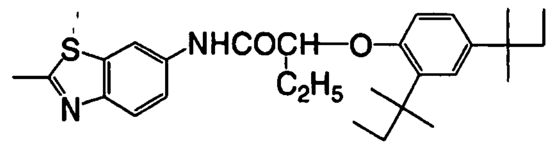 | 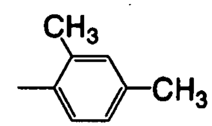 | 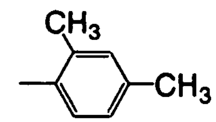 |
| a-19 | 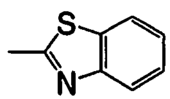 | 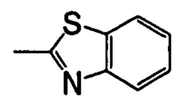 | 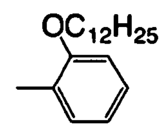 | 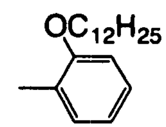 |
| a-20 | 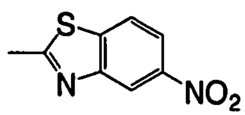 | 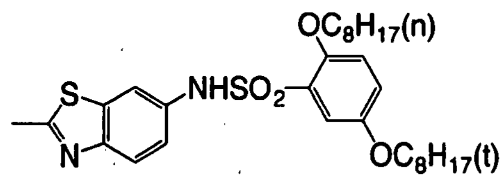 | 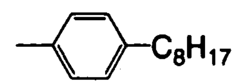 | $C_8H_{17}(t)$ |

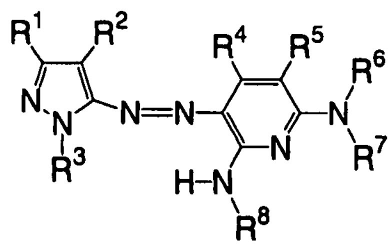

| Dye | $R^1$ | $R^2$ | $R^3$ | $R^4$ | $R^5$ | $R^6$ | $R^7$ | $R^8$ |
|---|---|---|---|---|---|---|---|---|
| a-21 | 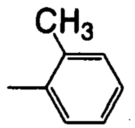 | CN | 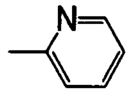 | H | $CONH_2$ | $SO_2CH_3$ | 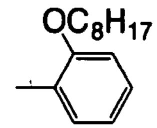 | 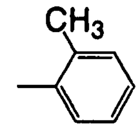 |
| a-22 | 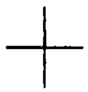 | Br | 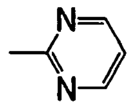 | $COOC_2H_5$ | H | 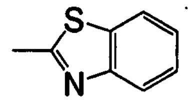 | $C_8H_{17}(t)$ | $COCH_3$ |
| a-23 | 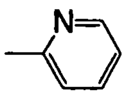 | $SO_2CH_3$ | 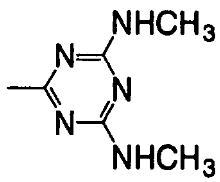 | $CONH_2$ | H | 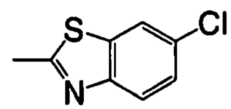 | 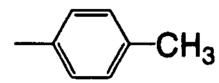 | 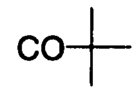 |
| a-24 | 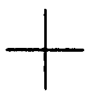 | CN | 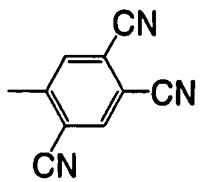 | H | H | 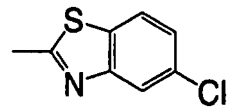 | 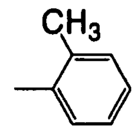 | $SO_2CH_3$ |

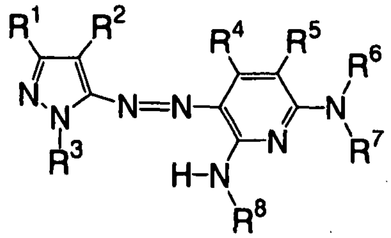

| Dye | $R^1$ | $R^2$ | $R^3$ | $R^4$ | $R^5$ | $R^6$ | $R^7$ | $R^8$ |
|---|---|---|---|---|---|---|---|---|
| a-25 | 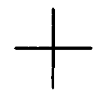 | Br | 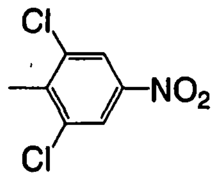 | H | $CONH_2$ | $COCH_3$ | 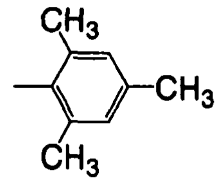 | 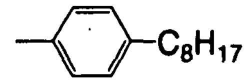 |
| a-26 | 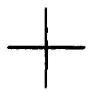 | CN | 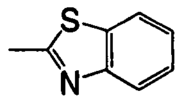 | $CH_3$ | H | 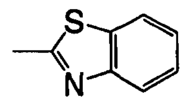 | 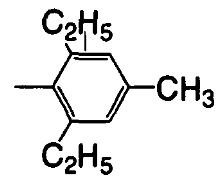 | 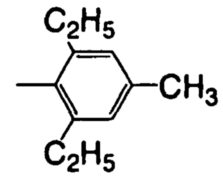 |
| a-27 | 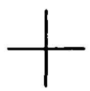 | CN | 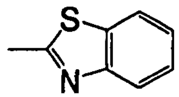 | $CH_3$ | CN | H | 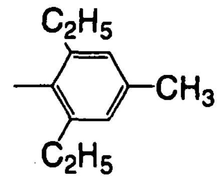 | 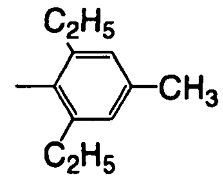 |

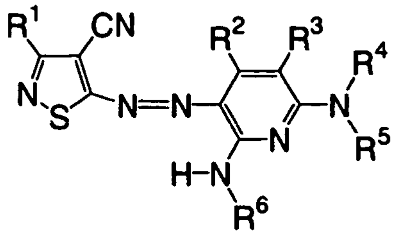

| Dye | $R^1$ | $R^2$ | $R^3$ | $R^4$ | $R^5$ | $R^6$ |
|---|---|---|---|---|---|---|
| b-1 | $CH_3$ | $CH_3$ | CN | H | 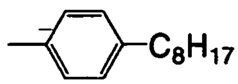 | 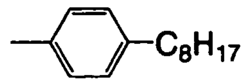 |
| b-2 | $CH_3$ | $CH_3$ | CN | H | 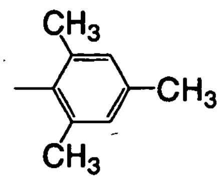 | 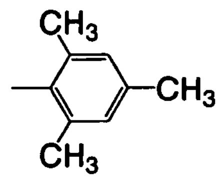 |
| b-3 | $CH_3$ | $CH_3$ | $CONH_2$ | H | 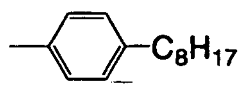 | 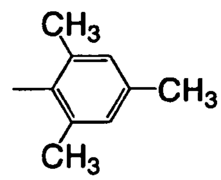 |
| b-4 | $CH_3$ | $CH_3$ | H | H | 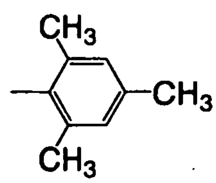 | 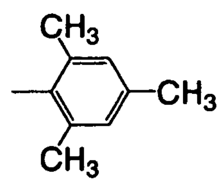 |
| b-5 | $CH_3$ | $CH_3$ | H | 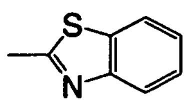 | 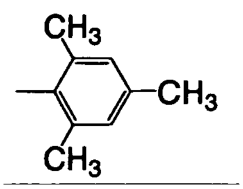 | 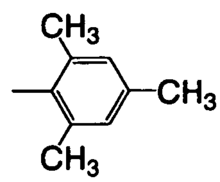 |
| b-6 | $CH_3$ | $CH_3$ | H | 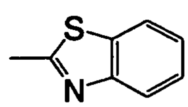 | 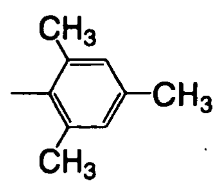 | 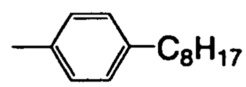 |

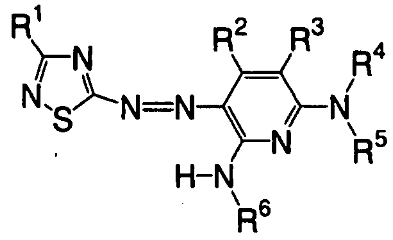

| Dye | $R^1$ | $R^2$ | $R^3$ | $R^4$ | $R^5$ | $R^6$ |
|---|---|---|---|---|---|---|
| c-1 | $SCH_3$ | $CH_3$ | CN | H | $C_8H_{17}(t)$ | 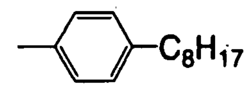 |
| c-2 | $CH_3$ | $CH_3$ | H | 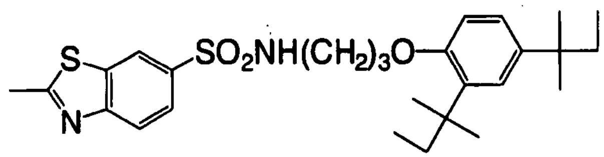 | 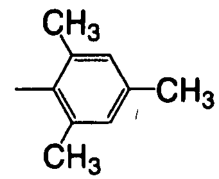 | 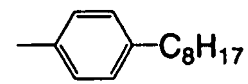 |
| c-3 | 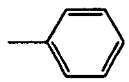 | H | H | 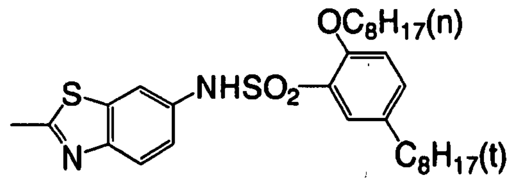 | 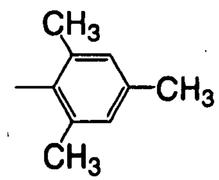 | $C_8H_{17}(t)$ |

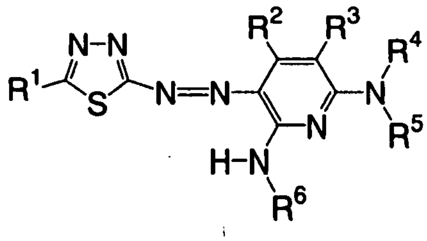

| Dye | $R^1$ | $R^2$ | $R^3$ | $R^4$ | $R^5$ | $R^6$ |
|---|---|---|---|---|---|---|
| d-1 | $CH_3$ | $CH_3$ | CN | H | 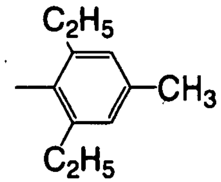 | 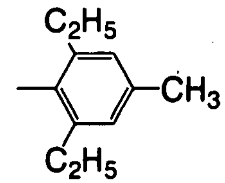 |
| d-2 | $CH_3$ | H | H | 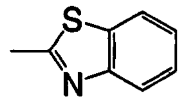 | 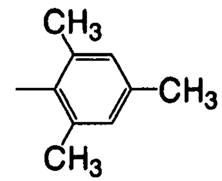 | 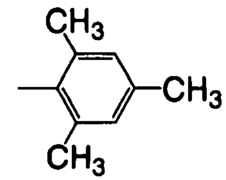 |
| d-3 | 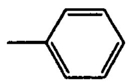 | $CH_3$ | $CONH_2$ | H | 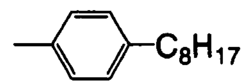 | 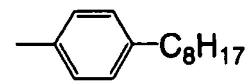 |
| d-4 | 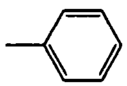 | $CH_3$ | H | 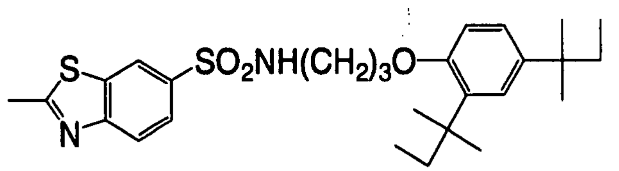 | 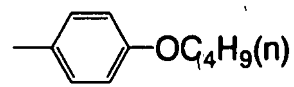 | 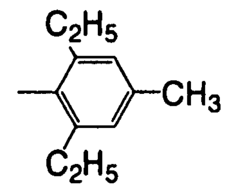 |

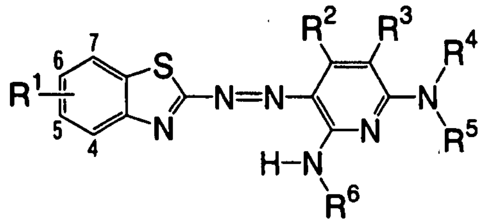

| Dye | $R^1$ | $R^2$ | $R^3$ | $R^4$ | $R^5$ | $R^6$ |
|---|---|---|---|---|---|---|
| e-1 | 5-Cl | $CH_3$ | $CONH_2$ | H | $C_8H_{17}(t)$ | $C_8H_{17}(t)$ |
| e-2 | 5,6-diCl | H | H | 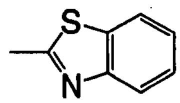 | 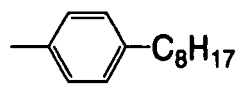 | 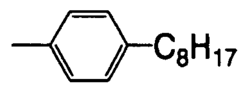 |
| e-3 | 5,6-diCl | $CH_3$ | H | 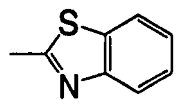 | 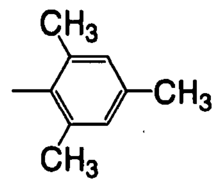 | $COCH_3$ |
| e-4 | 5-$NO_2$ | $CH_3$ | H | $SO_2CH_3$ | 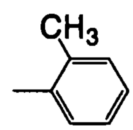 | 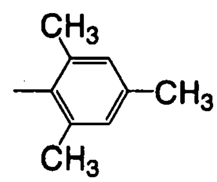 |

The compound represented by the following general formula C-I is preferably used as the oil-soluble dye (sometimes referred to as "phthalocyanine dye" hereinbelow) . The compound represented by the general formula C-I is described below.

General formula C-I

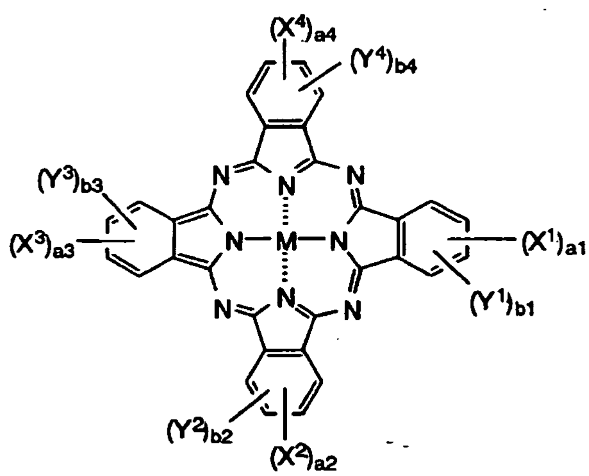

In the general formula C-I, $X^1$, $X^2$, $X^3$ and $X^4$ independently represent -SO-$Z^1$, -$SO_2$-$Z^1$, or -$SO_3NR^{21}R^{22}$.

$Z^1$ represents a substituted or unsubstituted alkyl group, a substituted or unsubstituted cycloalkyl group, a substituted or unsubstituted alkenyl group, a substituted or unsubstituted aralkyl group, a substituted or unsubstituted aryl group, a substituted or unsubstituted heterocyclic group, and particularly preferably represents a substituted or unsubstituted alkyl group, a substituted or unsubstituted aryl group, a substituted or unsubstituted heterocyclic group. Among them, a substituted alkyl group, a substituted aryl group and a substituted heterocyclic group are the most preferable.

$R^{21}$ and $R^{22}$ independently represent a hydrogen atom, a substituted or unsubstituted alkyl group, a substituted or unsubstituted cycloalkyl group, a substituted or unsubstituted alkenyl group, a substituted or unsubstituted aralkyl group, a substituted or unsubstituted aryl group, a substituted or unsubstituted heterocyclic group, and particularly preferably represent a hydrogen atom, a substituted or unsubstituted alkyl group, a substituted or unsubstituted aryl group, and a substituted or unsubstituted heterocyclic group. Among them, a hydrogen atom, a substituted alkyl group, a substituted aryl group and a substituted heterocyclic group are the most preferable. However, $R^{21}$ and $R^{22}$ are not simultaneously hydrogen atoms.

The substituted or unsubstituted alkyl group represented by $R^{21}$, $R^{22}$ and $Z^1$ is preferably an alkyl group with one to 30 carbon atoms. Examples of the substituent include the same substituents described below for $Z^1$ $R^{21}$, $R^{22}$, $Y^1$, $Y^2$, $Y^3$, and $Y^4$ when they can have a substituent. Among them, preferable is a hydroxyl group, an alkoxyl group, a cyano group and a halogen atom.

The substituted or unsubstituted cycloalkyl group represented by $R^{21}$, $R^{22}$ and $Z^1$ is preferably a cycloalkyl group with 5 to 30 carbon atoms. Examples of the substituent include the same substituents described below for $Z^1$ $R^{21}$, $R^{22}$, $Y^1$, $Y^2$, $Y^3$, and $Y^4$ when they can have a substituent. Among them, preferable is a hydroxyl group, an alkoxyl group, a cyano group and a halogen atom.

The substituted or unsubstituted alkenyl group represented by $R^{21}$, $R^{22}$ and $Z^1$ is preferably an alkenyl group with 2 to 30 carbon atoms. Examples of the substituent include the same substituents described below for $Z^1$ $R^{21}$, $R^{22}$, $Y^1$, $Y^2$, $Y^3$, and $Y^4$ when they can have a substituent. Among them, preferable is a hydroxyl group, an alkoxyl group, a cyano group and a halogen atom.

The substituted or unsubstituted aralkyl group represented by $R^{21}$, $R^{22}$ and $Z^1$ is preferably an aralkyl group with 7 to 30 carbon atoms. Examples of the substituent include the same substituents described below for $Z^1$ $R^{21}$, $R^{22}$, $Y^1$, $Y^2$, $Y^3$, and $Y^4$ when they can have a substituent. Among them, preferable is a hydroxyl group, an alkoxyl group, a cyano group and a halogen atom.

The substituent of aryl group as represented by $R^{21}$ $R^{22}$ and $Z^1$ includes the same substituents described below for $Z^1$ $R^{21}$, $R^{22}$, $Y^1$, $Y^2$, $Y^3$, and $Y^4$ when they can have a substituent. Examples thereof include a halogen atom, a heterocyclic group, a cyano group, a hydroxyl group, a nitro group, a carboxyl group, an acylamino group, an ureido group, a sulfamoylamino group, an alkyloxycarbonyl group, an alkyloxycarbonylamino group, a sulfoneamide group, a sulfamoyl group, a carbamoyl group, a sulfonyl group, an acyloxy group, a carbamoyloxy group, an imide group, a heterocyclic thio group, an acyl group, a sulfo group, a quaternary ammonium group. Among them, a heterocyclic group, a cyano group, a carboxyl group, an acylamino group, a sulfoneamide group, a sulfamoyl group, a carbamoyl group, a sulfonyl group, an imide group, and acyl group are preferable. A cyano group, a carboxyl group, a sulfamoyl group, a carbamoyl group, a sulfonyl group, an imide group, and an acyl group are more preferable.

The heterocyclic group represented by $R^{21}$, $R^{22}$ and $Z^1$ is preferably a 5-membered or 6-membered heterocyclic group, which may be condensed. Furthermore, the heterocyclic group may be an aromatic hetero ring or a non-aromatic hetero ring.

The heterocyclic group represented by $R^{21}$, $R^{22}$ and $Z^1$ is now exemplified below in the form of hetero ring, while a substituent position is not described. However, the the substituent position is not limited. For example, pyridine may be substituted at 2, 3 or 4-position.

Examples of the heterocyclic ring include pyridine, pyrazine, pyrimidine, pyridazine, triazine, quinoline, isoquinoline, quinazoline, cinnoline, phthalazine, quinoxaline, pyrrole, indole, furan, benzofuran, thiophene, benzothiophene, pyrazole, imidazole, benzimidazole, triazole, oxazole, benzooxazole, thiazole, benzothiazole, isothiazole, benzisothiazole, thiadiazole, isooxazole, benzoisooxazole, pyrrolidine, piperidine, piperazine, imidazolidine, and thiazoline. Among them, aromatic heterocyclic groups are preferable. Preferable examples thereof are (exemplified in the form of ring) include pyridine, pyrazine, pyrimidine, pyridazine, triazine, pyrazole, imidazole, benzimidazole, triazole, thiazole, benzothiazole, isothiazole, benzisothiazole, and thiadiazole. These may have a substituent.

$Y^1$, $Y^2$, $Y^3$ and $Y^4$ independently represent a hydrogen atom, a halogen atom, an alkyl group, a cycloalkyl group, an alkenyl group, an aralkyl group, an aryl group, a heterocyclic group, a cyano group, a hydroxyl group, a nitro group, an amino group, an alkylamino group, an alkoxyl group, an aryloxy group, an amide group, an arylamino group, an ureido group, a sulfamoylamino group, an alkylthio group, an arylthio group, an alkoxycarbonylamino group, a sulfoneamide group, a carbamoyl group, a sulfamoyl group, a sulfonyl group, an alkoxycarbonyl group, a heterocyclic oxy group, an azo group, an acyloxy group, a carbamoyloxy group, a silyloxy group, an aryloxycarbonyl group, an aryloxycarbonylamino group, an imide group, a heterocyclic thio group, a phosphoryl group, an acyl group, a carboxyl group

or a sulfo group. Further, these groups may have a substituent.

Among them, preferable is a hydrogen atom, a halogen atom, an alkyl group, an aryl group, a cyano group, an alkoxyl group, an amide group, an ureido group, a sulfoneamide group, a carbamoyl group, a sulfamoyl group, and an alkoxycarbonyl group. A hydrogen atom, a halogen atom and a cyano group are more preferable. A hydrogen atom is the most preferable.

When $Z^1$, $R^{21}$, $R^{22}$, $Y^1$, $Y^2$, $Y^3$ and $Y^4$ are groups which can contain a substituent, these groups may have a substituent listed below.

Examples of the substituent include halogen atoms (for example, a chlorine atom, a bromine atom) ; linear or branched alkyl groups with one to 30 carbon atoms, aralkyl groups with 7 to 30 carbon atoms, alkenyl groups with 2 to 30 carbon atoms, linear or branched alkynyl groups with 2 to 30 carbon atoms, linear or branched cycloalkyl groups with 3 to 30 carbon atoms, linear or branched cycloalkenyl groups with 3 to 30 carbon atoms (for example, methyl, ethyl, propyl, isopropyl, t-butyl, 2-methanesulfonylethyl, 3-phenoxypropyl, trifluoromethyl, cyclopentyl); aryl groups (for example, phenyl, 4-t-butylphenyl, 2,4-di-t-amylphenyl); heterocyclic groups (for example, imidazolyl, pyrazolyl, triazolyl, 2-furyl, 2-thienyl, 2-pyrimidinyl, 2-benzothiazolyl); cyano groups; hydroxyl groups; nitro groups; carboxyl groups; amino groups; alkyloxy groups (for example, methoxy, ethoxy, 2-methoxyethoxy, 2-methanesulfonylethoxy) ; aryloxy groups (for example, phenoxy, 2-methylphenoxy, 4-t-butylphenoxy, 3-nitrophenoxy, 3-t-butyloxycarbamoylphenoxy, 3-methoxycarbamoyl); acylamino groups (for example, acetamide, benzamide, 4-(3-t-butyl-4-hydroxyphenoxy)butaneamide); alkylamino groups (for example, methylamino, butylamino, diethylamino, methylbutylamino); anilino groups (for example, phenylamino, 2-chloroanilino); ureido groups (for example, phenylureido, methylureido, N,N-dibutylureido); sulfamoylamino groups (for example, N,N-dipropylsulfamoylamino); alkylthio groups (for example, methylthio, octylthio, 2-phenoxyethylthio); arylthio groups (for example, phenylthio, 2-butoxy-5-t-octylphenylthio, 2-carboxyphenylthio); alkyloxycarbonylamino groups (for example, methoxycarbonylamino); sulfoneamide groups (for example, methanesulfoneamide, benzenesulfoneamide, p-toluenesulfoneamide); carbamoyl groups (for example, N-ethylcarbamoyl, N,N-dibutylcarbamoyl); sulfamoyl groups (for example, N-ethylsulfamoyl, N,N-dipropylsulfamoyl, N-phenylsulfamoyl); sulfonyl groups (for example, methanesulfonyl, octanesulfonyl, benzenesulfonyl, toluenesulfonyl); alkyloxycarbonyl groups (for example, methoxycarbonyl, butyloxycarbonyl); heterocyclic oxy groups (for example, 1-phenyltetrazole-5-oxy, 2-tetrahydropyranyloxy); azo groups (for example, phenylazo, 4-methoxyphenylazo, 4-pyvaloylaminophenylazo, 2-hydroxy-4-propanoylphenylazo); acyloxy groups (for example, acetoxy); carbamoyloxy groups (for example, N-methylcarbamoyloxy, N-phenylcarbamoyloxy); silyloxy groups (for example, trimethylsilyloxy, dibutylmethylsilyloxy); aryloxycarbonylamino groups (for example, phenoxycarbonylamino); imide groups (for example, N-succinimide, N-phthalimide); heterocyclic thio groups (for example, 2-benzothiazolylthio, 2,4-di-phenoxy-1,3,5-triazole-6-thio, 2-pyridylthio); sulfinyl groups (for example, 3-phenoxypropylsulfinyl); phosphonyl groups (for example, phenoxyphosphonyl, octyloxyphosphonyl, phenylphosphonyl); aryloxycarbonyl groups (for example, phenoxycarbonyl); acyl groups (for example, acetyl, 3-phenylpropanoyl, benzoyl); and ionic hydrophilic groups (for example, a carboxyl group, a sulfo group, and a quaternary ammonium group).

$a^1$ to $a^4$ and $b^1$ to $b^4$ independently represent the numbers of substituents for $X^1$ to $X^4$ and $Y^1$ to $Y^4$, respectively. $a^1$ to $a^4$ independently represent an integer of 0 to 4, while $b^1$ to $b^4$ independently represent an integer of 0 to 4. Herein, the total sum of $a^1$ to $a^4$ is 2 or more. When $a^1$ to $a^4$ and $b^1$ to $b^4$ represent an integer of 2 or more, $X^1$ to $X^4$ and $Y^1$ to $Y^4$ may be the same or different.

$a^1$ and $b^1$ independently represent an integer of 0 to 4, provided that $a^1 + b^1 = 4$. A particularly preferable combination is $a^1$ representing 1 or 2 and $b^1$ representing 3 or 2. Among them, a combination of $a^1$ representing 1 and $b^1$ representing 3 is the most preferable.

$a^2$ and $b^2$ independently represent an integer of 0 to 4, provided that $a^2 + b^2 = 4$. A particularly preferable combination is $a^2$ representing 1 or 2 and $b^2$ representing 3 or 2. Among them, a combination of $a^2$ representing 1 and $b^2$ representing 3 is the most preferable.

$a^3$ and $b^3$ independently represent an integer of 0 to 4, provided that $a^3 + b^3 = 4$. A particularly preferable combination is $a^3$ representing 1 or 2 and $b^3$ representing 3 or 2. Among them, a combination of $a^3$ representing 1 and $b^3$ representing 3 is the most preferable.

$a^4$ and $b^4$ independently represent an integer of 0 to 4, provided that $a^4 + b^4 = 4$. A particularly preferable combination is $a^4$ representing 1 or 2 and $b^4$ representing 3 or 2. Among them, a combination of $a^4$ representing 1 and $b^4$ representing 3 is the most preferable.

M represents a hydrogen atom, a metal element or an oxide or a hydroxide thereof or a halogenated metal element.

Examples of M include a hydrogen atom, and a metal atom including Li, Na, K, Mg, Ti, Zr, V, Nb, Ta, Cr, Mo, W, Mn, Fe, Co, Ni, Ru, Rh, Pd, Os, Ir, Pt, Cu, Ag, Au, Zn, Cd, Hg, Al, Ga, In, Si, Ge, Sn, Pb, Sb, and Bi. The oxide may be VO and GeO. Further, examples of_the hydroxide include $Si(OH)_2$, $Cr(OH)_2$, and $Sn(OH)_2$. Still further, examples of the halogenated metal element include AlCl, $SiCl_2$, VCl, $VCl_2$, VOCl, FeCl, GaCl, and ZrCl. Among them, particularly, Cu, Ni, Zn and Al are preferable. Cu is the most preferable.

Pc (phthalocyanine ring) may form a dimer (for example, Pc-M-L-M-Pc) through L (divalent linking group), or trimer, where these M's may be the same or different.

The divalent linking group represented by L is preferably oxy group (-O-), thio group (-S-), carbonyl group (-CO-), sulfonyl group ($-SO_2-$), imino group (-NH-), or methylene group ($-CH_2-$).

For the compound represented by the general formula C-I, a particularly preferable combination is as follows.

$X^1$ to $X^4$ independently represent $-SO_2-Z^1$ or $-SO_2NR^{21}R^{22}$.

Preferably, $Z^1$ is independently a substituted or unsubstituted alkyl group, a substituted or unsubstituted aryl group, and a substituted or unsubstituted heterocyclic group. Among them, a substituted alkyl group, a substituted aryl group and a substituted heterocyclic group are the most preferable.

$R^{21}$ and $R^{22}$ independently represent a hydrogen atom, a substituted or unsubstituted alkyl group, a substituted or unsubstituted aryl group, and a substituted or unsubstituted heterocyclic group. Among them, a hydrogen atom, a substituted alkyl group, a substituted aryl group and a substituted heterocyclic group are the most preferable.

$Y^1$ to $Y^4$ are preferably a hydrogen atom, a halogen atom, an alkyl group, an aryl group, a cyano group, an alkoxyl group, an amide group, an ureido group, a sulfoneamide group, a carbamoyl group, a sulfamoyl group, an alkoxycarbonyl group, a carboxyl group, and a sulfo group. A hydrogen atom, a halogen atom, a cyano group, a carboxyl group, and a sulfo group are preferable. A hydrogen atom is the most preferable.

Preferably, $a^1$ to $a^4$ are independently 1 or 2, particularly 1. Preferably, $b^1$ to $b^4$ are independently 3 or 2, particularly 3.

M represents a hydrogen atom, a metal element or an oxide or a hydroxide thereof or a halogenated metal element.

Preferably, M is Cu, Ni, Zn and Al. In particular, Cu is the most preferable.

As to a combination of the preferable substituents for the compound represented by the general formula C-I, a compound with substituents at least one of which is selected from the preferable substituents is preferable. A compound with substituents many of which are selected from the preferable substituents is more preferable. A compound with all the substituents selected from the preferable substituents is the most preferable.

Among the compounds represented by the general formula C-I, a compound represented by the general formula C-II is more preferable.

General formula C-II

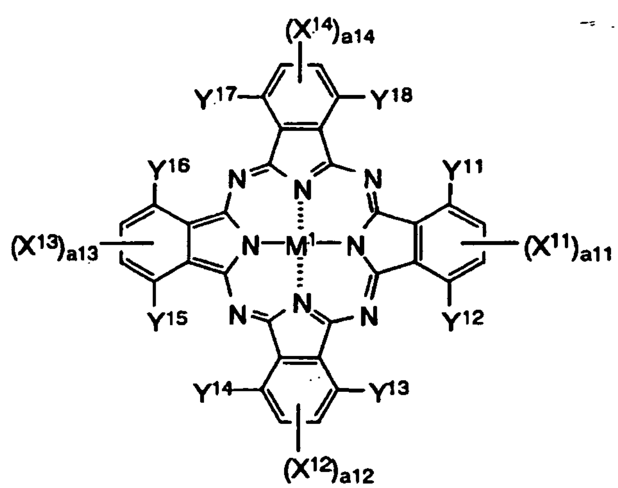

In the general formula C-II, $X^{11}$ to $X^{14}$ and $Y^{11}$ to $Y^{18}$ have the same meanings as those of $X^1$ to $X^4$ and $Y^1$ to $Y^4$ in the general formula C-I. Preferable examples thereof are the same as those for $X^1$ to $X^4$ and $Y^1$ to $Y^4$. Further, M1 has the same meaning as that of M in the general formula C-I. Preferable examples thereof are the same as those for M.

Specifically, $X^{11}$, $X^{12}$, $X^{13}$ and $X^{14}$ in the general formula C-II independently represent $-SO-Z^{11}$, $-SO_2-Z^{11}$ or $-SO_2NR^{23}R^{24}$.

$Z^{11}$ represents a substituted or unsubstituted alkyl group, a substituted or unsubstituted cycloalkyl group, a substituted or unsubstituted alkenyl group, a substituted or unsubstituted aralkyl group, a substituted or unsubstituted aryl group or a substituted or unsubstituted heterocyclic group.

$R^{23}$ represents a hydrogen atom, a substituted or unsubstituted alkyl group, a substituted or unsubstituted

cycloalkyl group, a substituted or unsubstituted alkenyl group, a substituted or unsubstituted aralkyl group, a substituted or unsubstituted aryl group or a substituted or unsubstituted heterocyclic group. $R^{24}$ represents a substituted or unsubstituted alkyl group, a substituted or unsubstituted cycloalkyl group, a substituted or unsubstituted alkenyl group, a substituted or unsubstituted aralkyl group, a substituted or unsubstituted aryl group or a substituted or unsubstituted heterocyclic group.

$Y^{11}$, $Y^{12}$, $Y^{13}$, $Y^{14}$, $Y^{15}$, $Y^{16}$, $Y^{17}$ and $Y^{18}$ independently represent a hydrogen atom, a halogen atom, an alkyl group, a cycloalkyl group, an alkenyl group, an aralkyl group, an aryl group, a heterocyclic group, a cyano group, a hydroxyl group, a nitro group, an amino group, an alkylamino group, an alkoxyl group, an aryloxy group, an amide group, an arylamino group, an ureido group, a sulfamoylamino group, an alkylthio group, an arylthio group, an alkoxycarbonylamino group, a sulfoneamide group, a carbamoyl group, an alkoxycarbonyl group, a heterocyclic oxy group, an azo group, an acyloxy group, a carbamoyloxy group, a silyloxy group, an aryloxycarbonyl group, an aryloxycarbonylamino group, an imide group, a heterocyclic thio group, a phosphoryl group, an acyl group, a carboxyl group or a sulfo group. Further, these groups may have a substituent.

$a^{11}$ to $a^{14}$ independently represent the numbers of substituents for $X^{11}$ to $X^{14}$, respectively. $a^{11}$ to $a^{14}$ independently represent an integer of 0 to 2, but are never simultaneously zero. When $a^{11}$ to $a^{14}$ represent 2, two of $X^{11}$s to $X^{14}$s may be the same or different.

$M^1$ is a hydrogen atom, a metal element or an oxide or a hydroxide thereof, or a halogenated metal element.

In the general formula C-II, preferably, $a^{11}$ to $a^{14}$ independently represent an integer of 1 or 2, within a range $4 \leq a^{11} + a^{12} + a^{13} + a^{14} \leq 8$, particularly $4 \leq a^{11} + a^{12} + a^{13} + a^{14} \leq 6$, particularly preferably $a^{11} = a^{12} = a^{13} = a^{14} = 1$.

Among the compounds represented by the general formula C-II, a particularly preferable combination of substituents is as follows.

Particularly preferably, $X^{11}$, $X^{12}$, $X^{13}$ and $X^{14}$ independently represent $SO_2$-$Z^{11}$ or $SO_2NR^{23}R^{24}$.

Independently, $Z^{11}$ represents preferably a substituted or unsubstituted alkyl group, a substituted or unsubstituted aryl group, a substituted or unsubstituted heterocyclic group, most preferably a substituted alkyl group, a substituted aryl group or a substituted heterocyclic group in particular.

$R^{23}$ preferably represents a hydrogen atom, a substituted or unsubstituted alkyl group, a substituted or unsubstituted aryl group, and a substituted or unsubstituted heterocyclic group, and more preferably represents a hydrogen atom, a substituted alkyl group, a substituted aryl group or a substituted heterocyclic group.

Independently, $R^{24}$ preferably represents a substituted or unsubstituted alkyl group or a substituted or unsubstituted aryl group, and a substituted or unsubstituted heterocyclic group. Among them, a substituted alkyl group, a substituted aryl group and a substituted heterocyclic group are the most preferable.

Independently, $Y^{11}$, $Y^{12}$, $Y^{13}$, $Y^{14}$, $Y^{15}$, $Y^{16}$, $Y^{17}$ and $Y^{18}$ preferably represent a hydrogen atom, a halogen atom, an alkyl group, an aryl group, a cyano group, an alkoxyl group, an amide group, an ureido group, a sulfoneamide group, a carbamoyl group, a sulfamoylgroup, and an alkoxycarbonyl group. In particular, a hydrogen atom, a halogen atom and a cyano group are preferable. A hydrogen atom is the most preferable.

$a^{11}$ to $a^{14}$ independently represent 1 or 2, preferably. Particularly preferably, all of $a^{11}$ to $a^{14}$ are 1.

M1 is a hydrogen atom, a metal element or an oxide or a hydroxide thereof, or a halogenated metal element. In particular, Cu, Ni, Zn and Al are preferable. Among them, Cu is the most preferable.

As to a combination of the preferable substituents for the compound represented by the general formula C-II, a compound with substituents at least one of which is selected from the preferable substituents is preferable. A compound with substituents many of which are selected from the preferable substituents is more preferable. A compound with all the substituents selected from the preferable substituents is the most preferable.

Generally, the compound represented by the general formula C-I is a mixture of analogs with different substituent positions and different numbers of substituents Rn (n = 1 to 4) and Yq (q = 1 to4), depending on the synthetic method. The analogs are frequently statistically averaged. In the invention, these analogs mixtures are divided in the following three types, and it have been found that a specific mixture is particularly preferable.

In the invention, mixtures of phthalocyanine dye analogs represented by the general formulas C-I and C-II are divided into the following three types, based on the substituent positions, for definition.

1. β-positioned substituent type: (phthalocyanine dye with a specific substituent at 2- and/or 3-position, 6- and/or 7-position, 10- and/or 11-position, 14- and/or 15-position)
2. α-positioned substituent type: (phthalocyanine dye with a specific substituent at 1- and/or 4-position, 5- and/or 8-position, 9- and/or 12-position, 13- and/or 16-position)
3. α, β-positioned substituent type: (phthalocyanine dye with a specific substituent with irregular substitution position (1 to 16 positions)

In the present specification, the β-positioned substituent type, the α-positioned substituent type and mixture of the α or β-positioned substituents type are used for the explanation of phthalocyanine dye derivatives with different

structures (particularly, substituent positions).

The phthalocyanine derivatives for use in the invention can be synthesized by combinations of the methods described or cited in for example "Phthalocyanine- Chemistry and Function-" (pp. 1 to 62), co-written by Shirai and Kobayashi, issued IPC Co., Ltd., "Phthalocyanines-Properties and Applications", pp. 1 to 54, co-written by C.C.Leznoff-A.B.P.Lever, issued by VCH, or similar methods.

As described in individual gazettes of WO 00/17275, WO 00/08103, WO 00/08101, WO 98/41853, and JP-A No. 10-36471, the compound represented by the general formula C-I can be synthesized, by sulfonation of an unsubstituted phthalocyanine compound, the modification of the resultant compound into sulfonylchloride and amidation of the modified product. In this case, the sulfonation can occur at any position in the phthalocyanine skeleton and it is difficult to control the number of sulfonated groups. In case that sulfo groups are introduced under such reaction conditions, thus, the positions and number of sulfo groups introduced in the resulting product cannot be specified. Accordingly, a mixture of sulfonated products with different numbers of the substituent and different substituent positions is unavoidably produced. In case where the compound is made from the mixture as a raw material, the number and substituent position of sulfamoyl group bonding to the hetero ring cannot be specified. Therefore, a mixture of the α or β-positioned substituent type compounds with different substituent numbers and different substituent positions is obtained as the compound in the invention.

As described above, the phthalocyanine skeleton with many electron attrctive groups such as sulfamoyl groups has a high oxidation potential, leading to the increase of ozone resistance. In the above-described synthetic method, it is difficult to avoid the contamination of a phthalocyanine dye with a small number of electron attractive groups, namely a low oxidation potential. Therefore, more preferably, a synthetic method capable of suppressing a compound with a low oxidation potential is used so as to improve the ozone resistance.

On contrast, the compound represented by the general formula C-II can be derived from a compound obtained by the reaction of a phthalonitrile derivative (Compound P) and/or diiminoisoindoline derivative (Compound Q) represented by the following formulas, with a metal derivative represented by the following general formula C-III.

Compound P

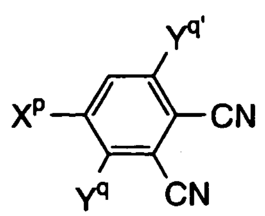

Compound Q

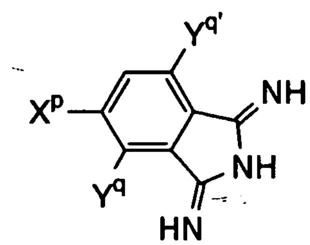

In the compounds, P and Q, p represents 11 to 14; q and q' independently represent 11 to 18.

General formula C-III M- $(Y)_d$

In the general formula C-III, M has the same meaning as that of M in the compounds represented by the general formulas C-I and C-II; Y represents a monovalent or divalent ligand such as halogen atoms, an acetate anion, an acetylacetonate, and an oxygen; and d represents an integer of 1 to 4.

According to the above-described synthetic method, a specific number of a desired substituent can be introduced. When a large number of electron attractive groups be to be intoroduced so as to elevate the oxidation potential, the synthetic method is superior to the synthetic method of the compound represented by the general formula C-I.

The compound represented by the general formula C-II which is obtained in the manner described above is generally a mixture of compounds represented by the general formulas C-II-1 to C-II-4 which are isomers having different substitution positions of Xp, namely β-positioned substitution type isomers (a phthalocyanine dye with substituents at 2-and/or 3-position, 6- and/or 7-position, 10 and/or 11-position, 14 and/or 15-position).

General formula C-II-1

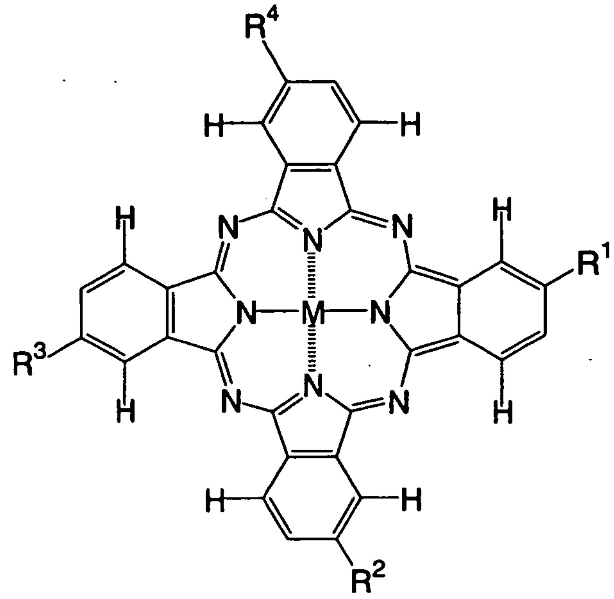

General formula C-II-2

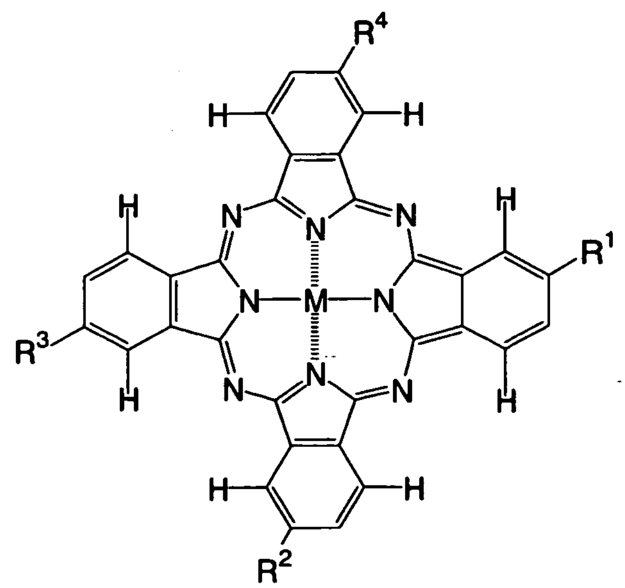

General formula C-II-3

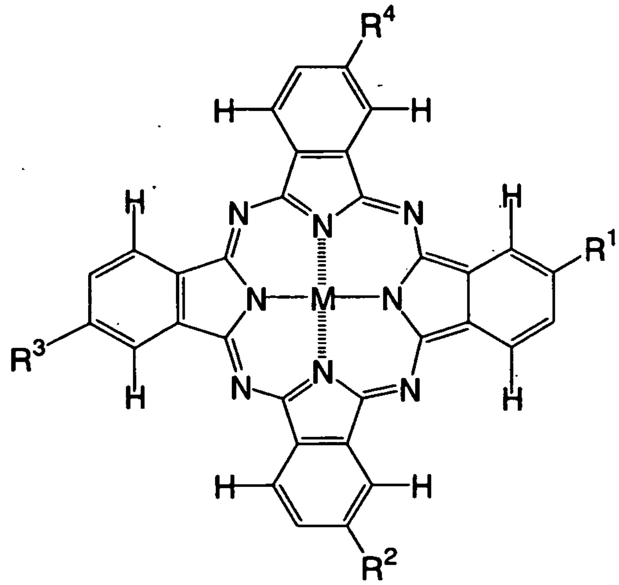

General formula C-II-4

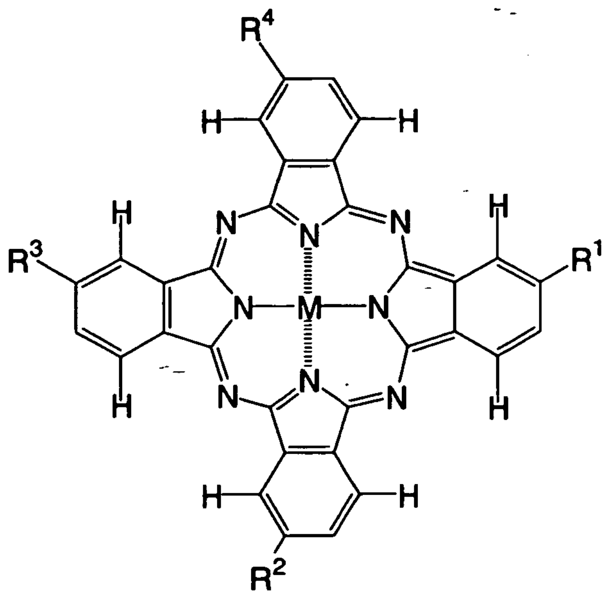

In the general formula C-II-1 to C-II-4, $R^1$ to $R^4$ have the same meanings as those of $(X^{11})$ $a^{11}$ to $(X^{14})a^{14}$ in the general formula C-II.

In the invention, it is found that the oxidation potential higher than 1.0 V (vs SCE) in any of the substitution types is very important for the improvement of solidily. Among them, the β-positioned substitution type is likely to be more excellent than the mixture of α or β-positioned substitution types in terms of color tone, light fastness, ozone gas resistance and the like.

Exemplified compounds (C-101 to C-120) of the compound represented by the general formula C-I or C-II are shown below. However, the invention is not limited to these examples.

(C-101)

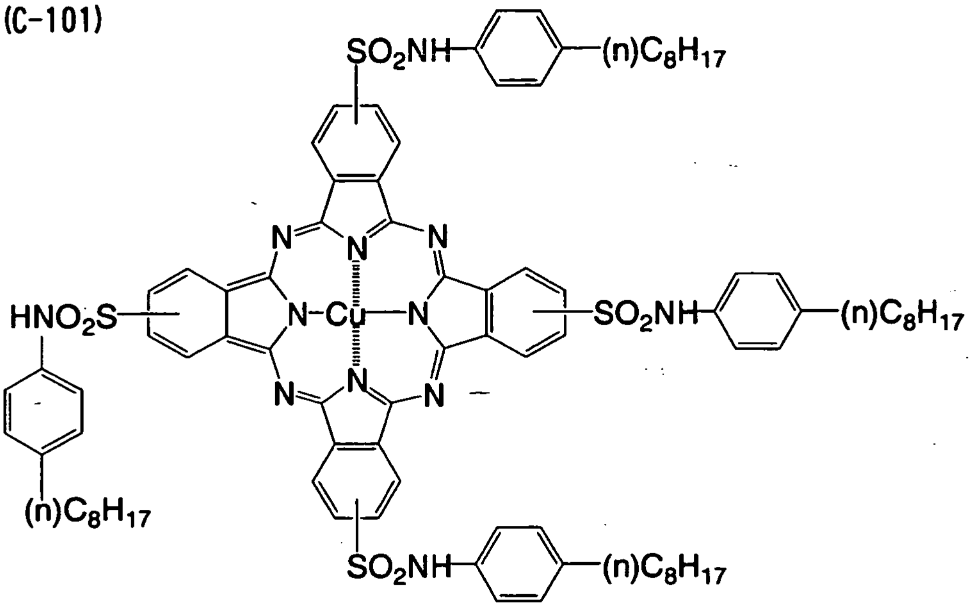

(C-102)

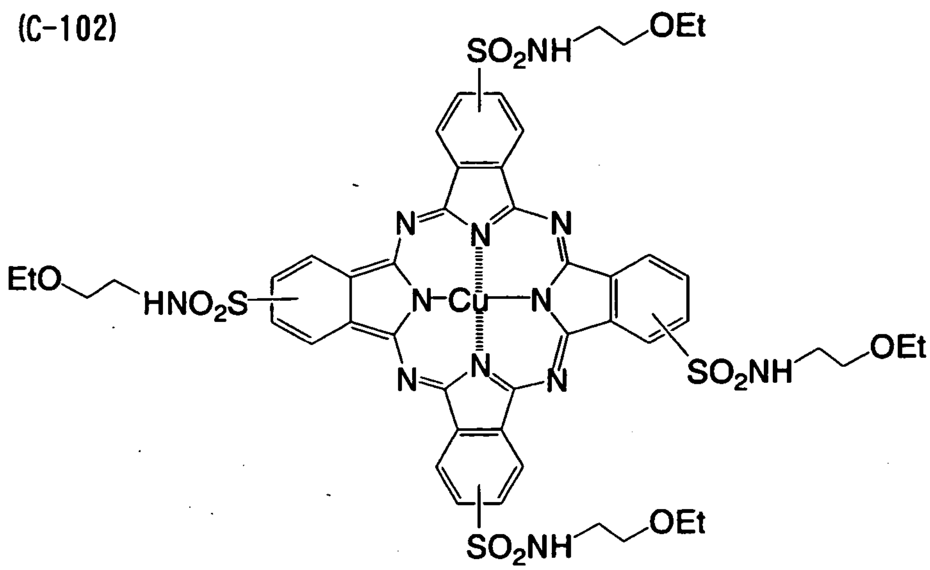

(C-103)

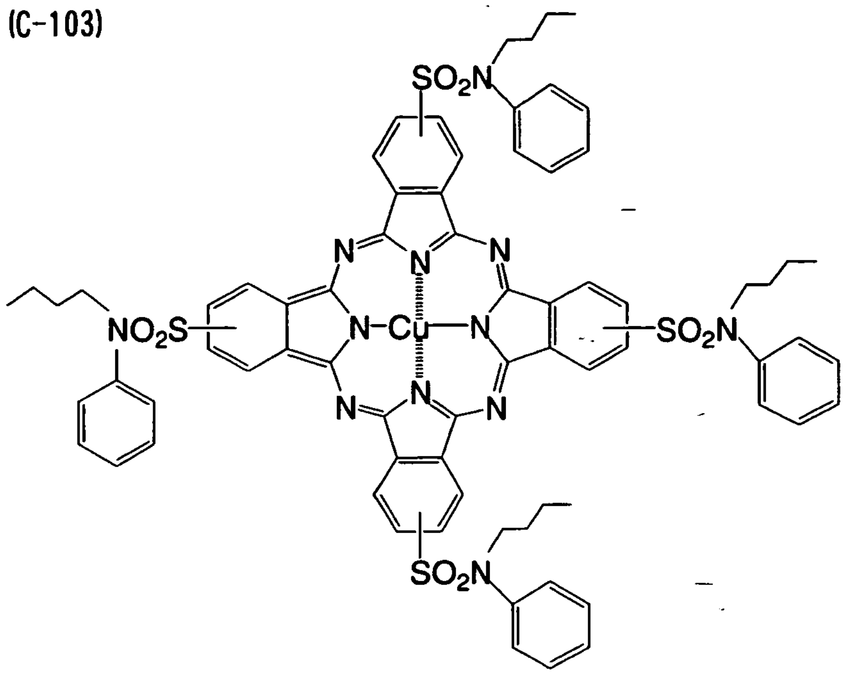

(C-104)

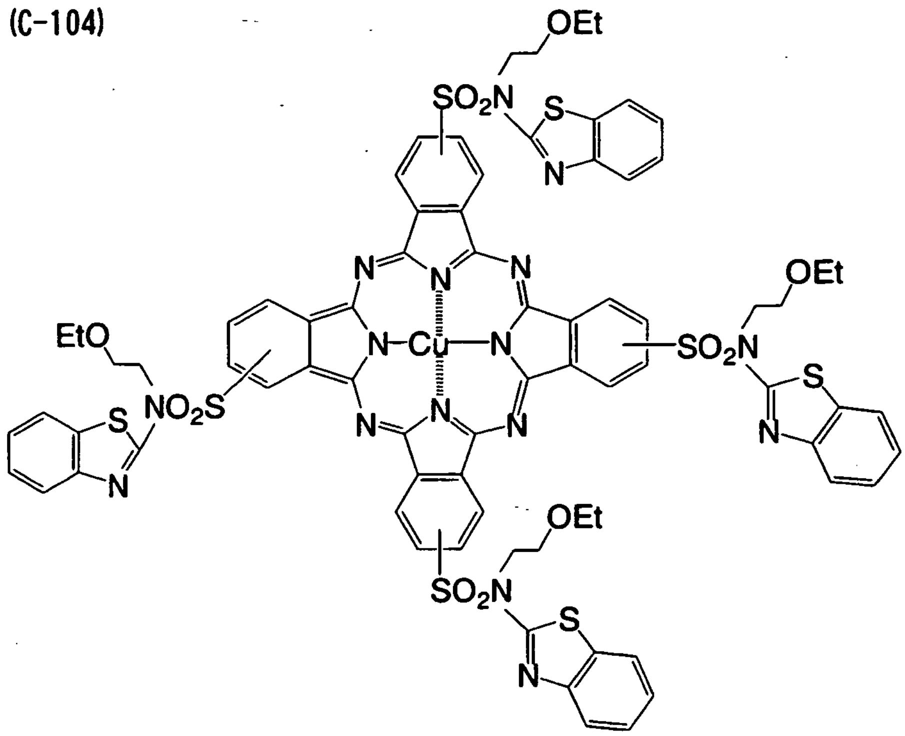

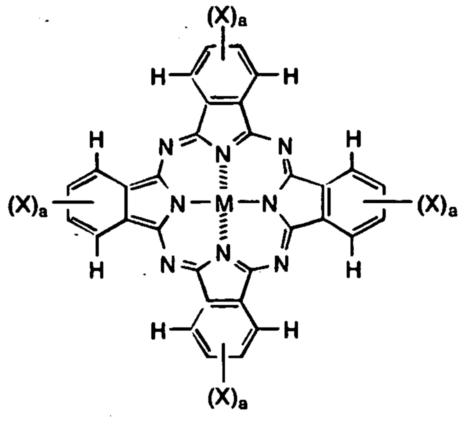

| Compound No. | M | X | a |
|---|---|---|---|
| C-105 | Cu | $-SO_2NHC_8H_{17}(t)$ | 1 |
| C-106 | Cu | 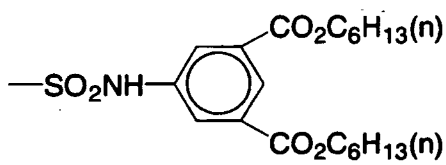 | 1 |
| C-107 | Cu | 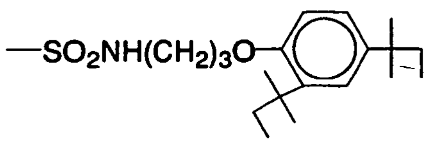 | 1 |
| C-108 | Cu | 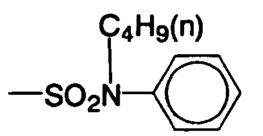 | 1 |
| C-109 | Cu | 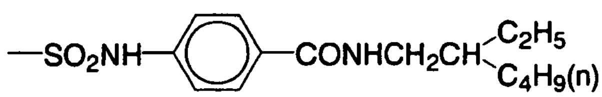 | 1 |
| C-110 | Cu | 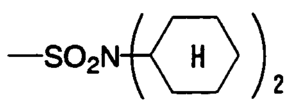 | 1 |
| C-111 | Cu | 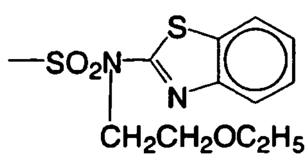 | 1 |
| C-112 | Cu | $-SO_2N(CH_2CH_2OC_2H_5)_2$ | 1 |

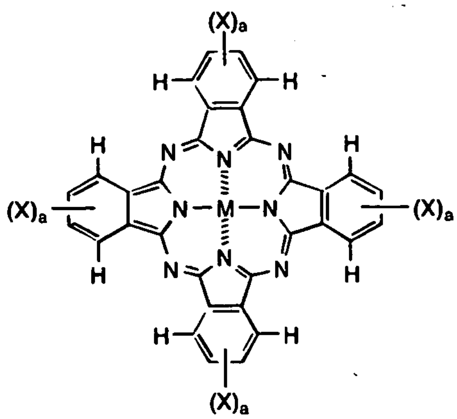

| Compound No. | M | X | a |
|---|---|---|---|
| C-113 | Cu | 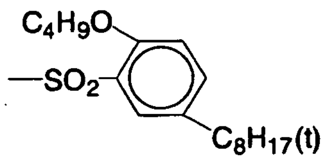 | 1 |
| C-114 | Cu | $-SO_2(CH_2)_2SO_2NH(CH_2)_3OC_3H_7(i)$ | 1 |
| C-115 | Cu | $-SO_2CH_2CO_2C_2H_5$ | 1 |
| C-116 | Cu | 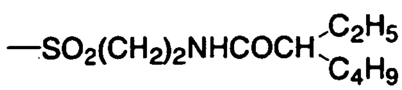 | 1 |
| C-117 | Cu | $-SO_2(CH_2)_2CO_2C_6H_{13}(n)$ | 1 |
| C-118 | Cu | $-SO_2C_4H_9(n)$ | 2 |
| C-119 | Cu | 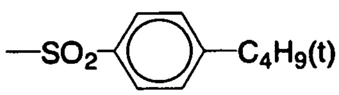 | 1 |
| C-120 | Cu | 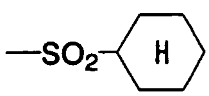 | 1 |

The compound represented by the general formula C-I can be synthesized according to the patents described above. Furthermore, the compound represented by the general formula C-II can be synthesized according to the methods described in Japanese Patent Application Nos. 2000-24352, 2000-47013, 2000-57063, and 2000-96610. Furthermore, these never limit the starting material, the dye intermediate and the synthetic route.

The content of the oil-soluble dye in the ink composition is preferably 0.05 to 50 % by mass, and more preferably 0.1 to 10 % by mass.

<*Organic solvent with* a *high boiling point*>

Herein, the organic solvent with a high boiling point for use in the invention is now described.

The ink composition of the invention contains colored particles produced by mixing together a solution containing at least one hydrophobic dye, at least one hydrophobic polymer, at least one organic solvent with a high boiling point and with a water solubility of 4 g or below and at least one auxiliary solvent with a boiling point of 200°C or below and a water solubility of 25 g or below, and an aqueous medium for emulsification and dispersion, and subsequently removing the auxiliary solvent.

For the preparation of the colored particles, the organic solvent with a high boiling point is an indispensable

component for forming colored particles with superior stability and excellent color tone.

In the invention, the organic solvent with a high boiling point includes organic solvents with boiling points of 200˚C or above and melting points of 80˚C or below. When the water solubility thereof (25˚C) exceeds 4 g, the colored particles included in the ink composition readily become coarse or cohere over time, which affects seriously the jetting of ink. Thus, the water solubility is preferably 4 g or below, more preferably 3 g or below, and still more preferably 2g or below and most preferably 1 g or below.

In the present specification, the "water solubility" means the concentration of the organic solvent with a high boiling point saturated in water at 25˚C. The water solubility means the mass in gram of water dissolvable in 100 g of the organic solvent with a high boiling point at 25˚C.

The amount of the organic solvent with a high boiling point is preferably at 5 to 200 % by mass, and more preferably 10 to 100 % by mass with respect to a dye included in the colored particles.

In the invention, the organic solvent with a high boiling point is preferably compounds represented by the following formulas S-1 to S-9.

Formula S-1

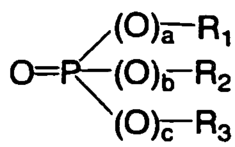

Formula S-2

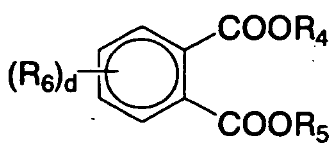

Formula S-3 $(Ar{-}COO)_e{-}R_7$

Formula S-4 $(R_8{-}COO)_f{-}R_9$

Formula S-5 $R_{10}{-}(COO{-}R_{11})_g$

Formula S-6

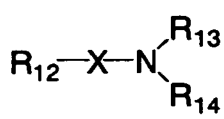

Formula S-7

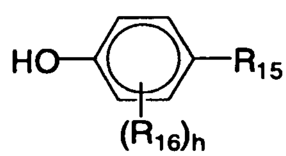

Formula S-8 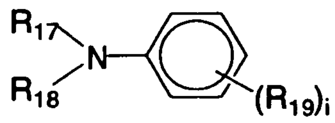

Formula S-9 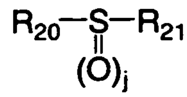

In the formula S-1, $R_1$, $R_2$, and $R_3$ independently represent an aliphatic group or an aryl group. Further, a, b and c independently represent 0 or 1.

In the formula S-2, $R_4$ and $R_5$ independently represent an aliphatic group or an aryl group. $R_6$ represents a halogen atom (F, Cl, Br and I; the same is true with those described below), an alkyl group, an alkoxyl group, an aryloxy group, an alkoxycarbonyl group or an aryloxycarbonyl group. d represents an integer of 0 to 3. When d is more than 1, a plurality of $R_6$s may be the same or different.

In the formula S-3, Ar represents an aryl group. e represents an integer of 1 to 6. $R_7$ represents a hydrocarbon group with a valence e or hydrocarbon groups bonding to each other via an ether bond.

In the formula S-4, $R_8$ represents an aliphatic group. f represents an integer of 1 to 6. $R_9$ represents a hydrocarbon group with a valence f or hydrocarbon groups bonding to each other via an ether bond.

In the formula S-5, g represents an integer of 2 to 6. $R_{10}$ represents a hydrocarbon group with a valence g (except for aryl group), and $R_{11}$ represents an aliphatic group or an aryl group.

In the formula S-6, $R_{12}$, $R_{13}$ and $R_{14}$ independently represent a hydrogen atom, an aliphatic group or an aryl group. X represents -CO- or $-SO_2-$. $R_{12}$ and $R_{13}$ or $R_{13}$ and $R_{14}$ may bond to each other to form a ring.

In the formula S-7, $R_{15}$ represents an aliphatic group, an alkoxycarbonyl group, an aryloxycarbonyl group, an alkylsulfonyl group, an arylsulfonyl group, an aryl group or a cyano group. $R_{16}$ represents a halogen atom, an aliphatic group, an aryl group, an alkoxyl group or an aryloxy group. h represents an integer of 0 to 3. When h is more than 1, a plurality of $R_{16}$s may be the same or different.

In the formula S-8, $R_{17}$ and $R_{18}$ independently represent an aliphatic group or an aryl group. $R_{19}$ represents a halogen atom, an aliphatic group, an aryl group, an alkoxyl group or an aryloxy group. i represents an integer of 0 to 4. When i is more than 1, a plurality of $R_{19}$s may be the same or different.

In the formula S-9, $R_{20}$ and $R_{21}$ represent an aliphatic group or an aryl group. j represents 1 or 2.

When $R_1$ to $R_6$, $R_8$ and $R_{11}$ to $R_{21}$ are aliphatic groups or groups containing an aliphatic group in the formulas S-1 to S-9, the aliphatic group may be any of linear, branched or cyclic forms. The aliphatic groups may contain an unsaturated bond or may have a substituent. Examples of the substituent include a halogen atom, an aryl group, an alkoxyl group, an aryloxy group, an alkoxycarbonyl group, a hydroxyl group, an acyloxy group and an epoxy group.

When $R_1$ to $R_6$, $R_8$ and $R_{11}$ to $R_{21}$ are cyclic aliphatic groups, namely cycloalkyl groups or groups containing a cycloalkyl group in the formulas S-1 to S-9, the cycloalkyl group may contain an unsaturated bond in the 3-membered to 8-membered ring, or may contain a substituent and a crosslinking group. Examples of the substituent include a halogen atom, an aliphatic group, a hydroxyl group, an acryl group, an aryl group, an alkoxyl group, an epoxy group, and an alkyl group. Examples of the crosslinking group include methylene, ethylene and isopropylidene.

When $R_1$ to $R_6$, $R_8$ and $R_{11}$ to $R_{21}$ are aryl groups or groups containing an aryl group in the formulas S-1 to S-9, the aryl groups may be substituted with a substituent such as a halogen atom, an aliphatic group, an aryl group, an alkoxyl group, an aryloxy group, and an alkoxycarbonyl group.

When $R_7$, $R_9$ or $R_{10}$ is a hydrocarbon group in the formulas S-3 to S-5, the hydrocarbon group may contain a cyclic structure (for example, a benzene ring, a cyclopentane ring, a cyclohexane ring) or an unsaturated bond or may contain a substituent. Examples of the substituent include a halogen atom, a hydroxyl group, an acyloxy group, an aryl group, an alkoxyl group, an aryloxy group, and an epoxy group.

Among the organic solvents with a high boiling point represented by the formulas S-1 to S-9, the following compounds are particularly preferable.

In the formula S-1, $R_1$, $R_2$ and $R_3$ independently represent an aliphatic group with one to 24 (preferably 4 to

18) carbon atoms (for example, n-butyl, 2-ethylhexyl, 3,3,5-trimethylhexyl, n-dodecyl, n-octadecyl, benzyl, oleyl, 2-chloroethyl, 2,3-dichloropropyl, 2-butoxyethyl, 2-phenoxyethyl, cyclopentyl, cyclohexyl, 4-t-butylcyclohexyl, 4-meethylcyclohexyl) or an aryl group with 6 to 24 (preferably 6 to 18) carbon atoms (for example, phenyl, cresyl, p-nonylphenyl, xylyl, cumenyl, p-methoxyphenyl, p-methoxycarbonylphenyl). a, b and c independently represent 0 or 1. More preferably, all of a, b and c are 1.

In the formula S-2, $R_4$ and $R_5$ independently represent an aliphatic group with 1 to 24 (preferably 4 to 18) carbon atoms (for example, the same groups as the alkyl groups listed for $R_1$, ethoxycarbonylmethyl, 1,1-diethylpropyl, 2-ethyl-1-methylhexyl, cyclohexylmethyl, 1-ethyl-1,5-dimethylhexyl, 3,5,5-trimethylcyclohexyl, menthyl, bornyl, 1-methylcyclohexyl) or an aryl group with 6 to 24 (preferably 6 to 18) carbon atoms (for example, the aryl groups listed for $R_1$, 4-t-butylphenyl, 4-t-octylphenyl, 1,3,5-trimethylphenyl, 2,4-di-t-butylphenyl, 2,4-di-t-pentylphenyl); $R_6$ represents a halogen atom (preferably, chlorine atom), an alkyl group with 1 to 18 carbon atoms (for example, methyl, isopropyl, t-butyl, n-dodecyl), an alkoxyl group with 1 to 18 carbon atoms (for example, methoxy, n-butoxy, n-octyloxy, methoxyethoxy, benzyloxy), an aryloxy group with 6 to 18 carbon atoms (for example, phenoxy, p-tolyloxy, 4-methoxyphenoxy, 4-t-butylphenoxy) , or an alkoxycarbonyl group with 2 to 19 carbon atoms (for example, methoxycarbonyl, n-butoxycarbonyl, 2-ethylhexyloxycarbonyl) or an aryloxycarbonyl group with 6 to 25 carbon atoms; and d is 0 or 1.

In the formula S-3, Ar represents an aryl group with 6 to 24 (preferably 6 to 18) carbon atoms (for example, phenyl, 4-chlorophenyl, 4-methoxyphenyl, 1-naphthyl, 4-n-butoxyphenyl, 1,3,5-trimethylphenyl); e represents an integer of 1 to 4 (preferably, 1 to 3); $R_7$ represents a hydrocarbon group with 2 to 24 (preferably 2 to 18) carbon atoms and with a valence e [for example, the alkyl groups listed for $R_4$, cycloalkyl groups, aryl groups, $-(CH_2)_2-$,

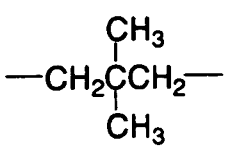 , 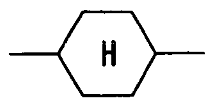 , 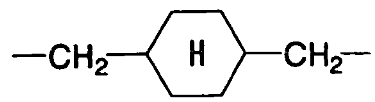 ,

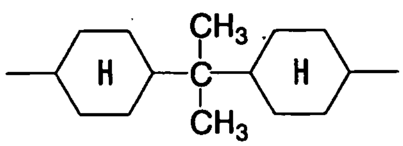 , 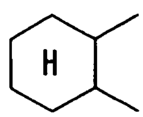 , 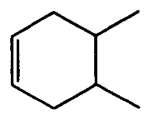 , 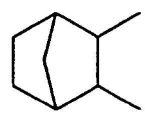 ,

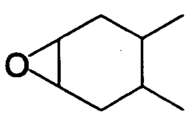 , 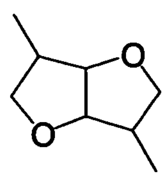 , 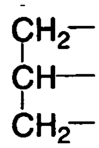 , 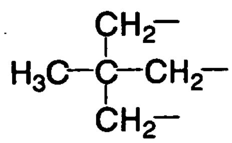 ,

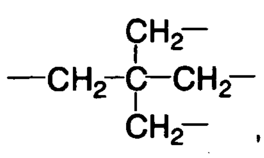 , 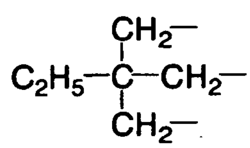 ,

$-(CH_2)_6-$ ,

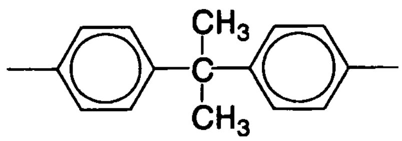,
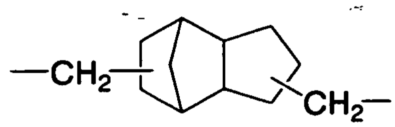

or a hydrocarbon group in which hydrocarbon groups with 4 to 24 (preferably 4 to 18) carbon atoms and with a valence e bond to each other via an ether bond (for example, $-CH_2CH_2OCH_2CH_2-$, $-CH_2CH_2(OCH_2CH_2)_3-$, $-CH_3CH_2CH_2OCH_2CH_2CH_2-$, and the following compounds)

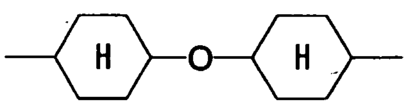,
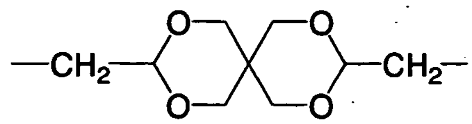

In the formula S-4, $R^8$ represents an aliphatic group with 1 to 24 (preferably 1 to 17) carbon atoms (for example, methyl, n-propyl, 1-hydroxyethyl, 1-ethylpentyl, n-undecyl, pentadecyl, 8,9-epoxyheptadecyl, cyclopropyl, cyclohexyl, 4-methylcyclohexyl); f is an integer of 1 to 4 (preferably, 1 to 3); $R^9$ is a hydrocarbon group in which hydrocarbon groups with 2 to 24 (preferably 2 to 18) carbon atoms and with a valence f bond to each other via an ether bond or a hydrocarbon group in which hydrocarbon groups with 4 to 24 (preferably 4 to 18) carbon atoms and with a valence c bond to each other via an ether bond (for example, the groups listed for $R_7$).

In the formula S-5, g is 2 to 4 (preferably, 2 or 3); $R_{10}$ is a hydrocarbon group with a valence g (for example, $-CH_2-$, $-(CH_2)_2-$, $-(CH_2)_4-$, $-(CH_2)_7-$, and the following compounds)

$-(CH_2)_8-$ , 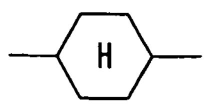, 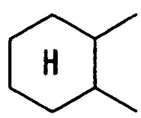, 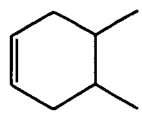, 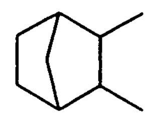,

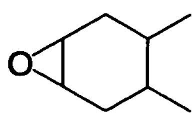, 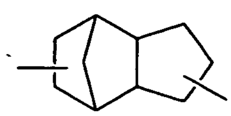, 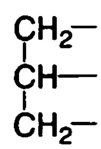, 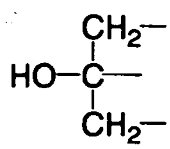,

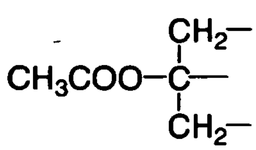, 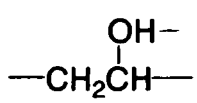, 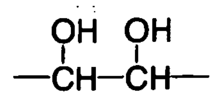

; $R_{11}$ represents an aliphatic group with 1 to 24 (preferably 4 to 18) carbon atoms or an aryl group with 6 to 24 (preferably

6 to 18) carbon atoms (for example, the aliphatic groups and aryl groups listed for $R_4$).

In the formula S-6, $R_{12}$ represents a hydrogen atom, an aliphatic group with 1 to 24 (preferably 3 to 20) carbon atoms (for example, n-propyl, 1-ethylpentyl, n-undecyl, n-pentadecyl, 2,4-di-t-pentylphenoxymethyl, 4-t-octylphenoxymethyl, 3-(2,4-di-t-butylphenoxy)propyl, 1-(2,4-di-t-butylphenoxy)propyl, cyclohexyl, 4-methylcyclohexyl) or an aryl group with 6 to 24 (preferably 6 to 18) carbon atoms (for example, the aryl groups listed for Ar); $R_{13}$ and $R_{14}$ represent a hydrogen atom, an aliphatic group with 1 to 24 (preferably 1 to 18) carbon atoms (for example, methyl, ethyl, isopropyl, n-butyl, n-hexyl, 2-ethylhexyl, n-dodecyl, cyclopentyl, cyclopropyl) or an aryl group with 6 to 18 (preferably 6 to 15) carbon atoms (for example, phenyl, 1-naphthyl, p-tolyl). $R_{13}$ and $R_{14}$ may bond to each other to form a pyrrolidine ring, a piperidine ring or a morpholine ring; together with N or $R_{12}$ and $R_{13}$ may bond to each other to form a pyrrolidone ring. X is -CO- or -$SO_2$-, and preferably -CO-.

In the formula S-7, $R_{15}$ represents an aliphatic group with 1 to 24 (preferably 3 to 18) carbon atoms (for example, methyl, isopropyl, t-butyl, t-pentyl, t-hexyl, t-octyl, 2-butyl, 2-hexyl, 2-octyl, 2-dodecyl, 2-hexadecyl, t-pentadecyl, cyclopentyl, cyclohexyl), an alkoxycarbonyl group with 2 to 24 (preferably 5 to 17) carbon atoms (for example, n-butoxycarbonyl, 2-ethylhexyloxycarbonyl, n-dodecyloxycarbonyl), an alkylsulfonyl group with 1 to 24 (preferably 1 to 18) carbon atoms (for example, methylsulfonyl, n-butylsulfonyl, n-dodecylsulfonyl), an arylsulfonyl group with 6 to 30 (preferably 6 to 24) carbon atoms (for example, p-tolylsulfonyl, p-dodecylphenylsulfonyl, p-hexadecyloxyphenylsulfonyl), an aryl group with 6 to 32 (preferably 6 to 24) carbon atoms (for example, phenyl, p-tolyl) or a cyano group; $R_{16}$ represents a halogen atom (preferably, Cl), an alkyl group with 1 to 24 (preferably 1 to 18) carbon atoms (for example, the alkyl groups listed for $R_{15}$), a cycloalkyl group with 3 to 18 (preferably 5 to 17) carbon atoms (for example, cyclopentyl, cyclohexyl), an aryl group with 6 to 32 (preferably 6 to 24) carbon atoms (for example, phenyl, p-tolyl), an alkoxyl group with 1 to 24 (preferably 1 to 18) carbon atoms (for example, methoxy, n-butoxy, 2-ethylhexyloxy, benzyloxy, n-dodecyloxy, n-hexadecyloxy) or an aryloxy group with 6 to 32 (preferably 6 to 24) carbon atoms (for example, phenoxy, p-t-butylphenoxy, p-t-octylphenoxy, m-pentadecylphenoxy, p-dodecyloxyphenoxy); and h is an integer of 1 to 2.

In the formula S-8, $R_{17}$ and $R_{18}$ have the same meanings as those of $R_{13}$ and $R_{14}$; and $R_{19}$ has the same meaning as that of $R_{16}$.

In the formula S-9, $R_{20}$ and $R_{21}$ have the same meanings as those of $R_1$, $R_2$ and $R_3$; and j represents 1 or 2 and preferably represents 1.

Specific examples (S-1 to -93) of the organic solvent with a high boiling point for use in the invention are now described below.

Compounds represented by the formula S-1

S − 1

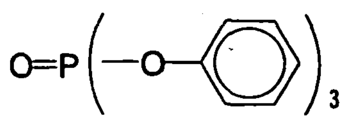

S − 2

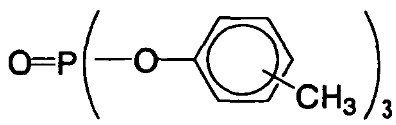

S − 3

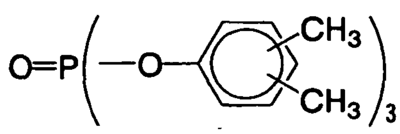

S − 4

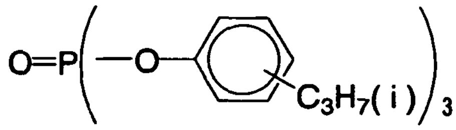

S − 5

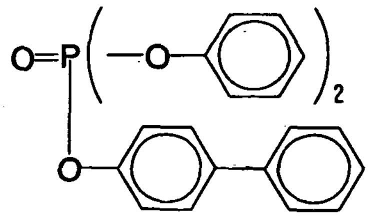

S − 6

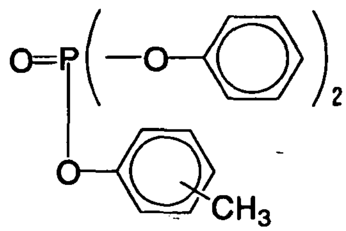

S − 7

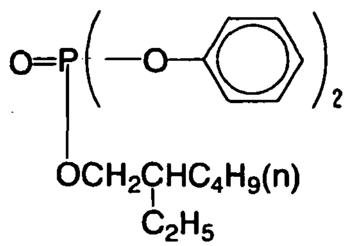

S − 8

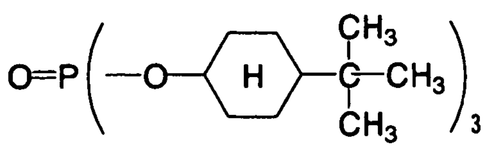

S − 9

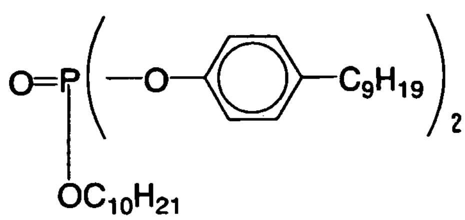

S - 1 0

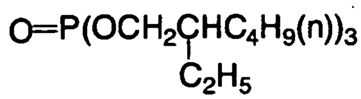

S - 1 1

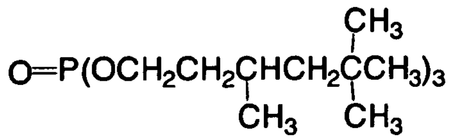

| | |
|---|---|
| S - 12 | $O=P(OC_{12}H_{25}(n))_3$ |
| S - 13 | $O=P(OC_{16}H_{33}(n))_3$ |
| S - 14 | $O=P(O(CH_2)_8CH=CHC_8H_{17}(n))_3$ |
| S - 15 | $O=P(OCH_2CH_2Cl)_3$ |
| S - 16 | $O=P(OCH_2CH_2OC_4H_9(n))_3$ |

S - 1 7

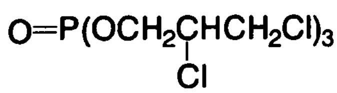

S - 1 8

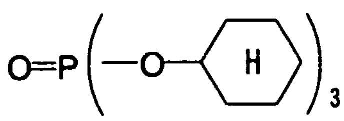

S - 1 9

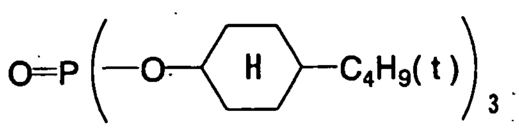

S - 2 0

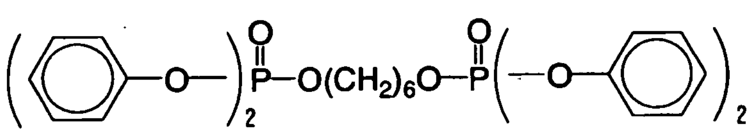

S-21 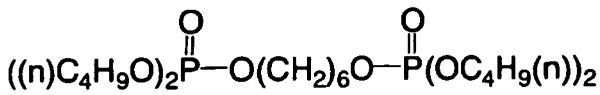

S - 22 $((n)C_8H_{17})_3P=O$

S-23 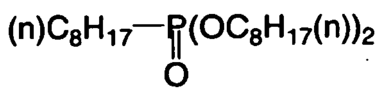

Compounds represented by the formula S-2

S-24 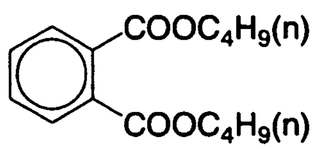

S-25 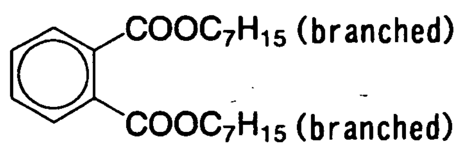

S-26 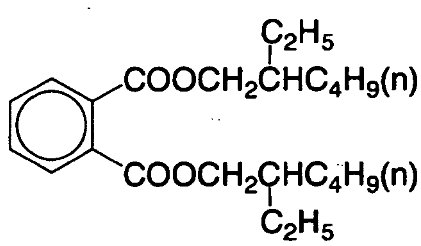

S-27 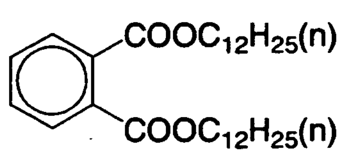

S－28

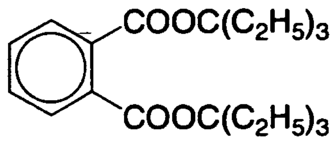

S－29

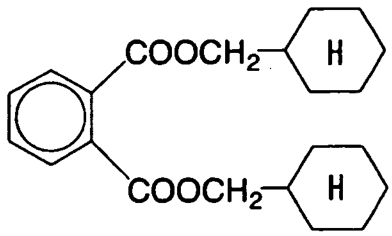

S－30

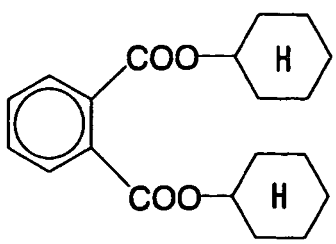

S－31

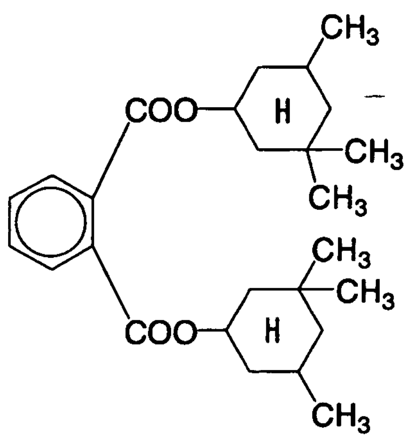

S－32

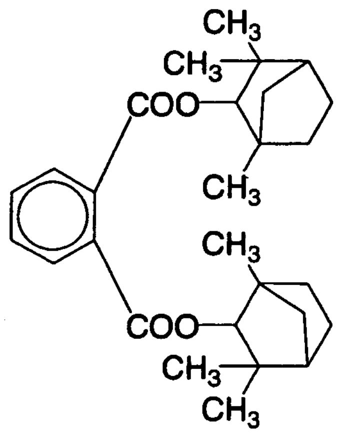

S－33

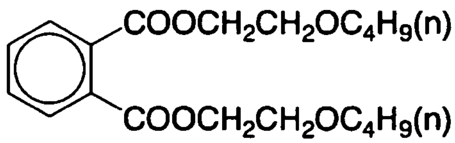

S－34

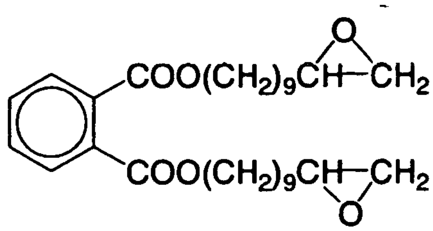

S－35

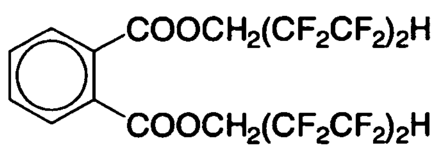

S－36

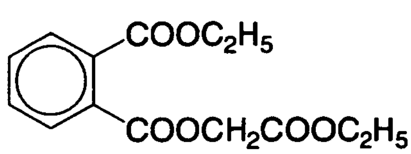

S－37

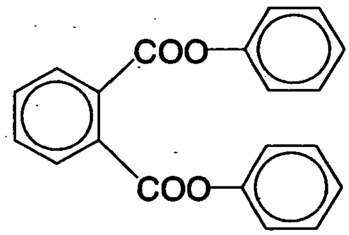

S－38

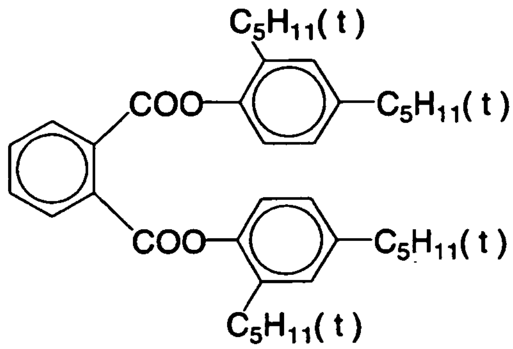

S－39

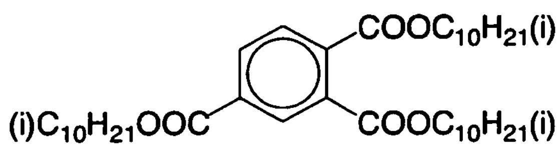

Compounds represented by the formula S-3

S－40

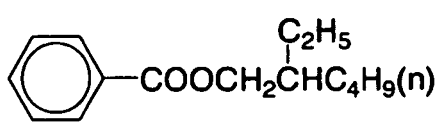

S－41

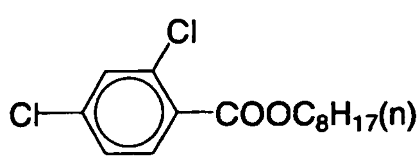

S－4 2 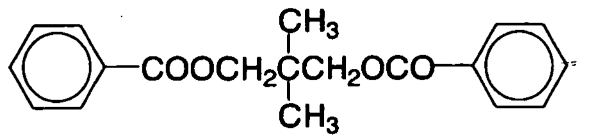

S－4 3 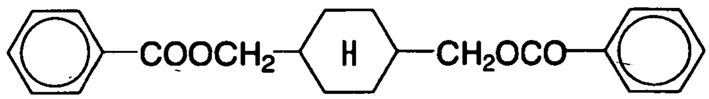

S－4 4 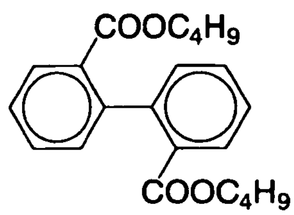

Compounds represented by the formula S-4

S — 45 $(n)C_{15}H_{31}COOC_{16}H_{33}(n)$

S－4 6 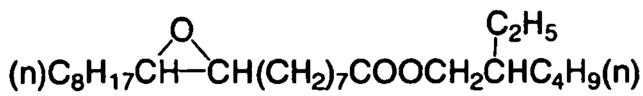

S－4 7 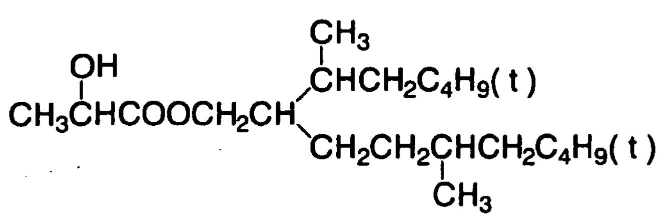

S－4 8 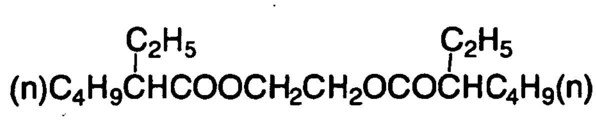

S－４９

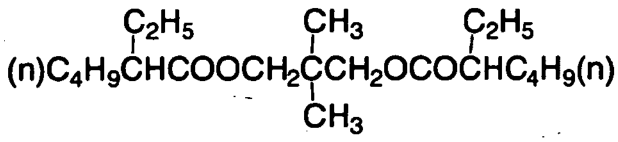

S－５０

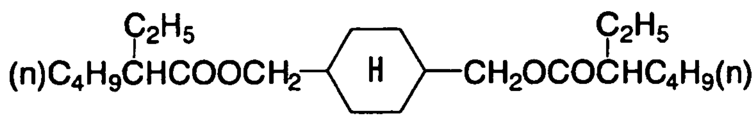

Compounds represented by the formula S-5

S－５１

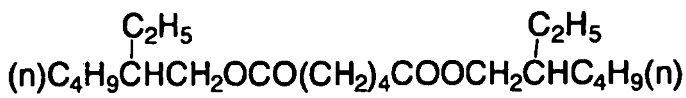

S－５２

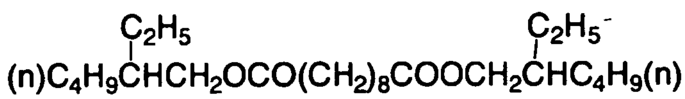

S — 53 $(n)C_4H_9OCO(CH_2)_8COOC_4H_9(n)$

S－５４

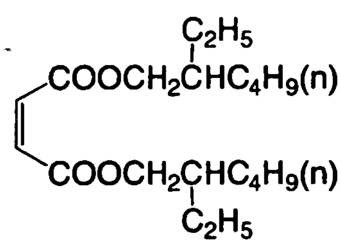

S－５５

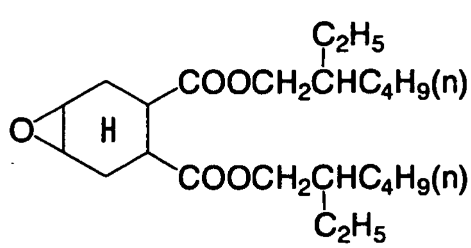

S-56

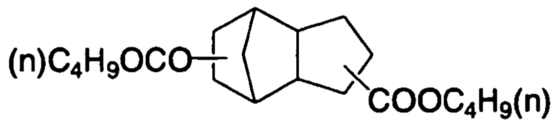

S-57

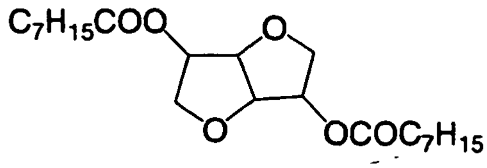

S-58

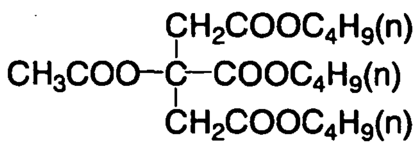

Compounds represented by the formula S-6

S-59

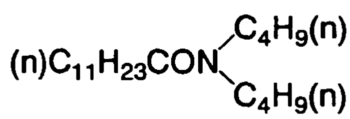

S-60

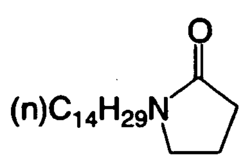

S-61

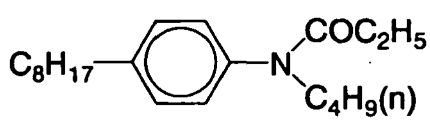

S－62

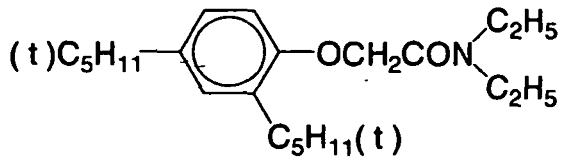

S－63

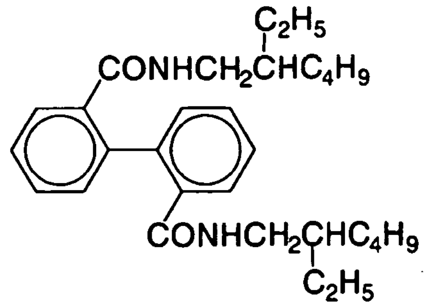

S－64

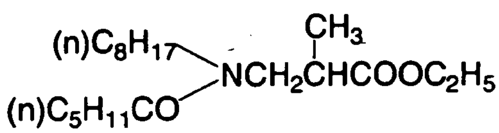

S－65

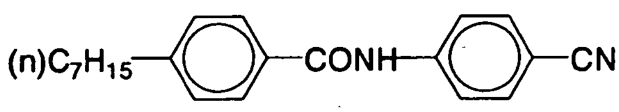

S－66

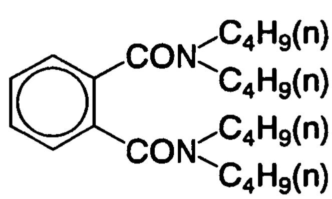

S-67 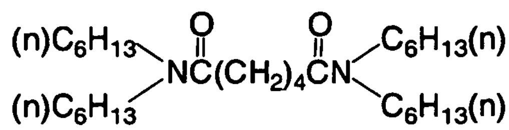

Compounds represented by the formula S-7

S-68 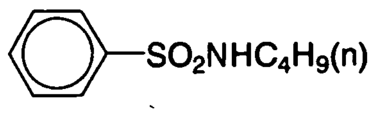

S-69 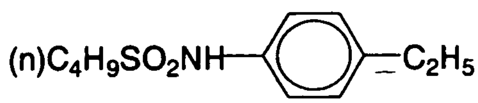

S-70 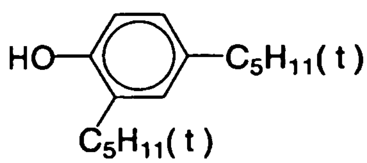

S-71 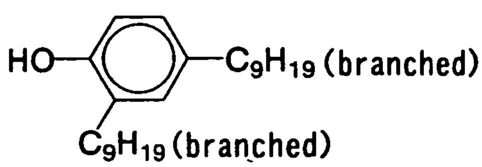

S-72 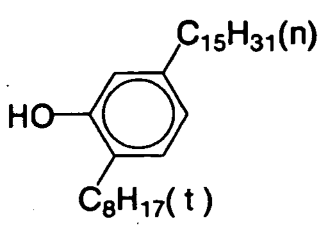

S－73

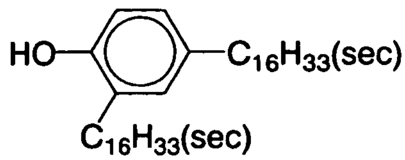

S－74

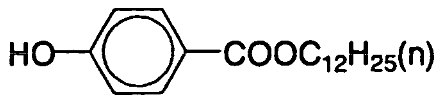

S－75

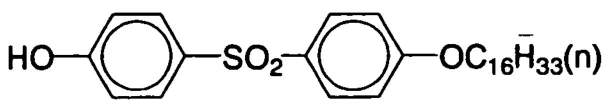

Compounds represented by the formula S-8

S－76

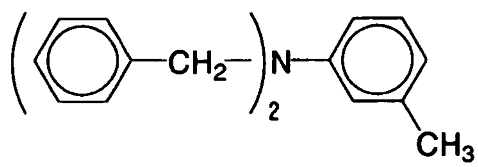

S－77

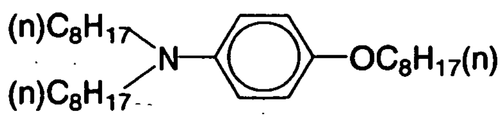

S－78

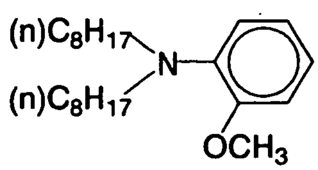

S-79

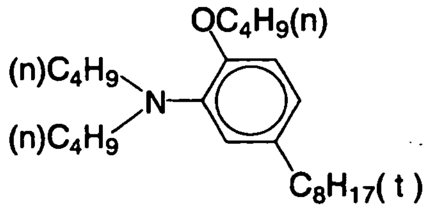

Compounds represented by the formula S-9

S-80

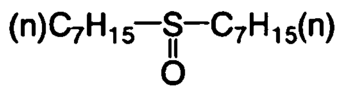

S-81

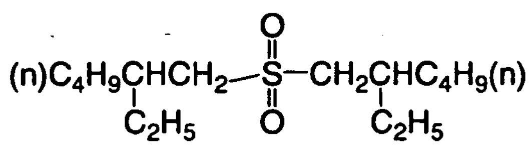

Other compounds

S-82

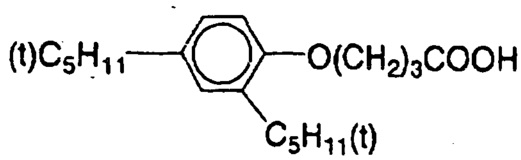

S-83

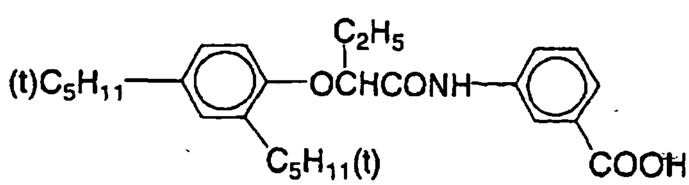

S-84

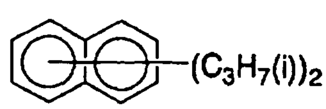

S-85 $C_nH_{2n+1}$ (a mixture of n-paraffins with n = 14 and 15)

S - 86

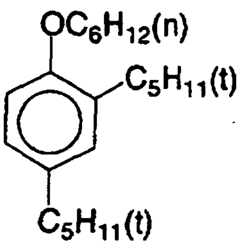

S - 87

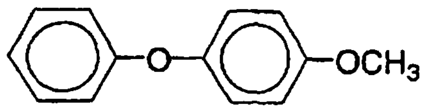

S - 88

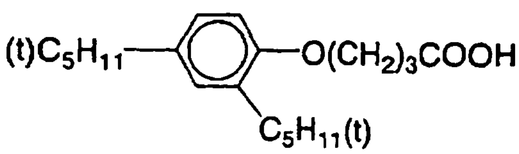

Other compounds

S - 89

Chlorinated paraffin (mean composition $C_{14}H_{24}Cl_6$)

S - 90

Chlorinated paraffin (mean composition $C_{12}H_{18}Cl_8$)

S - 91

Poly(chlorotrifluoroethylene) (mean MW. 900)

S - 92

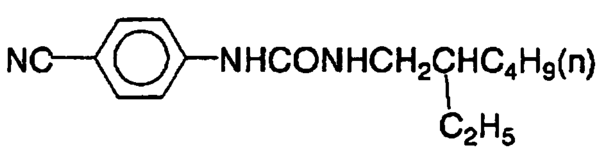

S－9 3.

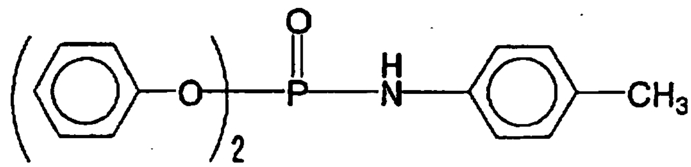

In the invention, an organic solvent with a high boiling point may be used alone or a mixture of two or more organic solvents with a high boiling point [for example, tricresylphosphate and dibutylphthalate, or trioctylphosphate and di(2-ethylhexyl)sebacate, or dibutylphthalate and poly(N-t-butylacrylamide)] may be used.

In the invention, the mass ratio of the hydrophobic dye and the organic solvent with a high boiling point is preferably 1:0.01 to 1:1, and more preferably 1:0.05 to 1:0.5.

Other organic solvents with a high boiling point for use in the invention and methods for synthesizing these organic solvents with a high boiling point are described in, for example, USP Nos. 2,322,027, 2,533,514, 2,772,163, 2,835,579, 3,594,171, 3,676,137, 3,689,271, 3,700,454, 3,748,141, 3,764,336, 3,765,897, 3,912,515, 3,936,303, 4,004,928, 4,080,209, 4,127,413, 4,193,802, 4,207,393, 4,220,711, 4,239,851, 4,278,757, 4,353,979, 4,363,873, 4,430,421, 4,430,422, 4,464,464, 4,483,918, 4,540,657, 4,684,606, 4,728,599, 4,745,049, 4,935,321, and 5,013,639; EP Nos. 276,319A, 286,253A, 289,820A, 309,158A, 309,159A, 309,160A, 509, 311A and 510, 576A; East German Patent Nos. 147, 009, 157, 147, 159, 573, and 225, 240A; and GBP Nos. 2,091,124A; and JP-A Nos. 48-47335, 50-26530, 51-25133, 51-26036, 51-27921, 51-27922, 51-149028, 52-46816, 53-1520, 53-1521, 53-15127, 53-146622, 54-91325, 54-106228, 54-118246, 55-59464, 56-64333, 56-81836, 59-204041, 61-84641, 62-118345, 62-247364, 63-167357, 63-214744, 63-301941, 64-9452, 64-9454, 64-68745, 1-101543, 1-102454, 2-792, 2-4239, 2-43541, 4-29237, 4-30165, 4-232946, and 4-346338.

*<Auxiliary solvent>*

The auxiliary solvent for use in the invention is now described below.

In the invention, an auxiliary solvent is used together with the organic solvent with a high boiling point. The auxiliary solvent is an organic solvent with a low boiling point or a water soluble organic solvent, which is removed by evaporation or membrane dialysis or ultrafiltration after emulsification and dispersion.

In the preparation of the colored particles at least containing a hydrophobic dye, a hydrophobic polymer, and an organic solvent with a high boiling point, the water solubility of the auxiliary solvent is preferably low so as to obtain a stable dispersion with a narrow particle size distribution. In order to allow the auxiliary solvent to be readily removed after emulsification and dispersion, alternatively, it is nesessary that the auxiliary solvent is soluble in water to some extent. Thus, solvents completely miscible with water, for example methanol, ethanol, isopropyl alcohol, and acetone are not preferable as the avxiliary solvent so as to obtain a stable dispersion with a narrow particle size distribution.

The water solubility of the auxiliary solvent (in 100 g of water at 25°C) is preferably 0.5 to 25 g, and more preferably 1 to 20 g.

Preferable examples of the auxiliary solvent (AS-1 to -11) are specifically described below, together with the water solubilities thereof. However, the invention is not limited to them.

| Auxiliary solvent | Solubility of auxiliary solvent in water at 25°C |
|---|---|
| AS-1: ethyl acetate | 8 g |
| AS-2: propyl acetate | 2 g |
| AS-3: 2-ethylbutyl acetate | < 1 g |
| AS-4: 2-ethylene acetate | 20 g |
| AS-5: 2-ethoxyethyl acetate | 25 g |
| AS-6: butyl acetate | 2 g |
| AS-7: ethyl propionate | 2 g |
| AS-8: acetylacetone | 12 g |

(continued)

| Auxiliary solvent | Solubility of auxiliary solvent in water at 25°C |
|---|---|
| AS-9: ethyl acetoacetate | 12 g |
| AS-10: 2-(2-n-butoxyethoxy)ethyl acetate | 2 g |
| AS-11: cyclohexanone | 15 g |

The amount of the auxiliary solvent to be used in the invention is preferably 1- to 200-fold, more preferably 2- to 100-fold the amount of the dye included in the colored particles.

*<Hydrophobic polymer>*

Herein, the hydrophobic polymer for use in the invention is now described.

The colored particles to be contained in the ink composition of the invention contains at least one hydrophobic dye and at least one hydrophobic polymer.

The structure of the hydrophobic polymer as one of the components composing the colored particles may be selected from a polymer obtained by condensation polymerization or a polymer made from a vinyl monomer.

A homopolymer of an appropriate monomer selected from the monomers shown below may be used as the hydrophobic polymer of the invention or a copolymer of any combination of appropriate monomers may be used.

Furthermore, usable monomer units may not be specifically limited. Any monomer unit polymerizable by general radical polymerization can be used.

The polymer obtained by the condensation polymerization is preferably a polyester polymer, which is for example a resin composed of a polyvalent carboxylic acid and a polyvalent alcohol and produced by polymerizing a monomer or two or more monomers.

Examples of the polyvalent carboxylic acid include, but are not limited to, an aromatic polyvalent carboxylic acid, an aromatic oxycarboxylic acid, an aliphatic dicarboxylic acid, and an alicyclic dicarboxylic acid, including terephthalic acid, isophthalic acid, ortho-phthalic acid, 1,5-naphthalenedicarboxylic acid, 2,6-naphthalenedicarboxylic acid, diphenic acid, sulfoterephthalic acid, 5-sulfoisophthalic acid, 4-sulfophthalic acid, 4-sulfonaphthalene-2,7-dicarboxylic acid, 5-[4-sulfophenoxy]isophthalic acid, sulfoterephthalic acid, p-oxybenzoic acid, p- (hydroxyethoxy) benzoic acid, succinic acid, adipic acid, azelaic acid, sebacic acid, dodecanedicarboxylic acid, fumaric acid, maleic acid, itaconic acid, hexahydrophthalic acid, tetrahydrophthalic acid, trimellitic acid, trimesic acid, and pyrromellitic acid. These may be used in the form of metal salts and ammonium salts and the like.

Examples of the polyvalent alcohol include, but are not limited to, an aliphatic polyvalent alcohol, an alicyclic polyvalent alcohol, and an aromatic polyvalent alcohol, including ethylene glycol, propylene glycol, 1,3-propanediol, 2,3-butanediol, 1,4-butanediol, 1,5-pentanediol, 1,6-hexanediol, neopentyl glycol, diethylene glycol, dipropylene glycol, 2,2,4-trimethyl-1,3-pentanediol, polyethylene glycol, polypropylene glycol, polytetramethylene glycol, trimethylolethane, trimethylolpropane, glycerin, pentaerythritol, 1,4-cyclohexanediol, 1,4-cyclohexanedimethanol, spiroglycol, tricyclodecanediol, tricyclodecanedimethanol, m-xylene glycol, o-xylene glycol, 1,4-phenylene glycol, bisphenol A, lactone polyester, and polyols.

Further, a polyester resin which is produced by polymerization of at least one polyvalent carboxylic acid and at least one polyvalent alcohol and in which the polar groups at the ends of the polymer chains are sealed with a compound capable of sealing their ends can be used.

The polymer obtained from the vinyl monomer may be a homopolymer of an appropriate monomer selected from the monomers shown below or may be a copolymer of any combination of appropriate monomers.

The monomer unit usable is not specifically limited. Any monomer unit polymerizable by general radical polymerization can be used.

Additionally, specific monomer examples are shown below. But the invention is not limited to them.

Examples of the monomers include olefins, $\alpha,\beta$-unsaturated carboxylic acids and salts thereof, $\alpha,\beta$-unsaturated carboxylic acid derivatives, $\alpha,\beta$-unsaturated carboxylic acid amides, styrene and derivatives thereof, vinyl ethers, vinyl esters, and other polymerizable monomers.

Examples of the olefins include ethylene, propylene, isoprene, butadiene, vinyl chloride, vinylidene chloride, 6-hydroxy-1-hexene, cyclopentadiene, 4-pentenic acid, methyl 8-nonate, vinylsulfonic acid, trimethylvinylsilane, trimethoxyvinylsilane, pentadiene, 1,4-divinylcyclohexane, and 1,2,5-trivinylcyclohexane.

Examples of the $\alpha,\beta$-unsaturated carboxylic acids and salts thereof include acrylic acid, methacrylic acid, itaconic acid, maleic acid, sodium acrylate, ammonium methacrylate, and potassium itaconate.

Examples of the $\alpha,\beta$-unsaturated carboxylic acid derivatives include an alkyl acrylate (for example, methyl acrylate, ethyl acrylate, n-butyl acrylate, cyclohexyl acrylate, 2-ethylhexyl acrylate, n-dodecyl acrylate), a substituted

alkyl acrylate (for example, 2-chloroethyl acrylate, benzyl acrylate, 2-cyanoethyl acrylate, allyl acrylate), an alkyl methacrylate (for example, methyl methacrylate, n-butyl methacrylate, 2-ethylhexyl methacrylate, n-dodecyl methacrylate), a substituted alkyl methacrylate [for example, 2-hydroxyethyl methacrylate, glycidyl methacrylate, glycerin monomethacrylate, 2-acetoxyethyl methacrylate, tetrahydrofurfuryl methacrylate, 2-methoxyethyl methacrylate, ω-methoxypolyethylene glycol methacrylate (the molar number of added polyoxyethylene = 2 to 100), polyethylene glycol monomethacrylate (the molar number of added polyoxyethylene = 2 to 100), polypropylene glycol monomethacrylate (the molar number of added polyoxypropylene = 2 to 100), 2-carboxyethyl methacrylate, 3-sulfopropyl methacrylate, 4-oxysulfobutyl methacrylate, 3-trimethoxysilylpropyl methacrylate, allyl methacrylate], an unsaturated dicarboxylic acid derivatives (for example, monobutyl maleate, dimethyl maleate, monomethyl itaconate, dibutyl itaconate), and a polyfunctional esters (for example, ethylene glycol diacrylate, ethylene glycol dimethacrylate, 1,4-cyclohexane diacrylate, pentaerythritol tetramethacrylate, pentaerythritol triacrylate, trimethylolpropane triacrylate, trimethylolethane triacrylate, dipentaerythritol pentamethacrylate, pentaerythritol hexaacrylate, 1,2,4-cyclohexane tetramethacrylate).

Examples of the α,β-unsaturated carboxylic acid amides include acrylamide, methacrylamide, N-methylacrylamide, N,N-dimethylacrylamide, N-methyl-N-hydroxyethylacrylamide, N-tert-butylacrylamide, N-tert-octylmethacrylamide, N-cyclohexylacrylamide, N-phenylacrylamide, N-(2-acetoacetoxyethyl)acrylamide, N-acryloylmorpholine, diacetoneacrylamide, itaconic acid diamide, N-methylmaleimide, 2-acrylamide-2-methylpropanesulfonic acid, methylenebisacrylamide, and dimethacryloylpiperazine.

Examples of the styrene and derivatives thereof include styrene, vinyltoluene, p-tert-butylstyrene, vinylbenzoic acid, methyl vinylbenzoate, α-methylstyrene, p-chloromethylstyrene, vinylnaphthalene, p-hydroxymethylstyrene, sodium p-styrenesulfonate, potassium p-styrenesulfinate, 1,4-divinylbenzene, and 2-acryloylethyl 4-vinylbenzoate.

Examples of the vinyl ethers include methyl vinyl ether, butyl vinyl ether, and methoxyethyl vinyl ether.

Examples of the vinyl esters include vinyl acetate, vinyl propionate, vinyl benzoate, vinyl salicylate and vinyl chloroacetate.

Examples of other polymerizable monomers include N-vinylpyrrolidone, 2-vinyloxazoline, 2-isopropenyloxazoline and divinylsulfone.

The hydrophobic polymer synthesized by copolymerization of a combination of the monomers is preferably a homopolymer or a copolymer of acrylamide, methacrylamide, acrylate ester, methacrylate ester, styrene, vinyl ester, vinyl ether and/or olefin.

Specific examples of the preferable hydrophobic polymer are shown below. The invention is not limited to them. Unless otherwise stated, the numerical figure representing the composition ratio of each monomer means mass percentage.

P-1: poly(N-tert-butylacrylamide)
P-2: poly(cyclohexyl methacrylate)
P-3: poly(n-butyl acrylate)
P-4: poly(methyl methacrylate)
P-5: poly(ethyl methacrylate)
P-6: poly(N-cyclohexylamide)
P-7: poly(N-sec-butylacrylamide)
P-8: poly(N,N-di-n-propylacrylamide)
P-9: N-tert-butylacrylamide/2-hydroxyethyl methacrylate copolymer (80/20)
P-10: methyl acrylate/2-acrylamide-2-methylpropanesulfonic acid copolymer (98/2)
P-11: methyl acrylate/2-acrylamide-2-methylpropanesulfonic acid/2-acetoacetoxyethyl methacrylate terpolymer (91/5/4)
P-12: butyl acrylate/sodium 2-acrylamide-2-methylpropanesulfonate/2-acetoacetoxyethyl methacrylate terpolymer (90/6/4)
P-13: butyl acrylate/styrene/methacrylamide/sodium 2-acrylamide-2-methylpropanesulfonate copolymer (55/29/11/5)
P-14: butyl acrylate/styrene/sodium 2-acrylamide-2-methylpropanesulfonate terpolymer (85/10/5)
P-15: polystyrene
P-16: poly(4-acetoxystyrene)
P-17: styrene/methyl methacrylate/sodium acrylate terpolymer (45/50/5)
P-18: 2-(2'-hydroxy-5'-methacryloxyethylphenyl)-2H-benzotriazole/ethyl acrylate/sodium 2-acrylamide-2-methylpropanesulfonate terpolymer (74/23/3)
P-19: N-tert-butylacrylamide/3-acrylamide-3-methylbutanoic acid copolymer (99/1)
P-20: N-tert-butylacrylamide/methyl acrylate copolymer (50/50)
P-21: methyl methacrylate/methyl acrylate copolymer (50/50)
P-22: N-tert-butylarylamide/sodium 2-acrylamide-2-methylpropanesulfonate copolymer (99/1)

P-23: N-tert-butylacrylamide/n-butyl acrylate copolymer (50/50)
P-24: styrene/butadiene/acrylic acid terpolymer (85/12/3)
P-25: styrene/butadiene copolymer (90/10)
P-26: ethyl acrylate/styrene/butadiene terpolymer (40/50/10)
P-27: styrene/methyl methacrylate copolymer (80/20)
P-28: ethyl acrylate/styrene/sodium 2-acrylamide-2-methylpropanesulfonate terpolymer (55/40/5)
P-29: n-butyl acrylate/styrene copolymer (40/60)
P-30: n-butyl acrylate/t-butyl acrylate/acrylic acid terpolymer (47/50/3)
P-31: 2-ethylhexyl acrylate/styrene copolymer (50/50)
P-32: poly(n-butyl methacrylate)
P-33: n-butyl methacrylate/methacrylic acid copolymer (90/10) P-34: 2-ethylhexyl methacrylate/styrene/2-hydroxyethyl methacrylate/acrylic acid copolymer (40/40/18/2)
P-35: n-dodecyl methacrylate/methyl methacrylate/styrene/sodium styrenesulfonate copolymer (45/25/25/5)
P-36: benzyl methacrylate/methyl acrylate copolymer (80/20)
P-37: styrene/n-butyl acrylate/allyl methacrylate terpolymer (40/30/30)
P-38: 2-ethylhexyl methacrylate/styrene/allyl methacrylate/methacrylic acid copolymer (30/35/30/5)
P-39: vinyl acetate (homopolymer)
P-40: t-butylacrylamide/n-butyl acrylate/2-carboxyethyl acrylate terpolymer (45/45/10)
P-41: methyl acrylate/2-acetoacetoxyethyl methacrylate/acrylic acid terpolymer (80/17/3)
P-42: t-butylacrylamide/n-butyl acrylate copolymer (50/50).

The hydrophobic polymer may be used alone or in combination.

Examples of a polymerization initiator for use in the production of the hydrophobic polymer include azobis compounds, peroxides, hydroperoxides, and redox catalysts, such as inorganic peroxides such as potassium persulfate and ammonium persulfate, organic peroxides such as t-butyl peroctoate, benzoyl peroxide, isopropyl percarbonate, 2,4-dichlorobenzoyl peroxide, methyl ethyl ketone peroxide, cumene hydroperoxide, and dicoumyl peroxide, azo compounds such as 2,2'-azobisisobutylate, sodium salt of 2,2'-azobiscyanovaleric acid, 2,2'-azobis(2-amidinopropane)hydrochloride, 2,2'-azobis[2-(5-methyl-2-imidazolin-2-yl)propane]hydrochloride salt, and 2,2'-azobis{2-methyl-N-[1,1'-bis(hydroxymethyl)-2-hydroxyethyl]propionamide}. Among them, potassium persulfate and ammonium persulfate are more preferable.

Herein, the synthesis of the hydrophobic polymer due to emulsification polymerization is now described.

In the invention, the hydrophobic polymer can be synthesized prepared by emulsification polymerization. Examples of an emulsifier then used include anionic, cationic, amphoteric and nonionic surfactants and water-soluble polymers. Specific examples thereof include sodium laurate, sodium dodecylsulfate, sodium 1-octoxycarbonylmethyl-1-octoxycarbonylmethanesulfonate, sodium laurylnaphthalenesulfonat, sodium laurylbenzenesulfonate, sodium laurylphosphate, cetyltrimethylammonium chloride, N-2-ethylpyridinium chloride, polyoxyethylenenonyl phenyl ether, polyoxyethylenesorbitan lauryl ester, polyvinyl alcohol, and emulsifiers and water-soluble polymers described in JP-B No. 53-6190.

In the synthesis preparation of the hydrophobic polymer by emulsification polymerization, a wide variety of polymerization initiators, concentrations thereof, polymerization temperature and reaction time can be readily selected, depending on the purpose. Furthermore, the emulsification polymerization reaction may be carried out by preliminarily charging the total amounts of a monomer, a surfactant, an aqueous medium in a reaction container and then charging an initiator. If necessary, either one of a monomer or an initiator solution or a part or the whole of both of the two can be dropwise added to a reaction system.

The hydrophobic polymer latex can readily be synthesized, using an ordinary emulsification polymerization method. The ordinary emulsification polymerization method is described in detail in the following textbooks: "Synthetic resin emulsion", edited by Taira Okuda and Hiroshi Inagaki, issued by Polymer Association (Kobunshi Kankokai), 1978; "Application of synthetic latex", edited by Takaaki Sugimura, Yasuo Kataoka, Souichi Suzuki, Keiji Kasahara, issued by Polymer Association (Kobunshi Kankokai), 1993; and "Chemistry of synthetic latex", edited by Soichi Muroi, issued by Polymer Association (Kobunshi Kankokai), 1970.

Additionally, the hydrophobic polymer can be synthesized, by so-called solution polymerization and mass polymerization.

The hydrophobic polymer for use in the preparation of the colored particles is used in an amount of preferably 10 to 500 % by mass, and more preferably 20 to 300 % by mass to the dye contained in the colored particles.

*<Preparation of colored particles and ink composition>*

The colored particles can be obtained by mixing together a solution (sometimes referred to as 'oil phase'

hereinafter) containing at least one hydrophobic dye, at least one hydrophobic polymer, at least one organic solvent with a high boiling point and a water solubility of 4 g or below, and at least one auxiliary solvent with a boiling point of 200˚C or below and a water solubility of 25 g or below, and an aqueous medium (sometimes referred to as 'aqueous phase' hereinafter) for emulsification and dispersion, and subsequently removing the auxiliary solvent. Further, the ink composition of the invention characteristically contains the colored particles.

An additive such as a surfactant, a wetting agent, a dye stabilizer, an emulsion stabilizer, a preservative and a mildew preventing agent can be added, if necessary, to either one or both of the aqueous phase and the oil phase during the emulsification dispersion.

Examples of the surfactant include anionic surfactants such as a fatty acid salt, an alkylsulfate ester, an alkylbenzenesulfonate, an alkylnaphthalenesulfonate, a dialkylsulfosuccinate, an alkylphosphate ester, a naphthalenesulfonate-formalin condensate, and a polyoxyethylenealkylsulfate ester; nonionic surfactants such as a polyoxyethylene alkyl ether, a polyoxyethylene alkylallyl ether, a polyoxyethylene fatty acid ester, an ester of sorbitan and a fatty acid, an ester of polyoxyethylenesorbitan and a fatty acid, polyoxyethylene alkylamine, an ester of glycerin and a fatty acid, and oxyethylene-oxypropylene block copolymer; and an acetylene-based polyoxyethylene oxide surfactant SURFYNOLS (Air Products & Chemicals, Co., Ltd.), an amineoxide type amphoteric surfactant such as N,N-dimethyl-N-alkylamineoxide, the surfactants described in JP-A No. 59-157,636, page 37 to 38 and in Research Disclosure No. 308119 (1989).

For the purpose of stabilization immediately after emulsification, a water-soluble polymer can be added together with these surfactants in the invention.

Example of the water-soluble polymer include polyvinyl alcohol, polyvinyl pyrrolidone, polyethylene oxide, polyacrylic acid, polyacrylamide and copolymers thereof, and naturally occurring water-soluble polymers such as polysaccharides, casein, and gelatin.

In case of the preparation of the ink composition containing the colored particles prepared by the emulsification and dispersion, the size control of the colored particles is particularly important for the purpose of improving the printing properties.

The mean particle size of the colored particles can be readily measured by known methods. For example, the ink composition is diluted with distilled water so that the dye concentration in the ink composition might be 0.1 to 1 % by mass. Then, the mean particle size can be measured by a commercially available volume average particle size meter. The meter is preferably for example Microtruck UPA (manufactured by Nikkiso Co.)

From the viewpoint of printing properties and for the purpose of obtaining sufficient advantages of the invention, the volume average mean particle size of the colored particle contained in the ink composition of the invention is preferably 0. 01 to 0. 5 μm, more preferably 0.01 to 0.3 μm, and particularly preferably 0.01 to 0.2 μm.

Further, the coefficient of variation of the particle size of the colored particles is preferably within 45 %, more preferably within 40 % and particularly preferably within 35 %.

Furthermore, the term "coefficient of variation of particle size" means the coefficient of variation of the particle size of the colored particles immediately after the preparation of the ink composition, which can be determined by the formula: (standard deviation of the distribution of the volume average particle size/volume average particle size).

The specific gravity of the colored particles is preferably 0.90 to 1.10, more preferably 0.93 to 1.08 and particularly preferably 0.95 to 1.05. The colored particles having a specific gravity outside the range can hardly exist stably in water.

The specific gravity of the color particles can be measured for example by the method described in New Experimental Chemistry Lecture Series Vol. 1 (Maruzen Co.), pp. 79 to 82 or an application thereof. In that case, a solid obtained by removing an auxiliary solvent in a solution containing constitutive components of the colored particles from the solution is then used for the measurement of the specific gravity.

The presence of coarse particles plays a very significant role in the printing performance of the ink composition of the invention. In other words, such coarse particles clog head nozzles or form stain causing non-jetting or deformed jetting of the ink composition, which seriously affects the printing performance.

In order to prevent these problems, preferably, the number of particles of 5 μm or more should be suppressed 10 or below while the number of particles of 1 μm or more should be suppressed 1000 or below in 1 μl of ink for ink-jet recording, using the ink composition of the invention.

Known centrifugation methods and precision filtration methods and the like can be used as the method for removing these coarse particles. These separation procedures can be conducted immediately after emulsification and dispersion, or after addition of various additives such a wetting agent and a surfactant to the resulting emulsified dispersion, or immediately before charging of the resulting dispersion in an ink cartridge.

An emulsion dispersion apparatus for mechanical agitation can preferably be used as an effective means for decreasing the mean particle size of the colored particles in the ink composition and eliminating coarse particles.

Known apparatuses such as a simple stirrer, an impeller agitator, an inline agitator, a mill such as a colloid mill, and an ultrasonic type agitator can be used as the emulsion dispersion apparatus. In the invention, high-pressure emulsion dispersion apparatus is preferable. Specifically, high-pressure homogenizer is particularly preferable.

The detailed mechanism of the high-pressure homogenizer is described in USP No. 4533254 and JP-A No. 6-47264. Gaulin homogenizer (A.P.V Gaulin Inc.), Microfluidizer (Microfluidex Inc.), and Ulthimaizer (Sugino Machine Co., Ltd.) are commercially available.

Additionally, the recent high-pressure homogenizer with a mechanism for reducing particle size in ultrahigh pressure jet stream as described in USP No. 5, 720, 551 is particularly effective for the emulsification and dispersion in the invention. Example of the emulsification and dispersion apparatus using such ultrahigh-pressure jet stream include DeBEE 2000 (Bee International Ltd.).

The pressure for the emulsification and dispersion using the high-pressure emulsification and dispersion apparatus is preferably 50 MPa (500 bar) or more, more preferably 60 MPa (600 bar) and still more preferably 180 MPa (1800 bar) or more.

In the invention, use of two or more types of emulsification apparatuses , for example a combination of an agitator and a high-pressure homogenizer are particularly preferable. Further, it is also preferable to emulsify a product with any of these emulsification apparatuses to add an additive such as a wetting agent and a surfactant, and, before charging the resultant ink composition in cartridges, to emulsify again it with a high-pressure homogenizer.

In the emulsification and dispersion, the auxiliary solvent if contained together with the organic solvent with a high boiling point is preferably removed, from the viewpoints of the stability of the emulsion (colored particles) and of safety and hygiene.

Known various methods including evaporation method, vacuum evaporation method and ultrafiltration method can be used depending on the type of the auxiliary solvent as the method for substantially removing the auxiliary solvent. The process of removing the auxiliary solvent is preferably conducted as immediately as possible after emulsification.

The ink composition of the invention can be used in various fields. The ink composition can preferably be used for ink compositions for writing aqueous ink, aqueous printing ink and information recording ink.

If necessary, the ink composition of the invention may contain any of other components such as known additives including a dryness preventing agent, a permeation promoting agent, an ultraviolet absorbent, an anti-oxidant, a mildew preventing agent, a pH adjusting agent, a surface tension adjusting agent, a defoaming agent, a viscosity adjusting agent, a dispersant, a dispersion stabilizer, a rust preventing agent, and a chelating agent.

The dryness preventing agent is preferably used for the purpose of preventing clogging due to the drying up of ink at an ink-jet hole of a nozzle used in ink-jet recording methods.

The dryness preventing agent is preferably a water-soluble organic solvent having a lower vapor pressure than that of water. Specific examples of the dryness preventing agent include polyvalent alcohols such as ethylene glycol, p-ropylene glycol, diethylene glycol, polyethylene glycol, thiodiglycol, dithioglycol, 2-methyl-1,3-propanediol, 1,2,3-hexatriol, acetylene glycol derivatives, glycerin, and trimethylolpropane; lower alkyl ethers of polyvalent alcohols, such as ethylene glycol monomethyl (or ethyl) ether, and triethylene glycol monoethyl (or butyl) ether; heterocyclic rings such as 2-pyrrolidone, N-methyl-2-pyrrolidone, 1,3-dimethyl-2-imidazolidinone, and N-ethylmorpholine; sulfur-containing compounds such as sulfolane, dimethylsulfoxide and 3-sulfolene; polyfunctional compounds such as diacetone alcohol and diethanol amine; and urea derivatives. Among them, polyvalent alcohols such as glycerin diethylene glycol are more preferable.

These compounds may be used alone or in combination. The dryness-preventing agent is preferably contained in an amount of 10 to 50 parts by mass in the ink.

Examples of the permeation promoting agent include alcohols such as ethanol, isopropanol, butanol, diethylene glycol monobutyl ether, triethylene glycol monobutyl ether, and 1,2-hexanediol; sodium laurylsulfate, sodium oleate and the nonionic surfactants listed as the surfactants for the emulsification and dispersion. The permeation promoting agent may be sufficiently effective when added to the ink composition in an amount of 10 to 30 % by mass. It can be added to such an extent that it dose not cause bleeding and print-through.

The ultraviolet absorbent is used for the purpose of improving image storability. Examples thereof include benzotriazole compounds described in JP-A Nos. 58-185677, 61-190537, 2-782, 5-197075, and 9-34057; benzophenone compounds described in JP-A Nos. 46-2784, and 5-194483, and USP No. 3,214,463; cinnamic acid compounds described in JP-B Nos. 48-30492 and 56-21141 and JP-A No. 10-88106; triazine compounds described in JP-A Nos. 4-298503, 8-53427, 8-239368, 10-182621, and 8-501291; compounds described in Research Disclosure No. 24239; and so-called fluorescent whitening agents as compounds absorbing ultraviolet ray to emit fluorescence including stilbene compounds and benzooxazole compounds.

The anti-oxidant is used for the purpose of improving image storability. Examples thereof include various organic fade preventing agents and metal complex fade preventing agents.

Examples of the organic fade preventing agent include hydroquinones, alkoxyphenols, dialkoxyphenols, phenols, anilines, amines, indanes, chromans, alkoxyanilines and hetero rings.

Examples of the metal complex fade-preventing agent include nickel complex and zinc complex. Specifically, the compounds described in the patents cited in Research Disclosure No. 17643, VII-I to -J; No. 15162; No. 18716, p. 650, left column; No. 36544, page 527; No. 307105, page 872; No. 15162 and compounds of the general formulas of

the representative compounds described in JP-A No. 62-215272, pp. 127 to 137 and exemplified compounds thereof can be used.

Examples of the mildew preventing agent include sodium dehydroacetate, sodiumbenzoate, sodium pyridinthion-1-oxide, ethyl p-hydroxybenzoate, and 1,2-benzisothiazolin-3-one and salts thereof. The mildew preventing agent is preferably used in an amount of 0.02 to 1.00 % by mass in the ink.

Examples of the pH adjusting agent include alkali metal hydroxides such as lithium hydroxide and potassium hydroxide, carbonate salts such as sodium carbonate and sodium hydrogen carbonate, inorganic bases such as potassium acetate, sodium silicate and disodium phosphate, and organic bases such as N-methyldiethanolamine and triethanolamine.

Examples of the surface tension adjusting agent include nonionic, cationic or anionic surfactants. For example, the surfactant used for the emulsification and dispersion can be used. However, the surfactant herein used preferably have a solubility of 0.5 % or more in water at 25˚C.

The dispersant and the dispersion stabilizer are preferably cationic, anionic and nonionic surfactants.

Examples of the defoaming agent include fluorine-containing and silicone-containing compounds and chelating agents including EDTA.

Additionally, the pH of the ink composition is preferably 6 to 10, and more preferably 7 to 10 in terms of the improvement of the storage stability.

The surface tension of the ink composition is preferably 20 to 60 mN/m, and more preferably 25 to 45 mN/m.

The viscosity of the ink composition is preferably 30 mPa s or less, and more preferably 20 mPa s or less.

The ink composition of the invention is preferably used for the ink-jet recording method of the invention.

*<Inkjet recording method>*

In the ink-jet recording method of the invention, images are recorded on an ink image-receiving material with an ink composition containing colored particles which contains at least one hydrophobic dye and at least one hydrophobic polymer, namely with the ink composition described above, and forming images on the image-receiving material is conducted by jetting the ink composition and subsequently subjecting the colored particles to a heating process and/or pressurizing process to fuse and fix the colored particles.

Preferably, the hydrophobic dye contains at least one compound selected from the group consisting of the compounds represented by the general formula I, the compounds represented by the general formula II, the compounds represented by the general formula Y-I, the compounds represented by the general formula M-I, and the compounds represented by the general formula C-I.

Preferably, the image-receiving material has at least one porous resin layer containing thermoplastic hydrophobic polymer particles on a support. In a preferable embodiment of the ink-jet recording method of the invention, forming images on the image-receiving material is conducted by jetting the ink composition and subsequently subjecting the colored particles and the porous resin layer to a heating process and/or pressurizing process to fuse and fix the colored particles.

Furthermore, the mean particle size of the thermoplastic hydrophobic polymer particles is preferably larger than the mean particle size of the colored particles. Preferably, the relation between the mean colored particle $d_1$ (μm) of the colored particles and the mean particle size $d_2$ (μm) of the thermoplastic hydrophobic polymer particles is $2 < d_2/d_1 < 100$.

Furthermore, preferably, the thermoplastic hydrophobic polymer particles and the hydrophobic polymer contained in the colored particles have at least one monomer unit in common.

In the ink-jet recording method of the invention, use of the ink composition of the invention is particularly preferable. Specifically, an ink composition is particularly preferably used, which contains colored particles produced by mixing together a solution containing at least one hydrophobic-dye, at least one hydrophobic polymer, at least one organic solvent with a high boiling point and a water solubility of 4 g or below, and at least one auxiliary solvent with a boiling point of 200˚C or below and a water solubility of 25 g or below, and an aqueous medium for emulsification and dispersion, and by subsequently removing the auxiliary solvent, having the mean particle size of 0.01 to 0.5 μm with a coefficient of variation of the particle size being within 45 %, and having the specific gravity of 0.9 to 1.2.

Further, the ink nozzle and the like for use in recording by the ink-jet recording method of the invention is not specifically limited and can appropriately be selected, depending on the purpose.

*<Image-receiving material>*

The image-receiving material includes, but is not limited to, known recording materials, such as plain paper and resin coated paper including ink-jet paper, film, digital picture paper, cloth, glass, metal, porcelain and the like as described for example in JP-A Nos. 8-169172, 8-27693, 2-276670, 7-276789, 9-323475, 62-238783, 10-153989,

10-217473, 10-235995, 10-337947, 10-217597, and 10-337947.

In the invention, recording paper and recording film with an image-receiving layer on a support are preferable. Recording paper and recording film with at least one porous resin layer containing thermoplastic hydrophobic polymer particles on a support are more preferable. An image-receiving material with the porous resin layer disposed on the upper portion of the image-receiving layer (on a side apart from the support) is the most preferable.

The support can be those containing chemical pulp such as LBKP and NBKP, mechanical pulp such as GP, PGW, RMP, TMP, CTMP, CMP and CGP, and waste paper pulp such as DIP, and, if necessary, an additive such as a known pigment, a binder, a sizing agent, a fixing agent, a cationic agent and a wet and dry strength agent and produced with any apparatus such as long net paper machine and circle net paper machine. Furthermore, synthetic paper, plastic film sheet and the like may also be used as the support.

The thickness of the support is about 10 to 250 $\mu$m, while the weight thereof is preferably 10 to 250 g/$m^2$.

The image-receiving layer may be disposed directly on the surface of the support. In addition, a back coat layer is provided on another surface of the support. Further, size press and anchor coat layers of starch or polyvinyl alcohol, may be provided in addition to the imaging layer and the back coat layer.

The support may be subjected to flattening process with a calendar apparatus such as a machine calendar, a TG calendar and a soft calendar.

Among the above-described supports, paper and plastic film in which both surfaces are coated with a polyolefin (for example, polyethylene, polystyrene, polyethylene terephthalate, polybutene and their copolymers) are preferably used. Preferably, a white pigment (for example, titanium oxide, and zinc oxide) or a coloring dye (for example, cobalt blue, ultramarine, neodium oxide) is added to the polyolefin.

The image-receiving layer is disposed on the support and contains a pigment and an aqueous binder. Generally, the image-receiving layer preferably contains a pigment. Ink components are absorbed with the space among these pigment particles.

The pigment is preferably a white pigment. Examples of the white pigment include inorganic pigments such as calcium carbonate, kaolin, talc, clay, diatomaceous earth, synthetic amorphous silica, aluminium silicate, magnesium silicate, calcium silicate, aluminium hydroxide, alumina, lithopone, zeolite, barium sulfate, calcium sulfate, titanium dioxide, zinc sulfide and zinc carbonate, and organic pigments such as styrene pigments, acrylic pigments, urea resins, and melamine resins.

Among these white pigments, the inorganic pigments are preferable. A porous inorganic pigment with micro pores inside the pigment particle is more preferable. Synthetic amorphous silica, alumina, aluminium silicate and calcium carbonate with a large pore area are more preferable. Synthetic amorphous silica and alumina hydrate are particularly preferable.

The synthetic amorphous silica can be either one of silicic anhydride produced by a dry process and a silicic acid hydrate produced by a wet process. Particularly, the silicic acid hydrate is preferably used.

For the production of the image-receiving layer containing the alumina hydrate, the methods described in JP-A Nos. 2-276670 and 6-199034 can be used.

An example thereof is now described. 11 parts by mass (on a solid basis) of polyvinyl alcohol and water are added to 100 parts by mass (on a solid basis) of boemite sol having a 80-micron crystal thickness in the [020] face direction and a secondary coagulation particle diameter of 1.5 to 4 microns and prepared by the hydrolysis glue method of aluminum isoproxide, to prepare a coating solution. Then, the coating solution is applied to a support to form a coating film having a dry film thickness of about 5 to 40 microns. The coating film prepared in such a manner is a transparent porous film of the alumina hydrate having a pore diameter of 50 to 60 millimicrons.

In another example, water is added to 5 parts of "Cataloid AS-3" as a coagulation sol of boemite crystal, as commercially available from Catalysts & Chemicals Industry, Co., Ltd. and one part of polyvinyl alcohol, to prepare a coating solution having a solid content of 10 %. Then, a coating film having a dry film thickness of 5 to 40 microns is formed with the coating solution.

Examples of the aqueous binder include water soluble polymers such as polyvinyl alcohol, silanol-modified polyvinyl alcohol, starch, cationic starch, casein, gelatin, carboxymethyl cellulose, hydroxyethyl cellulose, polyvinylpyrrolidone, polyalkylene oxide, and polyalkylene oxide derivatives, and polymers which can be dispersed in water such as styrene-butadiene latex and acryl emulsion.

These aqueous binders may be used alone or in combination. Among them, polyvinyl alcohol and silanol-modified polyvinyl alcohol are preferable from the viewpoint of adhesion to the pigment and prevention of peeling-off of the image-receiving layer.

The image-receiving layer may contain a mordant, a waterproof agent, an agent enhancing light resistance, a surfactant and other additives, in addition to the pigment and the aqueous binder.

The mordant is preferably immobilized. Therefore, a polymer mordant is preferably used.

Examples of the polymer mordant are described in JP-A Nos. 48-28325, 54-74430, 54-124726, 55-22766, 55-142339; 60-23850, 60-23851, 60-23852, 60-23853, 60-57836, 60-60643, 60-118834, 60-122940, 60-122941,

60-122942, 60-235134, and 1-161236, and USP Nos. 2,484,430, 2,548,564, 3,148,061, 3,309,690, 4,115,124, 4,124,386, 4,193,800, 4,273,853, 4,282,305, and 4,450,224. An image-receiving material containing the polymer mordant described in JP-A No. 1-161236, pp. 212 to 215 is particularly preferable. The polymer mordant described in the gazette when used can provide images of superior image quality and can improve the light resistance of the resulting image.

The waterproof agent is effective for making water-resistant images and is particularly preferably a cationic resin.

Examples of the cationic resin include polyamide polyamine epochlorohydrin, polyethylene imine, polyamine sulfone, dimethyldiallylammonium chloride polymer, and cation polyacrylamide. Among them, polyamide polyamine epichlorohydrin is particularly preferable. The content of such cationic resin is preferably one to 15 % by mass, and particularly preferably 3 to 10 % by mass to the total solid in the image-receiving layer.

Examples of the agent enhancing light resistance include zinc sulfate, zinc oxide, hindered amine anti-oxidants, and benzotriazole ultraviolet absorbents such as benzophenone. Among them, zinc sulfate is particularly preferable.

The surfactant functions as an auxiliary coating agent, a releasability improving agent, a sliding improving agent or an antistatic agent. The surfactant is described in JP-A Nos. 62-173463 and 62-183457.

Organic fluoro compounds may be used in place of the surfactant. The organic fluoro compounds are preferably hydrophobic. Examples thereof include fluorine-containing surfactants, oily fluorine-containing compounds (for example, fluorine oil), and solid fluorine compound resins (for example, tetrafluoroethylene resin). The organic fluoro compounds are described in JP-B No. 57-9053 (columns 8 to 17) and JP-A Nos. 61-20994 and 62-135826.

Examples of the other additives include pigment dispersants, thickeners, defoaming agents, dyes, fluorescent whitening agents, preservatives, pH adjusting agents, matting agents, and film hardeners. Herein, the image-receiving layer may be in a single layer or two or more layers.

The thickness of the image-receiving layer is preferably 10 to 50 μm, and more preferably 20 to 40 μm.

In a more preferable embodiment, the image-receiving material for use in the ink-jet recording method of the invention contains at least one porous resin layer containing thermoplastic hydrophobic polymer particles on a support. In the most preferable embodiment, the porous resin layer is disposed on the upper portion of the image-receiving layer (on the side apart from the support).

The porous resin layer is formed by coating and drying a solution containing the thermoplastic hydrophobic polymer particles, namely thermoplastic latex on the lower layer (for example, image-receiving layer) which has been disposed on the support according to general methods.

The material of the thermoplastic latex contained in the porous resin layer (surface layer) may be any latexes, which can form a transparent film by heating process and/or pressurizing process and examples thereof include latexes of polyvinyl chloride, vinyl chloride-vinyl acetate copolymer, SBR, NBR, polystyrene, polyacrylate ester, polymethacrylic acid, styrene-acrylate ester copolymer, polyurethane, polyester, and polyethylene.

However, the material is not limited to these resins. Additionally, these resins may be modified or copolymerized with another monomer.

Additionally, a latex which is made from the hydrophobic polymer contained in the colored particles is preferably used as a thermoplastic latex.

These thermoplastic latexes may be used alone or in combination.

The lower limit of temperatures at which the thermoplastic latex forms a film is preferably 40˚C to 150˚C, and more preferably 50 to 130˚C.

Herein, the lower limit temperature means the lowest temperature at which the thermoplastic hydrophobic polymer particles can form a uniform film when applied to a support and heated.

The thermoplastic hydrophobic polymer particles preferably have a volume average particle size of 0. 2 to 8 μm, and more preferably 0.5 to 6 μm.

For ink-jet recording, it is very significant for the realization of the effect of the invention that the colored particles in the ink composition are inserted in the pores of the porous resin layer containing the thermoplastic hydrophobic polymer particles in the image-receiving material and are then incorporated in the porous resin layer when they form a film by the subsequent heating process and/or pressurizing process. Therefore, preferably, the mean particle size of the thermoplastic hydrophobic polymer particles is larger than the mean particle size of the colored particles.

Specifically, the relation between the mean colored particle $d_1$ (μm) of the colored particles and the mean particle size $d_2$ (μm) of the thermoplastic hydrophobic polymer particles is preferably $2 < d_2/d_1 < 100$, and more preferably $4 < d_2/d_1 < 50$.

In order to prepare such pores, the distribution of the particle size of the thermoplastic hydrophobic polymer particles is preferably narrow. Specifically, the coefficient of variation of the particle size is preferably within 40 %, more preferably within 30 % and most preferably 20 % or below.

The thermoplastic hydrophobic polymer particles can be prepared by the emulsification polymerization process which is used in the preparation of the polymer contained in the colored particles of the ink composition of the invention.

The thermoplastic hydrophobic polymer particles can also be prepared by dissolving a linear polymer in an

organic solvent such as ethyl acetate and emulsifying and dispersing the resulting solution in water.

Further, the polymer species preferably has compatibility with the hydrophobic polymer used in the ink composition of the invention. From such a viewpoint, the thermoplastic hydrophobic polymer particles and the hydrophobic polymer used in the ink composition have at least one monomer unit in common.

Additionally, the thermoplastic hydrophobic polymer particles may contain a plasticizer, an ultraviolet absorbent, a fade preventing agent and the like, if necessary. Addition of such additives to the thermoplastic hydrophobic polymer particles can be conducted during polymerization or during emulsification and dispersion.

For example, the thickness of the porous resin layer containing the thermoplastic latex is preferably about 1 to 20 μm, and more preferably 3 to 15 μm, in order to obtain the objective function after imaging, recording and film forming.

The image-receiving material may have a back coat layer. For example, a white pigment, an aqueous binder, and other additives can be added to the back coat layer.

Examples of the white pigment to be contained in the back coat layer include white inorganic pigments such as light calcium carbonate, heavy calcium carbonate, kaolin, talc, calcium sulfate, barium sulfate, titanium dioxide, zinc oxide, zinc sulfide, zinc carbonate, satin white, aluminium silicate, diatomaceous earth, calcium silicate, magnesium silicate, synthetic amorphous silica, colloidal silica, colloidal alumina, pseudo-boemite, aluminium hydroxide, alumina, lithopone, zeolite, hydrated halloysite, magnesium carbonate, and magnesium hydroxide; and organic pigments such as styrene plastic pigments, acrylic plastic pigments, polyethylene, microcapsule, urea resin, and melamine resin.

Examples of the aqueous binder to be contained in the back coat layer include water soluble polymers such as styrene/maleate copolymer, styrene/acrylate copolymer, polyvinyl alcohol, silanol-modified polyvinyl alcohol, starch, cationic starch, casein, gelatin, carboxymethyl cellulose, hydroxyethyl cellulose, and polyvinylpyrrolidone; and polymers which can be dispersed in water such as styrene-butadiene latex and acryl emulsion.

Examples of other additives to be contained in the back coat layer include a defoaming agent, a foaming suppressive agent, a dye, a fluorescent whitening agent, a preservative, and a waterproof agent.

The constitutive layer (including the back coat layer) of the image-receiving material may contain a polymer latex.

The polymer latex is used for the purpose of the improvement of film properties, such as dimensional stabilization, curl prevention, adhesion prevention, and film cracking prevention. The polymer latex is described in JP-A Nos. 62-245258, 62-136648 and 62-110066. When a polymer latex with a low glass transition temperature (at 40°C or less) is added to a layer containing a mordant, the cracking or curling of the layer can be prevented. Further when a polymer latex with a high glass transition temperature is added to the back coat layer, the curling of the layer can be prevented.

The ink-jet recording method is not limited and any known methods such as charge control method in which ink is jetted by means of electrostatic withdrawing force, drop-on-demand method using vibration pressure of a piezo element (pressure pulse method), acoustic ink-jet method including modifying an electric signal into an acoustic beam to irradiate ink and using the resulting radiation pressure for ink jetting, and thermal ink-jet method including heating ink to form bubbles and using the resulting pressure can be used.

Additionally, examples of the ink-jet recording method include a method of jetting numerous ink droplets of small volumes wherein the ink has a low concentration and is called a photo ink, a method for improving image quality using plural types of ink having substantially identical color tones and different concentrations, and a method using colorless and transparent ink.

## EXAMPLES

Examples of the invention are now described below. However, the invention is not limited to these examples.

### Example 1

*<Preparation of Sample A-101>*

Sample A-101 as the ink composition of the invention which contains colored particles was prepared as follows.

8g of a hydrophobic dye (M-6) was dissolved in 7 g of an organic solvent with a high boiling point (S-52), 9 g of a hydrophobic polymer (P-17), 1 g of a fade preventing agent (AL-1), 0.5 g of a fade preventing agent (AL-2) and 140 ml of an auxiliary solvent (AS-1) at 70°C. 400 ml of deionized water, and 20 ml of polyoxyethylene lauryl ether sodium sulfate (25 %) were added to the resulting solution while agitating the solution with a magnetic stirrer, to prepare an oil-in-water dispersion with coarse particles.

Then, the dispersion of coarse particles was made to pass through a microfluidizer (Microfluidex Inc.) at a pressure of 60 MPa (600 bar) five times, for micro-particle preparation. Furthermore, ethyl acetate (AS-1) was removed from the resulting emulsified dispersion at a reduced pressure.

140 g of diethylene glycol, 64 g of glycerin, 7 g of Surfynol 465 (Air Products & Chemicals, Co.) and additives such as urea were added to the thus-obtained dispersion containing the colored particles, and 900 ml of deionized water

was added to the resultant mixture and the pH of the mixture was adjusted to 7. The resulting dispersion was filtered through a microfilter of a pore size of 0.45 μm, to thereby prepare a magenta ink shown in Table 1. The volume average particle size of the colored particles in the resulting ink composition was measured with a microtruck UPA (Nikkiso Co.), and was 62 nm. The coefficient of variation of the particle size was 28 %. Furthermore, the specific gravity of the colored particles was 1.06.

The structural formulas of the fade preventing agent (AL-1) and the fade preventing agent (AL-2) used for the preparation of the sample are shown below.

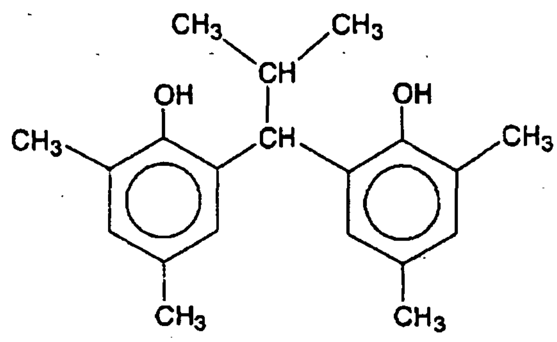

AL-1

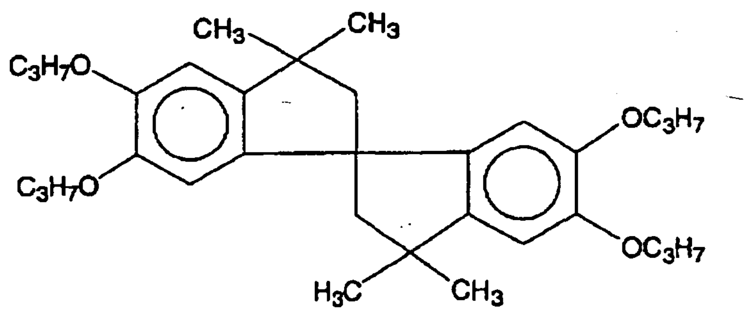

AL-2

Preparation of Samples A-102 to A-114

Ink compositions of Samples 102 to 114 were prepared in the same manner as in Sample 101, except for the modifications described in Table 1. Namely, masses of a dye, a hydrophobic polymer, an organic solvent with a high boiling point, an auxiliary solvent and additives in samples 102 to 114 were the same as those in sample 101. For the Samples 107, 109 and 110, herein, the auxiliary solvents were removed by ultrafiltration.

Furthermore, SPX-1 to -4 (organic solvents with relatively high boiling points for comparison), and ASX-1 to -2 (auxiliary solvents for comparison) in Table 1 mean what are shown below.

SPX-1: $[(n)C_4H_9O]_3$-P=O
SPX-2: $(ClCH_2CHCHO)_3$-P=O
SPX-3: $(ClCH_2CH_2O)_3$-P=O
SPX-4: $[(n)C_5H_{11}O]_3$-P=O
ASX-1: methyl alcohol
ASX-2: ethyl methyl ketone

*<Sample estimation and results>*

The samples 101 to 114 were estimated as follows.

First, the coefficients of the variations of the particle sizes of the colored particles contained in the ink compositions of the invention were within 45 %, both immediately after preparation and over time.

Alternatively, coefficients of variations of the particle sizes contained in ink compositions for comparison outside the scope of the invention were 45 % or more immediately after preparation and over time.

Each of the prepared ink composition samples was put into 4 glass bottles and the bottles were sealed and stored at 0˚C, 20˚C, 40˚C and 60˚C for one month respectively. Subsequently, the change of the particle sizes, the occurrence of precipitates, and the change of fluid physico-chemical properties were measured to estimats the storage stability. The results are shown in Table 1. In the overall estimation of the storage stability, A indicates "excellent", B indicates "good", C indicates "somewhat bad", and D indicates "bad". E represents that a practically acceptable ink could not be prepared because of poor dispersion.

The change of particle size is shown, on the basis of the result under storage at 60˚C.

Table 1

| Ink Composition Sample No. | Hydro-Phobic dye | Hydro-phobic polymer | High-boiling point organic solvent | | | Auxiliary solvent | | Specific gravity of Colored particles | Storage stability | | | | |
|---|---|---|---|---|---|---|---|---|---|---|---|---|---|
| | | | No. | Specific Gravity | Water Solubility (g) | No. | Water solubility (g) | | Mean particle size (nm) | | Change of particle diameter (%) | Overall estimation (precipitate, fluid property, etc.) | |
| | | | | | | | | | #1 | #2 | (d40-d0) /d0 | | |
| | | | | | | | | | d0 | d40 | *100 | | |
| A-101 | M-6 | P-17 | S-52 | 0.91 | 0.21 | AS-1 | 8 | 1.06 | 62 | 63 | 2 | A | Invention |
| A-102 | M-6 | P-17 | SPX-1 | 0.97 | 6.64 | AS-1 | 8 | 1.08 | 74 | 127 | 72 | D | #3 |
| A-103 | M-6 | P-17 | S-52 | 0.91 | 0.21 | ASX-1 | completely miscible with water | 1.06 | -- | -- | -- | E | #3 |
| A-104 | M-6 | P-4 | SPX-2 | 1.51 | 0.9 | AS-1 | 8 | 1.25 | 85 | 117 | 38 | C | #3 |
| A-105 | M-6 | P-4 | SPX-3 | 1.41 | 4.64 | ASX-2 | 35 | 1.23 | -- | -- | - | E | #3 |
| A-106 | M-6 | None | S-52 | 0.91 | 0.21 | AS-1 | 8 | 1.02 | 60 | 96 | 60 | D | #3 |
| A-107 | M-20 | P-4 | S-11 | 0.91 | 1.45 | AS-12 | 2 | 1.08 | 59 | 65 | 10 | B | Invention |
| A-108 | M-63 | P-2 | S-25 | 0.99 | 0.17 | AS-1 | 8 | 1.09 | 70 | 70 | 0 | A | Invention |
| A-109 | C-1 | P-2 | S-52 | 0.91 | 0.21 | AS-2 | 2 | 1.04 | 72 | 73 | 1 | A | Invention |
| A-110 | C-2 | P-24 | S-39 | 0.97 | 0.13 | AS-13 | 15 | 1.04 | 91 | 97 | 7 | B | Invention |
| A-111 | C-1 | P-27 | S-4 | 1.13 | 0.41 | AS-1 | 8 | 1.07 | 84 | 88 | 5 | B | Invention |
| A-112 | C-1 | P-2 | SPX-4 | 0.94 | 4.5 | AS-1 | 8 | 1.05 | 83 | 152 | 83 | D | #3 |
| A-113 | C-1 | P-4 | SPX-5 | 1.62 | 0.18 | AS-1 | 8 | 1.25 | 89 | 110 | 24 | C | #3 |

(continued)

| Ink Composition Sample No. | Hydro-Phobic dye | Hydro-phobic polymer | High-boiling point organic solvent | | | Auxiliary solvent | | Specific gravity of Colored particles | Storage stability | | | | |
|---|---|---|---|---|---|---|---|---|---|---|---|---|---|
| | | | No. | Specific Gravity | Water Solubility (g) | No. | Water solubility (g) | | Mean particle size (nm) | | Change of particle diameter (%) | Overall estimation (precipitate, fluid property, etc.) | |
| | | | | | | | | | #1 | #2 | (d40-d0) /d0 | | |
| | | | | | | | | | d0 | d40 | *100 | | |
| A-114 | Y-1 | P-42 | S-52 | 0.91 | 0.21 | AS-1 | 8 | 1.03 | 62 | 63 | 1 | A | Invention |

#1 immediately after preparation
#2 immediately after storage for 40 days
#3 comparative example

As shown in Table 1, the ink compositions of the invention less caused the increase of the size of the colored particles, the occurrence of precipitates and the change of fluid physico-chemical properties, which cause the deterioration of ink jetting. Thus, it was confirmed that ink compositions with excellent storability could be obtained.

Example 2

*<Preparation of Samples B-101 to B-106>*

The cartridge of an ink-jet printer PM670 (manufactured by EPSON) was charged with each of 10 ink compositions, namely four types of ink compositions A-101, A-108, A-109 and A-114 prepared in the Example 1 and six types of ink compositions B-101 to B-106 of the same composition as that of A-114 except that the hydrophobic dye in A-114 in the Example 1 was changed to hydrophobic dyes shown below in Table 2. Images were recorded on ink- j et paper photo gloss paper EX (manufactured Fuji Film Co., Ltd.) with the ink-jet printer. The half of the printed paper sheets were heated and pressurized by heat rollers to fix the imeges thereon and the remaining were not treated. Then, the ozone-resistant storability and light fastness of all the images were estimated.

*<Sample estimation and results>*

1. Estimation of light fastness

In order to estimate the light fastness, samples were stored under a condition of 16000 lux of a fluorescent light for 3 weeks. The change of the concentration of image portions before and after storage was determined as a residual dye ratio (%).

2. Estimation of ozone resistance

In order to estimate the ozone-resistant storability, samples were stored under conditions of 0.3 ppm of ozone and 25°C for 3 weeks. The change of the concentration of image portions before and after storage was determined as a residual dye ratio (%).

The results of light fastness and ozone-resistant storability are shown in Table 2. Herein, the residual dye ratio (%) is determined by the following formula.

**Residual dye ratio (%) = (concentration after 3 week storage/concentration immediately after printing) × 100**

Table 2

| Sample Name | Ink composition Sample No. | Type of hydrophobic dye | Presence of fixation under heating | Light Fastness | Ozone-resistant Storability | Note |
|---|---|---|---|---|---|---|
| | | | | Residual dye ratio (%) | Residual dye ratio (%) | |
| T-1a | A-101 | M-6 | No | 65 | 42 | #1 |
| T-1b | A-101 | M-6 | Yes | 84 | 68 | Invention |
| T-2a | A-108 | M-63 | No | 70 | 53 | #1 |
| T-2b | A-108 | M-63 | Yes | 91 | 76 | Invention |
| T-3a | A-109 | C-1 | No | 51 | 30 | #1 |
| T-3b | A-109 | C-1 | Yes | 78 | 65 | Invention |
| T-4a | A-114 | Y-102 | No | 65 | 48 | #1 |
| T-4b | A-114 | Y-102 | Yes | 84 | 72 | Invention |

(continued)

| Sample Name | Ink composition Sample No. | Type of hydrophobic dye | Presence of fixation under heating | Light Fastness | Ozone-resistant Storability | Note |
|---|---|---|---|---|---|---|
| | | | | Residual dye ratio (%) | Residual dye ratio (%) | |
| T-5a | B-101 | a-3 | No | 89 | 91 | #1 |
| T-5b | B-101 | a-3 | Yes | 99 | 99 | Invention |
| T-6a | B-102 | a-17 | No | 82 | 92 | #1 |
| T-6b | B-102 | a-17 | Yes | 99 | 98 | Invention |
| T-7a | B-103 | Y-102 | No | 68 | 89 | #1 |
| T-7b | B-103 | Y-102 | Yes | 91 | 97 | Invention |
| T-8a | B-104 | Y-133 | No | 76 | 88 | #1 |
| T-8b | B-104 | Y-133 | Yes | 92 | 95 | Invention |
| T-9a | B-105 | c-105 | No | 96 | 97 | #1 |
| T-9b | B-105 | c-105 | Yes | 99 | 99 | Invention |
| T-10a | B-106 | c-114 | No | 95 | 96 | #1 |
| T-10b | B-106 | c-114 | Yes | 99 | 99 | Invention |
| #1 Comparative example | | | | | | |

As shown in Table 2, images with superior ozone-resistant storability and superior light fastness, namely high image storability could be obtained by heat-fixing images with a pair of heat rollers (heating process and pressurizing process). It was confirmed that superior performances could be obtained from the ink compositions B-101 to B-106, in particular.

Example 3

<Preparation of A-201 to A-205>

32 g a hydrophobic dye (M-17) was dissolved in 20 g of an organic solvent with a high boiling point (S-52), 40 g of a hydrophobic polymer (P-2), 3.2 g of a fade preventing agent (AL-1), 3.2 g of a fade preventing agent (AL-2) and 300 ml of an auxiliary solvent (AS-1) at 70˚C. 2000 ml of deionized water, and 30 g of sodium dioctylsulfosuccinate were added to the resulting solution while agitating the solution with a magnetic stirrer, to prepare an oil-in-water dispersion of coarse particles.

Then, the dispersion of coarse particles was divided in three portions of an equal volume, which were made to pass through a microfluidizer (Microfluidex Inc.) at a pressure of 60 MPa (600 bar) three, four, five and six times, respectively to prepare four types of emulsified dispersions. Further, ethyl acetate (AS-1) was removed from each of the resulting emulsified dispersions under a reduced pressure.

140 g of diethylene glycol, 64 g of glycerin, 7 g of surfynol 465 (Air Products & Chemicals, Co.), 50 g of urea, 8 g of triethanolamine, 0.10 g of benzotriazole, 2.5 g of a preservative, and deionized water were added to each of the thus-obtained dispersions containing the colored particles to adjust the total weight to 1000 g, and the pH of the resultant dispersions was adjusted to 7. The resulting dispersions were filtered through a microfilter of a pore size of 0.45 μm, to thereby prepare four types of magenta ink (a, b, c and d).

Further, additional four types of magenta ink (e, f, g and h) were prepared by the same procedures as described above, except that the volume of the auxiliary solvent (AS-1) was modified from 300 ml to 600 ml. These eight types of ink (a to h) were mixed together and the mixture was made to pass through a microfilter of a pore size of 0.45 μm, to prepare five ink composition samples of A-201, A-202, A-203, A-204 and A-205, with particle sizes and coefficients of variation as shown in Table 2.

*<Sample estimation and results>*

The prepared ink composition samples A-201 to A-205 were put into glass bottles, and the bottles were sealed and stored at 60˚C for one month. Subsequently, the change of the particle sizes of the colored particles was estimated, on the basis of the mean particle size, the coefficient of variation and the number of coarse particles having a diameter of 10 μm or more after storage.

The mean (volume) particle size and the coefficient of variation (C.V.) were measured with a microtruck UPA (Nikkiso Co.). Further, the number of coarse particles was measured, using a particle counter model SV65-C (Pamas Co.). The results are shown in Table 3.

Table 3

| Ink composition Sample No. | *1 | | *2 | | | |
|---|---|---|---|---|---|---|
| | Mean particle size (nm) | C.V. (%) | Mean particle size (nm) | C.V. (%) | Number of coarse particles (relative value) | |
| A-201 | 73 | 29 | 74 | 30 | 1 (standard) | Invention |
| A-202 | 71 | 39 | 75 | 41 | 1.4 | Invention |
| A-203 | 72 | 43 | 76 | 45 | 2.1 | Invention |
| A-204 | 73 | 47 | 81 | 48 | 4.3 | *3 |
| A-205 | 72 | 68 | 93 | 68 | 9.3 | *3 |

*1 Immeadietly after prepartion
*2 Immeadietly after 30-day storage
*3 Comparative example

As shown in the results of Table 3, coefficients of variations of particle sizes of these ink compositions outside the scope of the invention (namely, the ink compositions for comparison) increased because coarse particles which cause ink clogging increased over time. On the other hand, coarse particles never so much increased in the inventive ink composition samples over time.

Example 4

*<Synthesis of thermoplastic hydrophobic polymer particles>*

-Synthesis of thermoplastic hydrophobic polymer particles (Q-1).

Thermoplastic hydrophobic polymer particles (Q-1) with a composition of methyl methacrylate/2-chloroethyl acrylate (mass ratio: 75/25) was synthesized as follows.

300 ml of distilled water, 1 ml of 45 % DowFax 2Al (manufactured by Dow Chemical, Co.), 1.00 g of potassium persulfate, and 0.33 g of sodium metabisulfite were added into a one-liter three-necked reaction flask with an agitator and a reflux cooler.

The three-necked reaction flask was placed in a bath at 60˚C, and the content of a flask containing 100 ml of distilled water, 2 ml of 45 ml DowFax2Al, 75 g of ethyl methacrylate, and 25 g of 2-chloroethyl acrylate was added to the reaction flask over 40 minutes.

The reaction flask was agitated at 80˚C for one hour, followed by addition of 0.25 g of potassium persulfate. The content was agitated at 80˚C for another 90 minutes. The reaction flask was cooled. Using 10 % sodium hydroxide, the pH of the latex was adjusted to 5.5, to prepare a latex having a solid content of 19.1 % [thermoplastic hydrophobic polymer particle (Q-1)].

The polymer particles Q-1 had a Tg of 75˚C, a mean particle size of 0.15 μm and a coefficient of variation of 35 %.

-Synthesis of thermoplastic hydrophobic polymer particles (Q-2) to (Q-6) -

Various latexes with different particle sizes were prepared by modifying the amount of DowFax2Al and the agitation velocity during reaction. Some of these latexes and mixtures there of were used as latexes Q-2 to Q-6 with particles sizes and distributions shown in Table 4. The particle size was measured by a microtruck UPA (manufactured

by Nikkiso Co.).

-Synthesis of thermoplastic hydrophobic polymer particles (Q-7)-

Thermoplastic hydrophobic polymer particles (Q-7) with a composition of methyl methacrylate/butyl acrylate/styrene (mass ratio: 55/15/30) was synthesized as follows.
A flask with a dropping funnel, an agitator, a nitrogen inlet tube, a thermometer and a reflux cooler was charged with 170 ml of ion-exchanged water, 10 ml of Nonipol 200 (polyethylene glycol nonyl phenyl ether emulsifier; manufactured by Sanyo Chemical Industry, Co.), and 1 ml of New pole PE-64 (polyethylene glycol-polypropylene glycol block copolymer emulsifier; manufactured by-Sanyo Chemical Industries, Ltd.), and the content was heated to 45˚C while gently purging nitrogen to the content. A monomer mixture of 247 ml of methyl methacrylate, 68 ml of butyl acrylate and 135 ml of styrene was placed in the dropping funnel. 25 % of the monomer mixture was added to the flask.
15 ml of a 1 % aqueous solution of sodium hydrogen sulfite and 15 ml of a 3 % aqueous solution of ammonium persulfate were added to the flask. 30 minutes later, the remaining monomer mixture, 62 ml of a 1 % aqueous solution of sodium hydrogen sulfite and 62 ml of a 1 % aqueous solution of ammonium persulfate were dropwise added to the flask, respectively.
During the dropwise addition, the internal temperature of the flask was retained at from 50˚C to 54˚C. After termination of the dropwise addition, further, the content of the flask was agitated at the same temperature for 2 hours, to terminate the polymerization and thereby obtain the thermoplastic hydrophobic polymer particles (Q-7).
The polymer particles Q-7 had a Tg of 80 ˚ C, a mean particle size of 0.25 μm and a coefficient of variation of 38 %.

-Synthesis of thermoplastic hydrophobic polymer particles (Q-8) to (Q-12)-

Various latexes with different particle sizes were prepared by modifying the amount of the emulsifier and the agitation velocity during reaction. Some of these latexes and mixtures thereof were used as latexes Q-8 to Q-12 with particles sizes and distributions shown in Table 4. The particle size was measured by a microtruck UPA (manufactured by Nikkiso Co.).

*<Preparation of image-receiving materials K-1 to K-12>*

After the surface of a paper support (100 μm) with both of surfaces laminated with polyethylene was subjected to corona discharge, a gelatin undercoat containing sodium dodecylbenzensulfonate was provided for the treated surface. In order to form a porous inorganic pigment layer as an image-receving layer on the substrate material, a coating dispersion was prepared by the following method.
First, aluminium dodexide was hydrolyzed to prepare an alumina slurry, and water was added to the slurry so that a percentage of an alumina hydrate solid became 7.9%. Then, aqueous 3.9 % nitrate solution was added to slurry for pH adjustment, followed by aging process to obtain a colloidal sol. The colloidal sol was spray-dried at 75˚C, to obtain an alumina hydrate. The alumina hydrate was dispersed in ion-exchanged water to prepare 15 % dispersion.
Subsequently, polyvinyl alcohol (Gohsenol NH18; manufactured by Nippon Synthetic Chemical Industry, Co., Ltd.) was dissolved and dispersed in ion-exchanged water to prepare a 10 % solution. The alumina hydrate and the polyvinyl alcohol solution were mixed together so that a weight ratio of these components became 10:1 and agitated to prepare a coating dispersion. The coating dispersion was die-coated and dried (at a drying temperature of 140˚C) , using a coating machine and a hot air dryer furnace, to form a porous inorganic pigment layer having a thickness of 35 μm (image-receiving layer). Then, the pore diameter of the coated layer was 8 to 18 nm.
In order to subsequently form a porous resin layer, the coating solution of the latex Q-1 was coated with a bar coater and was then dried at 60˚C, to prepare an image-receiving material (recording paper) K-1 with a porous resin layer having a thickness of about 5 μm.
Similarly, image-receiving materials (recording paper) K-2 to K-12 with a resin layer made from the latexes Q-2 to Q-12 were prepared.

<Preparation of Samples A-301 to -312>

Ink compositions A-301 to A-312 containing colored particles with different particle sizes but of the same composition as that of A-201 used in Example 3 were prepared.

*<Image recording and estimation>*

The cartridge of an ink-jet printer PM670C (manufactured by EPSON) were charged with the prepared ink

composition samples A-301 to A-312 and images were recorded on the image-receiving materials K-1 to -12 with the ink-jet printer. After drying, heat fixation with a pair of heat rollers, the following items of the image-receiving materials were estimated. The results are shown in Table 4.

1. Abrasion resistance

After heat fixation, the image-receiving materials were rubbed with an eraser, and the change of the concentration on image portions was visually observed. "A" means good results with no concentration change observed; "B" means little concentration change was observed; "C" means large concentration change; and "D" means substantial elimination of the image portions.

2. Image solidily

The ozone-resistant storability was estimatde by storing samples under conditions of the ozone concentration of 0.3 ppm and 25°C for 7 days. The decrease of the concentration of image portions before and after storage was calculated and used as residual dye ratio (%). The residual dye ratio (%) is calculated by the following formula.

Residual dye ratio (%) = (concentration after samples are left for 7 days/concentration immediately after printing) × 100

Table 4

| Sample No. | Ink composition | | Image-receiving material (recording paper) | | | | Abrasion resistance | Image solidily | Note |
|---|---|---|---|---|---|---|---|---|---|
| | Sample | Mean particle size: d1 (μm) | image-receiving material | Latex | Mean particle size (μm) | | Rank | Residual ratio (%) | |
| | | | | | d2 | d2/d1 | | | |
| 1 | A-301 | 0.03 | K-3 | Q-3 | 0.52 | 17.3 | A | 98 | Invention |
| 2 | A-302 | 0.07 | K-3 | Q-3 | 0.52 | 7.4 | A | 99 | Invention |
| 3 | A-303 | 0.1 | K-3 | 0-3 | 0.52 | 5.2 | A | 97 | Invention |
| 4 | A-304 | 0.21 | K-3 | 0-3 | 0.52 | 2.5 | A | 95 | Invention ex |
| 5 | A-305 | 0.34 | K-3 | Q-3 | 0.52 | 1.5 | B | 83 | Comparative ex |
| 6 | A-306 | 0.45 | K-3 | Q-3 | 0.52 | 1.2 | B | 76 | Comparative ex |
| 7 | A-307 | 0.56 | K-3 | Q-3 | 0.52 | 0.9 | C | 72 | Comparative ex |
| 8 | A-308 | 0.72 | K-3 | Q-3 | 0.52 | 0.7 | D | 40 | Comparative ex |
| 9 | A-302 | 0.07 | K-1 | Q-1 | 0.15 | 2.1 | B | 95 | Invention |
| 10 | A-302 | 0.07 | K-2 | Q-2 | 0.28 | 4 | A | 99 | Invention |
| 11 | A-302 | 0.07 | K-6 | Q-4 | 1.62 | 23 | A | 99 | Invention |
| 12 | A-302 | 0.07 | K-7 | Q-7 | 0.25 | 3.6 | A | 98 | Invention |
| 13 | A-304 | 0.21 | K-4 | Q-4 | 1.62 | 7.7 | A | 97 | Invention |

(continued)

| Sample No. | Ink composition | | Image-receiving material (recording paper) | | | | Abrasion resistance | Image solidily | Note |
|---|---|---|---|---|---|---|---|---|---|
| | Sample | Mean particle size: d1 (μm) | image-receiving material | Latex | Mean particle size (μm) | | Rank | Residual ratio (%) | |
| | | | | | d2 | d2/d1 | | | |
| 14 | A-304 | 0.21 | K-5 | Q-6 | 9.05 | 42.9 | B | 82 | Comparative ex |
| 15 | A-304 | 0.21 | K-1 | Q-1 | 0.15 | 0.7 | C | 65 | Comparative ex |
| 16 | A-303 | 0.34 | K-1 | Q-1 | 0.15 | 0.4 | D | 44 | Comparative ex |
| 17 | A-303 | 0.45 | K-1 | Q-1 | 0.15 | 0.3 | D | 38 | Comparative ex |
| 18 | A-303 | 0.1 | K-8 | Q-8 | 0.72 | 7.2 | A | 98 | Inventive |
| 19 | A-303 | 0.1 | K-9 | Q-9 | 1.85 | 18.5 | A | 99 | Inventive |
| 20 | A-303 | 0.1 | K-10 | 410 | 4.24 | 42.4 | A | 98 | Inventive |
| 21 | A-303 | 0.1 | K-11 | Q-11 | 7.8 | 72 | B | 93 | Inventive |
| 22 | A-303 | 0.1 | K-12 | Q-12 | 10.3 | 103 | B | 77 | Comparative ex |
| 23 | A-302 | 0.07 | K-11 | Q-11 | 7.8 | 111 | B | 79 | Comparative ex |

As apparently shown Table 4, it is verified that images with superior abrasion resistance and stability (ozone-resistant storability) can be obtained by the ink-jet recording method, using the ink composition of the invention.

## Claims

1. An ink composition containing colored particles produced by mixing together a solution containing at least one hydrophobic dye, at least one hydrophobic polymer, at least one organic solvent with a high boiling point of 200˚C or more and a water solubility (at 25˚C) of 4 g or below, and at least one auxiliary solvent with a boiling point of 200˚C or below and a water solubility (at 25˚C) of 25 g or below, and an aqueous medium for emulsification and dispersion, and subsequently removing the auxiliary solvent, **characterized in that** the mean particle size of the colored particles is 0.01 to 0.5 μm with a coefficient of variation of the particle size within 45 %, and the specific gravity thereof is 0.9 to 1.2.

2. The ink composition according to claim 1, **characterized in that** the hydrophobic dye contains at least one compound selected from the group consisting of compounds represented by the following general formula I, compounds represented by the following general formula II, compounds represented by the following general formula Y-I, compounds represented by the following general formula M-I, and compounds represented by the following general formula C-I;

General formula I

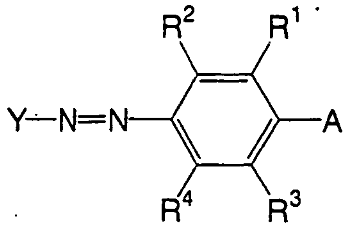

General formula II

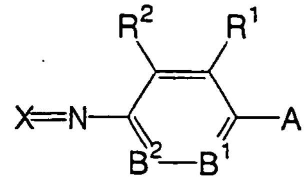

in the general formulas I and II, $R^1$, $R^2$, $R^3$ and $R^4$ independently represent a hydrogen atom, a halogen atom, an aliphatic group, an aromatic group, a heterocyclic group, a cyano group, a hydroxyl group, a nitro group, an amino group, an alkylamino group, an alkoxyl group, an aryloxy group, an amide group, an arylamino group, an ureido group, a sulfamoylamino group, an alkylthio group, an arylthio group, an alkoxycarbonylamino group, a sulfoneamide group, a carbamoyl group, a sulfamoyl group, a sulfonyl group, an alkoxycarbonyl group, a heterocyclic oxy group, an azo group, an acyloxy group, a carbamoyloxy group, a silyloxy group, an aryloxycarbonyl group, an aryloxycarbonylamino group, an imide group, a heterocyclic thio group, a sulfinyl group, a phosphoryl group, an acyl group, a carboxyl group or a sulfo group; A represents $-NR^5R^6$ or a hydroxyl group; $R^5$ and $R^6$ independently represent a hydrogen atom, an aliphatic group, an aromatic group and a heterocyclic group and $R^5$ and $R^6$ may bind together to form a ring; $B^1$ represents $=C(R^3)-$ or $=N-$; $B^2$ represents $-C(R^4)=$ or $-N=$; $R^1$ and $R^5$, $R^3$ and $R^6$ and/or $R^1$ and $R^2$ may bind together to form an aromatic ring or a heterocyclic ring; Y represents an unsaturated heterocyclic group; and X represents the residue of a coupler for color photography;

General formula Y-I: A—N=N—B

in the general formula Y-1, A and B independently represent a substituted or unsubstituted heterocyclic ring;

General formula M-I:

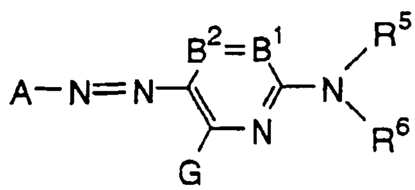

in the general formula M-I, A represents the residue in the 5-membered heterocyclic diazo component $A-NH_2$; $B^1$ represents $=CR^1-$ and $B^2$ represents $-CR^2=$; otherwise, either one of $B^1$ and $B^2$ represents a nitrogen atom, while the remaining one represents $=CR^1-$ or $-CR^2=$; $R^5$ and $R^6$ independently represent a hydrogen atom, an aliphatic group, an aromatic group, a heterocyclic group, an acyl group, an alkoxycarbonyl group, an aryloxycarbonyl group, a carbamoyl group, an alkylsulfonyl group, an arylsulfonyl group or a sulfamoyl group; the individual groups may additionally contain a substituent, satisfactorily; G, $R^1$ and $R^2$ independently represent a hydrogen atom, a halogen atom, an aliphatic group, an aromatic group, a heterocyclic group, a cyano group, a carboxyl group, a carbamoyl group, an alkoxycarbonyl group, an aryloxycarbonyl group, an acyl group, a hydroxyl group, an alkoxyl group, an aryloxy group, a silyloxy group, an acyloxy group, a carbamoyloxy group, a heterocyclic oxy group, an alkoxycarbonyloxy group, an aryloxycarbonyloxy group, an amino group substituted with an alkyl group or an aryl group or a heterocyclic group, an acylamino group, an ureido group, a sulfamoylamino group, an alkoxycarbonylamino group, an aryloxycarbonylamino group, an alkylarylsulfonylamino group, an arylsulfonylamino group, an aryloxycarbonylamino group, a nitro group, an alkylthio group, an arylthio group, an alkylsulfonyl group, an arylsulfonyl group, an alkylsulfinyl group, an arylsulfinyl group, a sulfamoyl group, a sulfo group or a heterocyclic thio group; the individual groups may satisfactorily be further substituted; $R^1$ and $R^5$ or $R^5$ and $R^6$ may bind together to form a 5-membered or 6-membered ring;

General formula C-I:

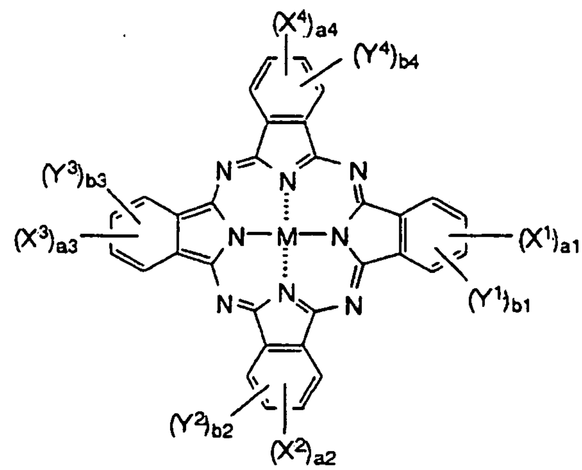

in the general formula C-I, $X^1$, $X^2$, $X^3$ and $X^4$ independently represent $-SO-Z^1$, $-SO_2-Z^1$, or $-SO_2NR^{21}R^{22}$; $Z^1$ represents a substituted or unsubstituted alkyl group, a substituted or unsubstituted cycloalkyl group, a substituted or unsubstituted alkenyl group, a substituted or unsubstituted aralkyl group, a substituted or unsubstituted aryl group, a substituted or unsubstituted heterocyclic group; $R^{21}$ and $R^{22}$ independently represent a hydrogen atom, a substituted or unsubstituted alkyl group, a substituted or unsubstituted cycloalkyl group, a substituted or unsubstituted alkenyl group, a substituted or unsubstituted aralkyl group, a substituted or unsubstituted aryl group, a substituted or unsubstituted heterocyclic group; $Y^1$, $Y^2$, $Y^3$ and $Y^4$ independently represent a hydrogen atom, a halogen atom, an alkyl group, a cycloalkyl group, an alkenyl group, an aralkyl group, an aryl group, a heterocyclic group, a cyano group, a hydroxyl group, a nitro group, an amino group, an alkylamino group, an alkoxyl group, an aryloxy group, an amide group, an arylamino group, an ureido group, a sulfamoylamino group, an alkylthio group, an arylthio group, an alkoxycarbonylamino group, a sulfoneamide group, a carbamoyl group, a sulfamoyl group, a sulfonyl group, an alkoxycarbonyl group, a heterocyclic oxy group, an azo group, an acyloxy group, a carbamoyloxy group, a silyloxy group, an aryloxycarbonyl group, an aryloxycarbonylamino group, an imide group, a heterocyclic thio group, a phosphoryl group, an acyl group, a carboxyl group or a sulfo group; further, these groups may satisfactorily have a substituent; $a^1$ to $a^4$ and $b^1$ to $b^4$ independently represent the numbers of substituents for $X^1$ to $X^4$ and $Y^1$ to $Y^4$, respectively; $a^1$ to $a^4$ independently represent an integer of 0 to 4, while $b^1$ to $b^4$ independently represent an integer of 0 to 4, provided that the total sum of $a^1$ to $a^4$ is 2 or more; when $a^1$ to $a^4$ and $b^1$ to $b^4$ represent an integer of 2 or more, $X^1$s to $X^4$s and $Y^1$s to $Y^4$s may be the same or different; $a^1$ and $b^1$ independently represent an integer of 0 to 4, provided that $a^1 + b^1 = 4$; $a^2$ and $b^2$ independently represent an integer of 0 to 4, provided that $a^2 + b^2 = 4$; $a^3$ and $b^3$ independently represent an integer of 0 to 4, provided that $a^3 + b^3 = 4$; $a^4$ and $b^4$ independently represent an integer of 0 to 4, provided that $a^4 + b^4 = 4$; M represents a hydrogen atom, a metal element or an oxide or hydroxide thereof or a halogenated element.

**3.** An ink-jet recording method comprising:

jetting an ink composition as defined in claim 1 on as image-receiving material to record images; and subjecting the colored particles to a heating process and/or pressurizing process to melt and fix the colored particles.

**4.** The ink-jet recording method according to claim 3, **characterized in that** the hydrophobic dye contains at least one compound selected from the group consisting of compounds represented by the general formula I, compounds represented by the general formula II, compounds represented by the general formula Y-I, compounds represented by the general formula M-I, and compounds represented by the general formula C-I as defined in claim 2.

**5.** The ink-jet recording method according to claim 3 or 4, **characterized in that** the method includes jetting an ink composition containing colored particles which contain at least one hydrophobic dye and at least one hydrophobic

polymer on the image-receiving material, which possesses at least one porous resin layer containing thermoplastic hydrophobic polymer particles on a support to record images and subsequently subjecting the colored particles and the porous resin layer to a heating process and/or a pressurizing process to fuse and fix the colored particles.

**6.** The ink-jet recording method according to claim 5, **characterized in that** the mean particle size of the thermoplastic hydrophobic polymer particles is larger than the mean particle size of the colored particles.

**7.** The ink-jet recording method according to claim 6, **characterized in that** the relation between the mean particle size $d_1$ (μm) of the colored particles and the mean particle size $d_2$ (μm) of the thermoplastic hydrophobic polymer particles is $2 < d_2/d_1 < 100$.

**8.** The ink-jet recording method according to any one of claims 5 to 7, **characterized in that** the thermoplastic hydrophobic polymer particles and the hydrophobic polymer contained in the colored particles have at least one monomer unit in common.

**Patentansprüche**

**1.** Tintenzusammensetzung, enthaltend Farbpartikel, die hergestellt sind durch Zusammenmischen einer Lösung, die mindestens einen hydrophoben Farbstoff, mindestens ein hydrophobes Polymer, mindestens ein organisches Lösungsmittel mit einem hohen Siedepunkt von 200°C oder mehr und einer Wasserlöslichkeit (bei 25°C) von 4 g oder darunter und mindestens ein Hilfslösungsmittel mit einem Siedepunkt von 200°C oder darunter und einer Wasserlöslichkeit (bei 25°C) von 25 g oder darunter enthält, und eines wässrigen Mediums zur Emulgierung und Dispersion und anschließendes Entfernen des Hilfslösungsmittels, **dadurch gekennzeichnet, dass** die mittlere Partikelgröße der Farbpartikel 0,01 bis 0,5 μm mit einem Variationskoeffizienten der Partikelgröße innerhalb von 45% ist und ihre relative Dichte 0,9 bis 1,2 ist.

**2.** Tintenzusammensetzung gemäß Anspruch 1, **dadurch gekennzeichnet, dass** der hydrophobe Farbstoff mindestens eine Verbindung enthält, ausgewählt aus der Gruppe, bestehend aus Verbindungen mit der folgenden allgemeinen Formel I, Verbindungen mit der.folgenden allgemeinen Formel II, Verbindungen mit der folgenden allgemeinen Formel Y-I, Verbindungen mit der folgenden allgemeinen Formel M-I und Verbindungen mit der folgenden allgemeinen Formel C-I;

allgemeine Formel I

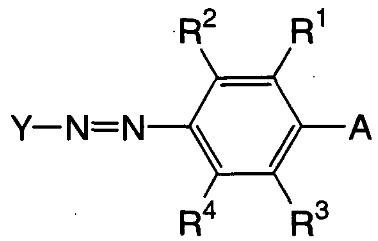

allgemeine Formel II

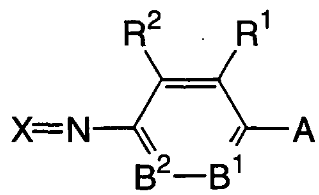

in den allgemeinen Formeln I und II bezeichnen $R^1$, $R^2$, $R^3$ und $R^4$ unabhängig ein Wasserstoffatom, ein Halogenatom, eine aliphatische Gruppe, eine aromatische Gruppe, eine heterozyklische Gruppe, eine Cyangruppe, eine Hydroxylgruppe, eine Nitrogruppe, eine Aminogruppe, eine Alkylaminogruppe, eine Alkoxylgruppe, eine Aryloxygruppe, eine Amidgruppe, eine Arylaminogruppe, eine Ureidogruppe, eine Sulfamoylaminogruppe, eine Alkylthiogruppe, eine Arylthiogruppe, eine Alkoxycarbonylaminogruppe, eine Sulfonamidgruppe, eine Carbamoylgruppe, eine Sulfamoylgruppe, eine Sulfonylgruppe, eine Alkoxycarbonylgruppe, eine heterozyklische Oxygruppe, eine Azogruppe, eine Acyloxygruppe, eine Carbamoyloxygruppe, eine Silyloxygruppe, eine Aryloxycarbonylgruppe, eine Aryloxycarbonylaminogruppe, eine Imidgruppe, eine heterozyklische Thiogruppe, eine Sulfinylgruppe, eine Phosphorylgruppe, eine Acylgruppe, eine Carboxylgruppe oder eine Sulfogruppe; A bedeutet $-NR^5R^6$ oder eine Hydroxylgruppe; $R^5$ und $R^6$ bezeichnen unabhängig ein Wasserstoffatom, eine aliphatische Gruppe, eine aromatische Gruppe und eine heterozyklische Gruppe und $R^5$ und $R^6$ können miteinander unter Bildung eines Rings verbunden sein; $B^1$ bezeichnet $=C(R^3)-$ oder $=N-$; $B^2$ bezeichnet $-C(R^4)=$ oder $-N=$; $R^1$ und $R^5$, $R^3$ und $R^6$ und/oder $R^1$ und $R^2$

können miteinander unter Bildung eines aromatischen Rings oder eines heterozyklischen Rings verbunden sein; Y bezeichnet eine ungesättigte heterozyklische Gruppe; und X bezeichnet den Rest eines Kupplers für die Farbphotographie;

allgemeine Formel Y-I: A-N=N-B

in der allgemeinen Formel Y-I bezeichnen A und B unabhängig einen substituierten oder unsubstituierten heterozyklischen Ring;

allgemeine Formel M-I:

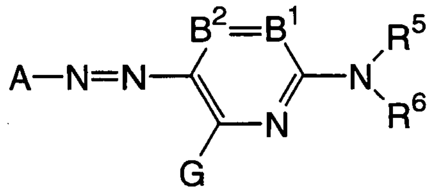

in der allgemeinen Formel M-I bezeichnet A den Rest in der 5-gliedrigen heterozyklischen Diazokomponente A-$NH_2$; $B^1$ bezeichnet $=CR^1-$ und $B^2$ bezeichnet $-CR^2=$; ansonsten bezeichnet eines von $B^1$ und $B^2$ ein Stickstoffatom, während das andere $=CR^1-$ oder $-CR^2=$ bezeichnet; $R^5$ und $R^6$ bezeichnen unabhängig ein Wasserstoffatom, eine aliphatische Gruppe, eine aromatische Gruppe, eine heterozyklische Gruppe, eine Acylgruppe, eine Alkoxycarbonylgruppe, eine Aryloxycarbonylgruppe, eine Carbamoylgruppe, eine Alkylsulfonylgruppe, eine Arylsulfonylgruppe oder eine Sulfamoylgruppe; die einzelnen Gruppen können zusätzlich zufriedenstellend einen Substituenten enthalten; G, $R^1$ und $R^2$ bezeichnen unabhängig ein Wasserstoffatom, ein Halogenatom, eine aliphatische Gruppe, eine aromatische Gruppe, eine heterozyklische Gruppe, eine Cyanogruppe, eine Carboxylgruppe, eine Carbamoylgruppe, eine Alkoxycarbonylgruppe, eine Aryloxycarbonylgruppe, eine Acylgruppe, eine Hydroxylgruppe, eine Alkoxylgruppe, eine Aryloxygruppe, eine Silyloxygruppe, eine Acyloxygruppe, eine Carbamoyloxygruppe, eine heterozyklische Oxygruppe, eine Alkoxycarbonyloxygruppe, eine Aryloxycarbonyloxygruppe, eine Aminogruppe substituiert mit einer Alkylgruppe oder einer Arylgruppe oder einer heterozyklischen Gruppe, eine Acylaminogruppe, eine Ureidogruppe, eine Sulfamoylaminogruppe, eine Alkoxycarbonylaminogruppe, eine Aryloxycarbonylaminogruppe, eine Alkylarylsulfonylaminogruppe, eine Arylsulfonylaminogruppe, eine Aryloxycarbonylaminogruppe, eine Nitrogruppe, eine Alkylthiogruppe, eine Arylthiogruppe, eine Alkylsulfonylgruppe, eine Arylsulfonylgruppe, eine Alkylsulfinylgruppe, eine Arylsulfinylgruppe, eine Sulfamoylgruppe, eine Sulfogruppe oder eine heterozyklische Thiogruppe; die einzelnen Gruppen können zufriedenstellend weiter substituiert sein; $R^1$ und $R^5$ oder $R^5$ und $R^6$ können miteinander unter Bildung eines 5-gliedriegen oder 6-gliedrigen Rings verbunden sein;

allgemeine Formel C-I:

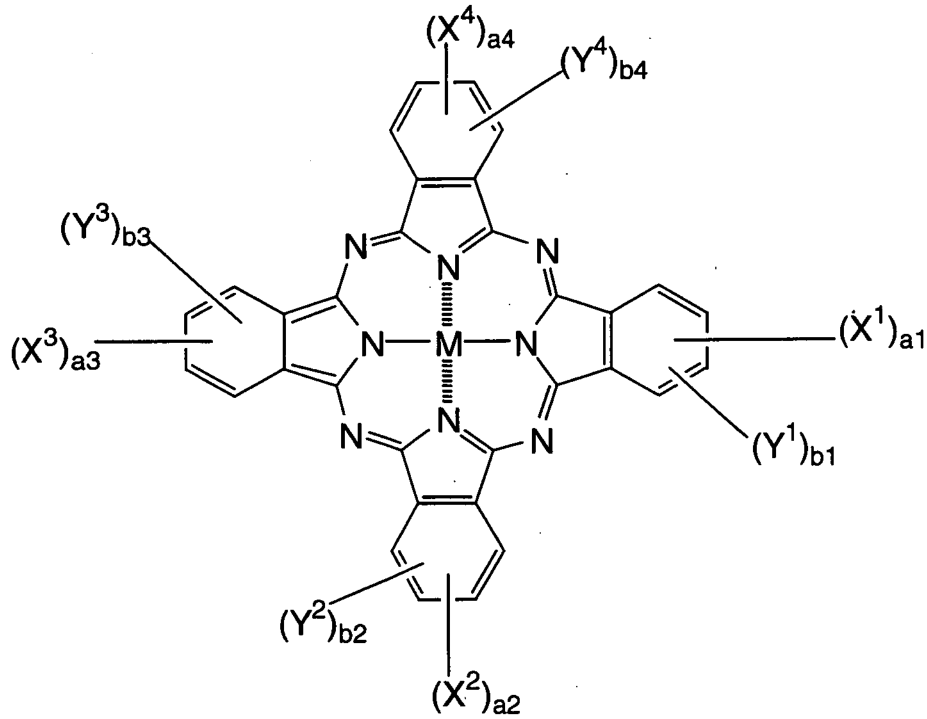

in der allgemeinen Formel C-I bezeichnen $X^1$, $X^2$, $X^3$ und $X^4$ unabhängig $-SO-Z^1$, $-SO_2-Z^1$ oder $-SO_2NR^{21}R^{22}$; $Z^1$ bezeichnet eine substituierte oder unsubstituierte Alkylgruppe, eine substituierte oder unsubstituierte Cycloalkylgruppe, eine substituierte oder unsubstituierte Alkenylgruppe, eine substituierte oder unsubstituierte Aralkylgruppe, eine substituierte oder unsubstituierte Arylgruppe, eine substituierte oder unsubstituierte heterozyklische Gruppe; $R^{21}$ und $R^{22}$ bezeichnen unabhängig ein Wasserstoffatom, eine substituierte oder unsubstituierte Alkylgruppe, eine substituierte oder unsubstituierte Cycloalkylgruppe, eine substituierte oder unsubstituierte Alkenylgruppe, eine substituierte oder unsubstituierte Aralkylgruppe, eine substituierte oder unsubstituierte Arylgruppe, eine substituierte oder unsubstituierte heterozyklische Gruppe; $Y^1$, $Y^2$, $Y^3$ und $Y^4$ bezeichnen unabhängig ein Wasserstoffatom, ein Halogenatom, eine Alkylgruppe, eine Cycloalkylgruppe, eine Alkenylgruppe, eine Aralkylgruppe, eine Arylgruppe, eine heterozyklische Gruppe, eine Cyangruppe, eine Hydroxylgruppe, eine Nitrogruppe, eine Aminogruppe, eine Alkylaminogruppe, eine Alkoxylgruppe, eine Aryloxygruppe, eine Amidgruppe, eine Arylaminogruppe, eine Ureidogruppe, eine Sulfamoylaminogruppe, eine Alkylthiogruppe, eine Arylthiogruppe, eine Alkoxycarbonylaminogruppe, eine Sulfonamidgruppe, eine Carbamoylgruppe, eine Sulfamoylgruppe, eine Sulfonylgruppe, eine Alkoxycarbonylgruppe, eine heterozyklische Oxygruppe, eine Azogruppe, eine Acyloxygruppe, eine Carbamoyloxygruppe, eine Silyloxygruppe, eine Aryloxycarbonylgruppe, eine Aryloxycarbonylaminogruppe, eine Imidgruppe, eine heterozyklische Thiogruppe, eine Phosphorylgruppe, eine Acylgruppe, eine Carboxylgruppe oder eine Sulfogruppe; ferner können diese Gruppen zufriedenstellend einen Substituenten haben; $a^1$ bis $a^4$ und $b^1$ bis $b^4$ bezeichnen unabhängig die Zahl von Substituenten für $X^1$ bis $X^4$ bzw. $Y^1$ bis $Y^4$; $a^1$ bis $a^4$ bezeichnen unabhängig eine ganze Zahl von 0 bis 4, während $b^1$ bis $b^4$ unabhängig eine ganze Zahl von 0 bis 4 bezeichnen, mit der Maßgabe, dass die Gesamtsumme von $a^1$ bis $a^4$ 2 oder mehr ist; wenn $a^1$ bis $a^4$ und $b^1$ bis $b^4$ eine ganze Zahl von 2 oder mehr bezeichnen, können die Gruppen $X^1$ bis $X^4$ und $Y^1$ bis $Y^4$ gleich oder verschieden sein; $a^1$ und $b^1$ bezeichnen unabhängig eine ganze Zahl von 0 bis 4, mit der Maßgabe, dass $a^1 + b^1 = 4$; $a^2$ und $b^2$ bezeichnen unabhängig eine ganze Zahl von 0 bis 4, mit der Maßgabe, dass $a^2 + b^2 = 4$; $a^3$ und $b^3$ bezeichnen unabhängig eine ganze Zahl von 0 bis 4, mit der Maßgabe, dass $a3 + b^3 = 4$; $a^4$ und $b^4$ bezeichnen unabhängig eine ganze Zahl von 0 bis 4, mit der Maßgabe, dass $a^4 + b^4 = 4$; M bezeichnet ein Wasserstoffatom, ein Metallelement oder ein Oxid oder Hydroxid davon oder ein halogeniertes Element.

**3.** Tintenstrahlaufzeichnungsverfahren, umfassend:

Ausstoßen einer Tintenzusammensetzung, wie in Anspruch 1 definiert, auf ein bildaufnehmendes Material, um

Bilder aufzuzeichnen; und
Unterwerfen der Farbpartikel einem Heizverfahren und/oder einem Verfahren, bei dem unter Druck gesetzt wird, um die Farbpartikel zu schmelzen und zu fixieren.

4. Tintenstrahlaufzeichnungsverfahren gemäß Anspruch 3, **dadurch gekennzeichnet, dass** der hydrophobe Farbstoff mindestens eine Verbindung enthält, ausgewählt aus der Gruppe bestehend aus Verbindungen mit der allgemeinen Formel I, Verbindungen mit der allgemeinen Formel II, Verbindungen mit der allgemeinen Formel Y-I, Verbindungen mit der allgemeinen Formel M-I und Verbindungen mit der allgemeinen Formel C-I, wie in Anspruch 2 definiert.

5. Tintenstrahlaufzeichnungsverfahren gemäß Anspruch 3 oder 4, **dadurch gekennzeichnet, dass** das Verfahren das Ausstoßen einer Tintenzusammensetzung, die Farbpartikel enthält, die mindestens einen hydrophoben Farbstoff und mindestens ein hydrophobes Polymer enthalten, auf das bildaufnehmende Material, das mindestens eine poröse Harzschicht besitzt, die thermoplastische hydrophobe Polymerpartikel auf einem Träger enthält, um Bilder aufzuzeichnen, und das anschließende Unterziehen der Farbpartikel und der porösen Harzschicht einem Heizverfahren und/oder einem Verfahren, bei dem unter Druck gesetzt wird, um die Farbpartikel zu schmelzen und zu fixieren, einschließt.

6. Tintenstrahlaufzeichnungsverfahren gemäß Anspruch 5, **dadurch gekennzeichnet, dass** die mittlere Partikelgröße der thermoplastischen hydrophoben Polymerpartikel größer ist als die mittlere Partikelgröße der Farbpartikel.

7. Tintenstrahlaufzeichnungsverfahren gemäß Anspruch 6, **dadurch gekennzeichnet, dass** die Relation zwischen der mittleren Partikelgröße $d_1$ ($\mu$m) der Farbpartikel und der mittleren Partikelgröße $d_2$ ($\mu$m) der thermoplastischen hydrophoben Polymerpartikel $2 < d_2/d_1 < 100$ ist.

8. Tintenstrahlaufzeichnungsverfahren gemäß mindestens einem der Ansprüche 5 bis 7, **dadurch gekennzeichnet, dass** die thermoplastischen hydrophoben Polymerpartikel und das hydrophobe Polymer, das in den Farbpartikeln enthalten ist, mindestens eine Monomereinheit gemeinsam haben.

## Revendications

1. Composition d'encre contenant des particules colorées produites en mélangeant ensemble une solution contenant au moins une teinte hydrophobe, au moins un polymère hydrophobe, au moins un solvant organique ayant un point d'ébullition élevé de 200 °C ou plus et une solubilité dans l'eau (à 25 °C) de 4 g ou moins, et au moins un solvant auxiliaire ayant un point d'ébullition de 200 °C ou moins et une solubilité dans l'eau (à 25 °C) de 25 g ou moins, et un milieu aqueux pour un émulsionnement et une dispersion, et en éliminant ultérieurement le solvant auxiliaire, **caractérisée en ce que** la taille moyenne de particule des particules colorées est de 0,01 à 0,5 $\mu$m avec un coefficient de variation de la taille de particule à moins de 45 %, et la densité de celles-ci est de 0,9 à 1,2.

2. Composition d'encre selon la revendication 1, **caractérisée en ce que** la teinte hydrophobe contient au moins un composé choisi dans le groupe consistant en les composés représentés par la formule générale 1 suivante, les composés représentés par la formule générale II suivante, les composés représentés par la formule générale Y-I suivante, les composés représentés par la formule générale M-I suivante et les composés représentés par la formule générale C-I suivante :

Formule générale I

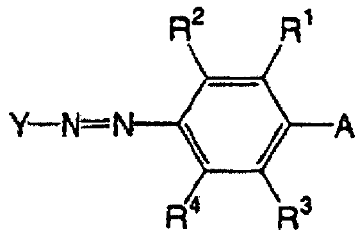

Formule générale II

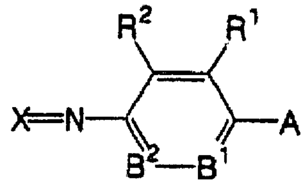

dans les formules générales I et II, $R^1$, $R^2$, $R^3$ et $R^4$ représentent indépendamment un atome d'hydrogène, un atome d'halogène, un groupe aliphatique, un groupe aromatique, un groupe hétérocyclique, un groupe cyano, un groupe hydroxyle, un groupe nitro, un groupe amino, un groupe alkylamino, un groupe alcoxyle, un groupe aryloxy, un groupe amide, un groupe arylamino, un groupe uréido, un groupe sulfamoylamino, un groupe alkylthio, un groupe arylthio, un groupe alcoxycarbonylamino, un groupe sulfoneamide, un groupe carbamoyle, un groupe sulfamoyle, un groupe sulfonyle, un groupe alcoxycarbonyle, un groupe oxy hétérocyclique, un groupe azo, un groupe acyloxy, un groupe carbamoyloxy, un groupe silyloxy, un groupe aryloxycarbonyle, un groupe aryloxycarbonylamino, un groupe imide, un groupe thio hétérocyclique, un groupe sulfinyle, un groupe phosphoryle, un groupe acyle, un groupe carboxyle ou un groupe sulfo ; A représente $-NR^5R^6$ ou un groupe hydroxyle ; $R^5$ et $R^6$ représentent indépendamment un atome d'hydrogène, un groupe aliphatique, un groupe aromatique et un groupe hétérocyclique et $R^5$ et $R^6$ peuvent se lier ensemble pour former un cycle ; $B^1$ représente $=C(R^3)-$ ou $=N-$ ; $B^2$ représente $-C(R^4)=$ ou $-N=$ ; $R^1$ et $R^5$, $R^3$ et $R^6$ et/ou $R^1$ et $R^2$ peuvent se lier ensemble pour former un cycle aromatique ou un cycle hétérocyclique ; Y représente un groupe hétérocyclique insaturé ; et X représente le résidu d'un coupleur pour photographie couleur ;

Formule générale Y-I : A-N=N-B

dans la formule générale Y-I, A et B représentent indépendamment un cycle hétérocyclique substitué ou non substitué ;

Formule générale M-I :

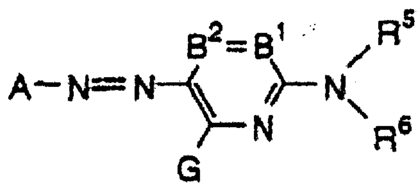

dans la formule générale M-I, A représente le résidu dans le composant diazo hétérocyclique à 5 chaînons $A-NH_2$; $B^1$ représente $=CR^1-$ et $B^2$ représente $-CR^2=$; sinon, l'un ou l'autre de $B^1$ et $B^2$ représente un atome d'azote, alors que le restant représente $=CR^1-$ ou $-CR^2=$; $R^5$ et $R^6$ représentent indépendamment un atome d'hydrogène, un groupe aliphatique, un groupe aromatique, un groupe hétérocyclique, un groupe acyle, un groupe alcoxycarbonyle, un groupe aryloxycarbonyle, un groupe carbamoyle, un groupe alkylsulfonyle, un groupe arylsulfonyle ou un groupe sulfamoyle ; les groupes individuels peuvent contenir en outre un substituant, de manière satisfaisante ; G, $R^1$ et $R^2$ représentent indépendamment un atome d'hydrogène, un atome d'halogène, un groupe aliphatique, un groupe aromatique, un groupe hétérocyclique, un groupe cyano, un groupe carboxyle, un groupe carbamoyle, un groupe alcoxycarbonyle, un groupe aryloxycarbonyle, un groupe acyle, un groupe hydroxyle, un groupe alcoxyle, un groupe aryloxy, un groupe silyloxy, un groupe acyloxy, un groupe carbamoyloxy, un groupe oxy hétérocyclique, un groupe alcoxycarbonyloxy, un groupe aryloxycarbonyloxy, un groupe amino substitué avec un groupe alkyle ou un groupe aryle ou un groupe hétérocyclique, un groupe acylamino, un groupe uréido, un groupe sulfamoylamino, un groupe

alcoxycarbonylamino, un groupe aryloxycarbonylamino, un groupe alkylarylsulfonylamino, un groupe arylsulfonylamino, un groupe aryloxycarbonylamino, un groupe nitro, un groupe alkylthio, un groupe arylthio, un groupe alkylsulfonyle, un groupe arylsulfonyle, un groupe alkylsulfinyle, un groupe arylsulfinyle, un groupe sulfamoyle, un groupe sulfo ou un groupe thio hétérocyclique ; les groupes individuels peuvent de manière satisfaisante être en outre substitués ; $R^1$ et $R^5$ ou $R^5$ et $R^6$ peuvent être liés ensemble pour former un cycle à 5 chaînons ou 6 chaînons ;

Formule générale C-I :

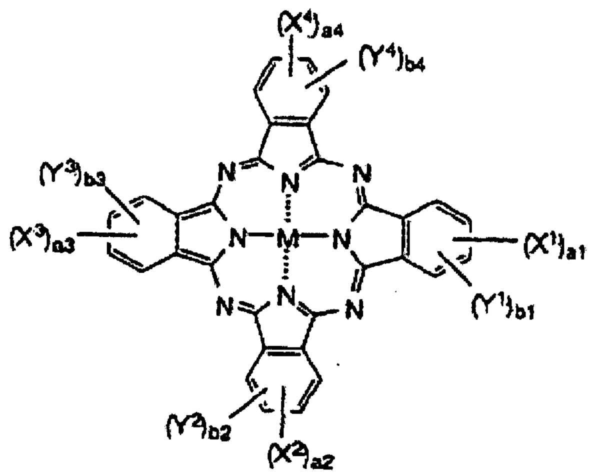

dans la formule générale C-I, $X^1$, $X^2$, $X^3$ et $X^4$ représentent indépendamment $-SO-Z^1$,$-SO_2-Z^1$ ou $-SO_2NR^{21}R^{22}$; $Z^1$ représente un groupe alkyle substitué ou non substitué, un groupe cycloalkyle substitué ou non substitué, un groupe alcényle substitué ou non substitué, un groupe aralkyle substitué ou non substitué, un groupe aryle substitué ou non substitué, un groupe hétérocyclique substitué ou non substitué ; $R^{21}$ et $R^{22}$ représentent indépendamment un atome d'hydrogène, un groupe alkyle substitué ou non substitué, un groupe cycloalkyle substitué ou non substitué, un groupe alcényle substitué ou non substitué, un groupe aralkyle substitué ou non substitué, un groupe aryle substitué ou non substitué, un groupe hétérocyclique substitué ou non substitué ; $Y^1$, $Y^2$, $Y^3$ et $Y^4$ représentent indépendamment un atome d'hydrogène, un atome d'halogène, un groupe alkyle, un groupe cycloalkyle, un groupe alcényle, un groupe aralkyle, un groupe aryle, un groupe hétérocyclique, un groupe cyano, un groupe hydroxyle, un groupe nitro, un groupe amino, un groupe alkylamino, un groupe alcoxyle, un groupe aryloxy, un groupe amide, un groupe arylamino, un groupe uréido, un groupe sulfamoylamino, un groupe alkylthio, un groupe arylthio, un groupe alcoxycarbonylamino, un groupe sulfoneamide, un groupe carbamoyle, un groupe sulfamoyle, un groupe sulfonyle, un groupe alcoxycarbonyle, un groupe oxy hétérocyclique, un groupe azo, un groupe acyloxy, un groupe carbamoyloxy, un groupe silyloxy, un groupe aryloxycarbonyle, un groupe aryloxycarbonylamino, un groupe imide, un groupe thio hétérocyclique, un groupe phosphoryle, un groupe acyle, un groupe carboxyle ou un groupe sulfo ; en outre, de plus, ces groupes peuvent comporter de manière satisfaisante un substituant ; $a^1$ à $a^4$ et $b^1$ à $b^4$ représentent indépendamment les nombres des substituants pour $X^1$ à $X^4$ et $Y^1$ à $Y^4$, respectivement ; $a^1$ à $a^4$ représentent indépendamment un nombre entier de 0 à 4, alors que $b^1$ à $b^4$ représentent indépendamment un nombre entier de 0 à 4, à condition que la somme totale de $a^1$ à $a^4$ soit de 2 ou plus ; lorsque $a^1$ à $a^4$ et $b^1$ à $b^4$ représentent un nombre entier de 2 ou plus, les $X^1$ à $X^4$ et $Y^1$ à $Y^4$ peuvent être identiques ou différents ; $a^1$ et $b^1$ représentent indépendamment un nombre entier de 0 à 4, à condition que $a^1 + b^1 = 4$ ; $a^2$ et $b^2$ représentent indépendamment un nombre entier de 0 à 4, à condition que $a^2 + b^2 = 4$ ; $a^3$ et $b^3$ représentent indépendamment un nombre entier de 0 à 4, à condition que $a^3 + b^3 = 4$ ; $a^4$ et $b^4$ représentent indépendamment un nombre entier de 0 à 4, à condition que $a^4 + b^4 = 4$ ; M représente un atome d'hydrogène, un élément de métal ou un oxyde ou hydroxyde de celui-ci ou un élément halogéné.

**3.** Procédé d'enregistrement par jet d'encre comprenant les étapes consistant à :

éjecter une composition d'encre telle que définie dans la revendication 1 sur un matériau récepteur d'image pour enregistrer des images ; et

soumettre les particules colorées à un processus de chauffage et/ou un processus de mise sous pression pour faire fondre et fixer les particules colorées.

**4.** Procédé d'enregistrement par jet d'encre selon la revendication 3, **caractérisé en ce que** la teinte hydrophobe contient au moins un composé choisi dans le groupe consistant en les composés représentés par la formule générale I, les composés représentés par la formule générale II, les composés représentés par la formule générale Y-I, les composés représentés par la formule générale M-I et les composés représentés par la formule générale C-I tels que définis dans la revendication 2.

**5.** Procédé d'enregistrement par jet d'encre selon la revendication 3 ou 4, **caractérisé en ce que** le procédé comprend les étapes consistant à éjecter une composition d'encre contenant des particules colorées qui contiennent au moins une teinte hydrophobe et au moins un polymère hydrophobe sur le matériau récepteur d'image, qui possède au moins une couche de résine poreuse contenant des particules de polymère hydrophobe thermoplastique sur un support pour enregistrer des images et soumettre ultérieurement les particules colorées et la couche de résine poreuse à un processus de chauffage et/ou un processus de mise sous pression pour faire fondre et fixer les particules colorées.

**6.** Procédé d'enregistrement par jet d'encre selon la revendication 5, **caractérisé en ce que** la taille moyenne de particule des particules de polymère hydrophobe thermoplastique est plus grande que la taille moyenne de particule des particules colorées.

**7.** Procédé d'enregistrement par jet d'encre selon la revendication 6, **caractérisé en ce que** la relation entre la taille moyenne de particule $d_1$ ($\mu m$) des particules colorées et la taille moyenne de particule $d_2$ ($\mu m$) des particules de polymère hydrophobe thermoplastique est $2 < d_2/d_1 < 100$.

**8.** Procédé d'enregistrement par jet d'encre selon l'une quelconque des revendications 5 à 7, **caractérisé en ce que** les particules de polymère hydrophobe thermoplastique et le polymère hydrophobe contenu dans les particules colorées ont au moins un motif monomère en commun.